# EUROPEAN PATENT APPLICATION

(11) **EP 4 664 433 A2**
(43) Date of publication of application: **17.12.2025**
(21) Application number: 25207422.4
(22) Date of filing: 24.07.2018
(51) Int. Cl.: G08G 1/00

(54) **AN INTERACTIVE REAL TIME SYSTEM AND REAL TIME METHOD OF USE THEREOF IN CONVEYANCE INDUSTRY SEGMENTS**

(30) Priority: 01.08.2017 US 201762539706 P; 13.08.2017 US 201715675757; 18.08.2017 US 201715680439; 18.07.2018 US 201816038487
(62) Divisional of application: 18841111.0
(71) Applicant: Dacosta, Alexis, San Diego, CA 92127 (US)
(72) Inventor: DACOSTA, Alexis, San Diego, CA 92127 (US); Coletti, Vince, San Diego, 92130 (US)
(74) Representative: Schaumburg und Partner Patentanwälte mbB

(57) **Abstract**

The present invention recognizes that there is a long felt need for more efficient platforms, networks, systems, and methods in the conveyance industry for goods and services. A first aspect of the present invention generally relates to a system in the conveyance and other industries. A second aspect of the present invention generally relates to a method of use of the interactive system of the present invention.

## Description

### TECHNICAL FIELD

The present invention relates generally to the fields of networks, platforms, systems, and methods of use in the conveyance industry segments.

### BACKGROUND

As in many new industries, there are inefficiencies in existing support systems and methods due to the lack of experience in optimizing these systems for the needs of the new industry. These inefficiencies are typically identified over time through trial and error, eventually leading to technological advancement in the field. This generalization holds true for the conveyance industry, which includes a large number of new industry segments such as ride-hail, rideshare, good delivery, courier, and on-demand delivery services. The current inefficient systems and methods available in the conveyance industry segments lead to disadvantages for the companies or entities themselves, hereinafter referred to as service providers, as well as representatives carrying out the services for the service providers. Also, currently there are difficulties and challenges to efficiently utilize, dispatch, and/or provide or perform conveyance services using autonomous vehicles ("AVs") for both service providers and AV owners/controllers.

The problems relating to the current systems and methods used in the conveyance industry segments are rooted in computer technology and tied to the fact that the modern conveyance industry segments operate and change drastically in substantially real time. Conveyance industry segments are real time or near real time environments in that conveyance service requests ("CSRs") are available one second and gone the next second. In the substantially real time conveyance industry segments, a representative cannot procure all or most of the substantially real time information and analyze or evaluate this information accurately to make a well-informed decision on the fly. There is currently no substantially real time system nor method that can assist a representative with this type of analysis. This lack of a substantially real time system nor method leads to a representative securing or obtaining a suboptimal, one-size-fits-all conveyance service request ("CSR") due to the inability to apply their own preferences.

Currently, a representative obtaining a ride service request in the ride-hail industry segment, can have very different ride options, prices, wait times, and times to destination depending on which service provider a given CSR is from and when the CSR is secured or obtained. However, a representative is only given one CSR from only one service provider to accept or decline. Currently, there is a poor system and method to dispatch or assign representatives to CSRs. Thus, there exists a need that the present invention addresses.

The current systems and methods for a representative to analyze incoming CSRs are very difficult and time consuming in the fast-paced environment of conveyance industry segments. The current technology does not permit a representative to analyze or evaluate and then accept CSRs that the representative would prefer based on their individual preferences. Representatives are currently given a single CSR and only have the option of accepting or declining that specific CSR, without an alternative. Generally, any details of a CSR a representative is securing or obtaining are not provided ahead of time, but are only revealed after that CSR is secured or obtained. A representative must choose to either secure or obtain a CSR without knowing any of the details of the conveyance service to be provided or choose not to work at all.

Furthermore, a representative will often be penalized for canceling a CSR that they may not wish to fulfill, even when the representative would ordinarily not have accepted the request in the first place had they been given a choice. This disadvantage, among others, has led to the common practice of representatives working for more than one service provider at the same time to allow some semblance of choice. However, that method of analyzing is a very laborious and time consuming process which is not useful or practical in the substantially real time environment of conveyance industry segments. To analyze or evaluate CSRs, a representative would need to login to multiple applications from different service providers and navigate between these applications, viewing one individual CSR per application. Analyzing or evaluating CSRs in such a way takes a lot of time and can cause a representative to miss CSRs that the representative would consider as preferred due to the substantially real time environment. Currently there is no system or method that a representative can use as a tool to analyze CSRs in substantially real time.

A representative is currently not able to analyze CSRs from more than one service provider in substantially real time given conventional systems and methods, which is a frustrating hindrance when every other aspect of conveyance industry segments operates in substantially real time. With no way to analyze CSRs continuously in real time or near real time, a representative currently is not able to maximize their profit or work as efficiently as they would like, as the representative is forced to secure or obtain less preferred conveyance service requests ("pCSRs"). To secure or obtain a preferred conveyance service request "(pCSR"), a representative may have to wait and pass up less pCSRs for a more pCSR to become available to them, as representatives are only provided one CSR at a time. A representative wishing to work more efficiently is not able to do so given the current limitations of the systems and methods in the conveyance industry segments.

There is also currently no system or method to evaluate and secure CSRs in substantially real time across more than one conveyance industry segment. The absence of this capability further limits a representative's exposure in the conveyance industry and their ability to operate more efficiently if the representative wants to provide conveyance services in more than one conveyance industry segment. In addition, current limitations also reduce the amount of potential pCSRs available to a representative. Currently, if a representative wants to provide a ride in the ride-hail industry segment, then deliver food in the good delivery industry segment to take advantage of overlaps in locations or routes, the representative does not have the ability to evaluate and secure these pCSRs. If there were a system and method for a representative to be able to do so, the representative would have access to a greater number of diverse CSRs and gives the representative more flexibility in providing conveyance services within the conveyance industry. One aspect of the present invention solves this problem for representatives. Analyzing multiple CSRs to be performed sequentially creates a situation known as the travelling salesman problem or dynamic travelling salesman problem. The present invention further solves the problem of analyzing or evaluating is compounded even further when new or additional CSRs to be secured or obtained become available in real time or near real time.

There is currently no system, method, or product that can analyze or evaluate CSRs continuously in substantially real time and preferably secure or obtain a subsequent or additional pCSR while a representative performs a conveyance service. In addition, there is no technology available to automatically analyze or evaluate and then secure or obtain more than one pCSR concurrently for a representative. In addition, existing technology cannot automatically analyze or evaluate and then secure or obtain a pCSR or an additional or subsequent pCSR in substantially real time. A representative's decision-making ability is limited given the current state of the art. Currently, only one CSR, not even a pCSR, can be secured or obtained at a time. After completion of a conveyance service, only then can a representative manually secure or obtain a new CSR.

The current systems and methods of securing or obtaining a CSR in a conveyance industry segment can also be unsafe for a representative, conveyance client, and people around them. A representative that provides one conveyance service after another often tries to perform their faux analysis or just accept the next CSR while still driving to operate more efficiently. Currently, the only way this type of analysis can be done is by opening different applications in hopes to find the next available CSR. As a result, representatives take their eyes off the road and their surroundings, greatly increasing the probability of getting into an accident. In some states, it is illegal to operate a mobile device while driving. Existing technology is lacking in its ability to perform this type of analysis for a representative in substantially real time and then secure or obtain a pCSR for them. The present invention would allow a representative to be more focused on providing the conveyance service at hand as the representative would not need to be distracted with their mobile device to find their next pCSR. Currently, representatives are assigned or provided with one CSR at a time that can either be blindly accepted, without knowing any details, or rejected. This process is not a useful way of presenting CSRs to representatives.

Currently, some service providers dynamically increase prices in certain areas for various reasons. Representatives looking to work more efficiently or earn more money try to work in these areas as much as possible, however, by the time a representative gets to the area with elevated pricing, the increased pricing may have moved or been removed. Representatives experience the challenge of chasing the elevated pricing areas but often cannot capitalize on them. This problem could be addressed by providing a tool to allow representatives to predict where the areas of elevated pricing will be in order to maximize their earning potential.

Many problems described herein associated with representatives can also be related to autonomous vehicles (AVs) and AV owner/controllers. Service providers are also disadvantaged due to inefficient systems and methods currently used in conveyance industry segments. The biggest problem among service providers currently is the lack of representatives to provide conveyance services. Representatives, as mentioned, switch between different service providers at will. As a result, service providers do not have a stable supply of representatives to provide conveyance services. With AVs becoming more common, service providers think they have found the solution to this problem by using AVs to supplement the lack of representatives. If service providers supplement the lack of representatives with AVs, other issues such as the vehicle routing problem and vehicle dispatch problem become prevalent. Existing technology is lacking in its ability to evaluate and then secure a pCSR for an AV. There is currently no system, method, or product that can automatically evaluate CSRs continuously in real time or near real time and preferably secure a subsequent or additional pCSR while an AV performs a conveyance service. The decision-making ability of an AV owner/controller or a service provider is limited given the current state of the art.

Currently, service providers outsource labor through representatives, however many issues have arisen. Disputes over wages, medical coverage, vacation pay, insurance, profit sharing, taxi permits, vehicle qualifications, vehicle maintenance, and corporate culture have all arisen and have been causing a lot of chaos. Service providers can use AVs to address some of these challenges and increase profits, however an efficient system and method to incorporate or utilize AVs into the conveyance industry segments is needed.

When AVs are more common, an owner of an AV could enlist their vehicle to operate in at least one conveyance industry segment when not in use by the owner. Rather than having an AV sitting in a parking garage for eight hours while the owner is at work, the AV could be used to generate income in at least one conveyance industry segment for the owner during that time as well as supplement the lack of available representatives for a service provider.

Another problem faced by an AV owner/controller is how to enroll or employ an AV into a system that will facilitate performing or providing conveyance services. Furthermore, currently an AV cannot operate in multiple conveyance industry segments. In addition, AVs cannot be employed by or contracted with multiple service providers to facilitate conveyance services.

### SUMMARY

The present invention recognizes that there is a long felt need for more efficient systems and methods in the conveyance industry for goods and services.

A first aspect of the present invention generally relates to an interactive system in the conveyance and other industries.

A second aspect of the present invention generally relates to a method of use of the interactive system of the present invention.

### BRIEF DESCRIPTION OF THE FIGURES

**FIG. 1** is a high-level schematic of a conveyance system according to one embodiment of the present invention.
**FIG. 2** is a high-level diagram of a conveyance system according to one embodiment of the present invention.
**FIG. 3** is a flow diagram of steps according to one embodiment of a conveyance system according to one embodiment of the present invention.
**FIG. 4** is a high-level schematic of a conveyance platform according to one embodiment for use with Autonomous Vehicles (AVs).
**FIG. 5** is a high-level diagram of a conveyance platform according to one embodiment for use with Autonomous Vehicles (AVs).
**FIG. 6** is a flow diagram of steps according to one embodiment of a conveyance platform employing Autonomous Vehicles (AVs).
**FIG. 7** is a flow diagram of steps for the filtering and identifying process according to one embodiment of the present invention.
**FIG. 8** is a sample display of a visual representation according to one embodiment of a conveyance platform employing AVs.
**FIG. 9** is a flow diagram of steps for the filtering and identifying process according to one embodiment of present invention employing AVs.
**FIG. 10** is a diagram showing a conveyance platform according to one embodiment of the present invention.
**FIG. 11** is a flow diagram of a sample filtering and identifying process according to one embodiment of the present invention.
**FIG. 12** is a schematic showing a sample integration of hardware and software according to one embodiment of the present invention.

### DETAILED DESCRIPTION OF THE INVENTION

DEFINITIONS: Unless defined otherwise, all technical and scientific terms used herein have the same meaning as commonly understood by one of ordinary skill in the art to which this invention belongs. Generally, the nomenclature used herein and the procedures described below are well-known and commonly employed in the art. Conventional methods are used for these procedures, such as those provided in the art and various general references. Where a term is provided in the singular, the inventors also contemplate the plural of that term, and where a term is provided in the plural, the inventors also contemplate the singular of that term.. The nomenclature used herein and the procedures described below are those well-known and commonly employed in the art, unless otherwise indicated. Other technical terms used herein have their ordinary meaning in the art that they are used, as exemplified by a variety of technical dictionaries.
INTRODUCTION: The present invention recognizes that there is a long felt need for more efficient systems and methods in the conveyance industry for goods and services and includes several general and useful aspects, including:
   1. a system in the conveyance and other industries;
   2. a method of use of the interactive system of the present invention.

### GENERAL DESCRIPTION AND PROBLEMS BEING SOLVED

In one embodiment, a Representative Automated Platform ("RAP") comprises a technology based solution, automated in whole or in part, that employs a system and method to assist a representative in evaluating and/or securing a preferred conveyance service request ("pCSR"). The inventive RAP can analyze or evaluate a conveyance service request ("CSR") continuously in order to identify and then secure or obtain a pCSR based on at least one representative preference and preferably substantially real time geographical location of a representative. After securing or obtaining a first pCSR, a representative can perform a conveyance service and the inventive RAP, can automatically and continuously repeat a process of analyzing or evaluating and then securing or obtaining a subsequent or additional pCSR until a process is stopped by a representative and a representative performs a final conveyance service.

In another embodiment, an Autonomous Vehicle Automated Platform ("AVAP"), is a technology-based solution that can be automated in whole or in part, operating in substantially real time or near real time to assist an AV to analyze or evaluate and secure one or more pCSR. The inventive AVAP continuously analyzes or evaluates one or more CSRs in substantially real time in order to identify and secure pCSRs based on a selected preference and the geographical location of an AVs. After securing a first pCSR, an AV can perform a conveyance service and the AVAP can automatically and continuously repeat the process of analyzing or evaluating to secure an additional pCSR until the process is stopped by an AV owner/controller or until an AV performs the final conveyance service.

One benefit of the present invention can be improved efficiency in analyzing or evaluating a CSR continuously in real time or near real time to identify and then secure or obtain a pCSR and preferably at least one subsequent or additional pCSR. The present invention can be updated in substantially real time with an incoming CSR to be continuously analyzed or evaluated and can then secure a subsequent or additional pCSR while a representative or an AV performs a conveyance service. As a result, users can operate more efficiently and can potentially perform an additional conveyance service to increase earning potential. Furthermore, the AVAP improves earning potential for the users by taking advantage of the availability of an extra seat within an AV. A benefit of the present invention can solve a problem relating to a traveling salesman problem, a dynamic traveling salesman problem, a vehicle routing problem, or a vehicle dispatch problem. Both the inventive RAP and the inventive AVAP can solve a problem by identifying, securing a subsequent or additional pCSR, and performing a conveyance service more efficiently by continuously analyzing or evaluating a CSR in substantially real time. This improved efficiency can allow the users to perform an additional conveyance service based on a representative preference, a selected preference, and a substantially real time geographical location of a representative or an AV. Furthermore, this improved efficiency can allow the users to strategically place or dispatch an AV.

One benefit of the present invention, when automated in part, can enhance efficiency. The present invention can perform a process to identify a pCSR relating to a representative preference or a selected preference and the users can simply accept or decline. In this example, a pop-up or notification of a pCSR can be displayed on an application or an owner/controller application for the users to accept or decline. If declined, a next pCSR can be displayed until a pCSR is accepted, declined, or the user turns off the RAP or AVAP. The ability of the present invention to continuously analyze or evaluate in substantially real time and display a pCSR, allows the users to work more efficiently and improve a user interaction compared to the current state of the art.

The present invention enhances the decision-making process for the users by continuously analyzing or evaluating CSRs in substantially real time. The present invention can continuously analyze or evaluate CSRs in substantially real time whereas current practices are typically limited to presenting only the next available service request within the sequence, and usually only when a representative or an AV is close to completing the service relating to the previously-accepted CSR. Both of the inventive approaches can enhance usability or interaction with the variety of aforementioned users as it is a valuable tool amongst users.

Such limitations impact a users decision-making ability and do not allow the users to apply preferences, reducing the opportunity to secure a most pCSR available at that time. Both of the inventive approaches can identify a pCSR that the users might otherwise miss under the current practices. The present invention can secure a subsequent or additional pCSR while a representative or an AV is performing a conveyance service. Due to the current state of the art, users can potentially miss securing or obtaining at least one subsequent or additional pCSR because the users are limited on how and when a CSR can be secured or obtained, let alone even analyzed or evaluated. Instead of having a representative multi-task while performing a conveyance service and searching for a next CSR, which can often lead to securing or obtaining a suboptimal CSR, the inventive RAP can take care of analyzing or evaluating and then securing or obtaining a pCSR for a representative. The present invention can update or notify the users while performing a conveyance service about a direction, a route, a conveyance client, a CSR, a pCSR, a beginning service geographical location, an ending service geographical location, or a combination thereof, which can improve an interaction or usability for the users to perform a conveyance service. With the present invention, by using continuous and improved substantially real time analysis or evaluation instead of a one-time analysis or evaluation, a decision-making process can be improved, and a pCSR can be secured or obtained.

The RAP also provides safety benefits. The less attention a representative has to pay to a mobile device and the more focused they are on performing a conveyance service, the safer it is for the representative, the conveyance client, and others in the vicinity or area. The inventive RAP can use a preferred system and a preferred method to automatically search, filter, analyze or evaluate, and then secure a pCSR based on a representative preference and geographical location of the representative while allowing the representative to focus solely on the conveyance service, providing higher levels of safety for the conveyance client and others.

Currently, there is a shortage of representatives in the conveyance industry segments. The inventive AVAP can assist the variety of aforementioned users in supplementing a shortage of representatives, which can increase profitability for the variety of aforementioned users, decrease waiting times for a conveyance client, and help fulfill additional CSRs. The AVAP facilitates provision of improved quality of service for a conveyance client. Currently, there are problems with quality of service relating to a representative. The present invention can both improve and mitigate challenges associated with quality of service within the conveyance industry.

The present invention improves the process of managing or controlling a representative or an AV, a fleet of representatives and/or AVs for the variety of aforementioned users. Both the RAP and AVAP can manage or control a representative or an AV from a single vehicle perspective, a fleet perspective, an independent third-party perspective, or a combination thereof. The present invention can benefit the users by optimizing vehicle utilization. The present invention can integrate or implement software, hardware, logistics, or a combination thereof, for or with the users. The present invention can integrate or implement software, hardware, logistics, or a combination thereof, for or with the variety of aforementioned users to facilitate a conveyance service between amongst all conveyance service users. The users can employ or utilize the RAP and/or AVAP to optimize vehicle utilization, which can result in more affordable services and can improve consumer sentiment among conveyance clients. The present invention can benefit the variety of aforementioned users by allowing a third party to control or operate an AV or representative to perform a conveyance service. Conversely, the present invention can benefit a third party by having a fleet manager, a service provider, a good supplier, an AV owner/controller, a logistics provider, or a logistics supplier control or operate an AV or representative to perform a conveyance service. The inventive approaches provide the users greater control or flexibility when analyzing or evaluating and then securing a pCSR. The users can set a parameter, a representative preference, or a selected preference, on how and where the users wants to work or dispatch an AV, thus providing more control or flexibility.

The present invention can utilize quantum computing, machine learning technology, or a combination thereof, can be incorporated to further improve analysis or evaluation for the variety of aforementioned users. The present invention allows a larger number of CSRs available to be analyzed or evaluated by performing analysis for the users.

Additional benefits of the present invention include an ability of a representative or an AV to concurrently operate for or contract with multiple different service providers, good suppliers, fleet managers, dispatchers, logistics providers, logistics suppliers, or combinations thereof. Currently, the users do not have an ability to enable a representative or an AV to operate in more than conveyance industry segment at the same time. The present invention allows a representative or an AV to operate initially in a conveyance industry segment, then perform a conveyance service in a different conveyance industry segment, and then go back to operate in a first conveyance industry segment. The present invention seamlessly allows a representative or an AV to transfer across conveyance industry segments based on a representative preference or a selected preference. The present invention adds value to the conveyance industry as a whole, providing the ability to operate more efficiently, handle more capacity, and prosper for future growth of the industry. As a result, conveyance clients benefit through shorter wait times, higher quality of a conveyance services, more price transparency, or a combination thereof.

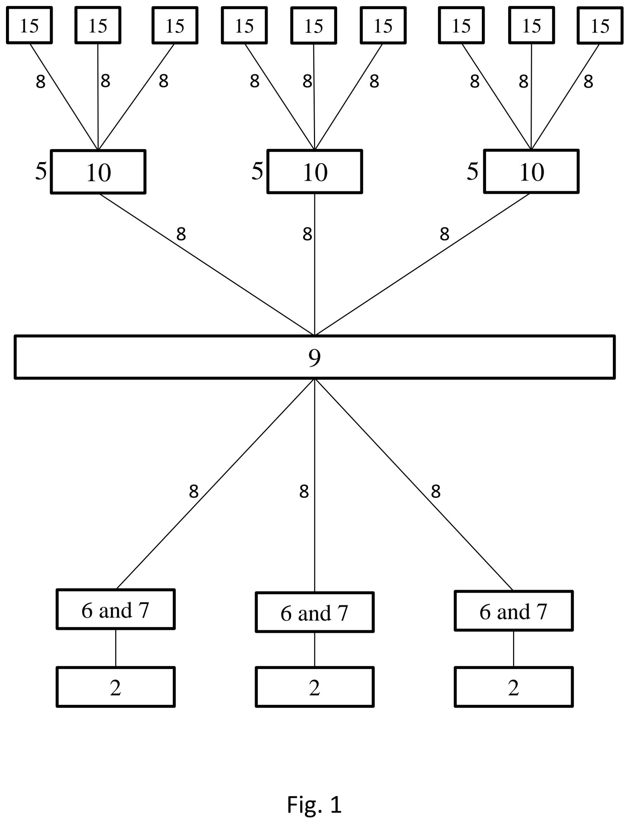

This following general description of some but not all elements, aspects, and embodiments of the present inventions relate to an inventive system, network, platform, and method for securing conveyance services. The various elements are illustrated, particularly as set forth in the figures, examples, and the description thereof. Not all of these elements need be used in the present invention, other elements can be included or some elements removed, and inventions without any of these elements can be part of the present invention. The following are elements shown in **FIGs. 1-12****.** Additional details about the different embodiments are provided in the examples in the description that follows.

A conveyance client **1** can be but is not limited to a person, a robot, a machine, or a combination thereof, that can receive a conveyance service. A conveyance client **1** does not necessarily have to be a consumer of a service.

A representative **2** can be but is not limited to a person, a robot, a machine, or a combination thereof, that can analyze and then secure a preferred conveyance service request ("pCSR") **17.** A representative **2** can provide or perform a conveyance service of a person, a good, a thing, an article, an item, a conveyance client **1,** or a combination thereof. A representative **2** can input or provide a representative preference **18** used to identify a pCSR **17.** A representative **2** can provide or perform a conveyance service relating to a service provider **5** operating in a conveyance industry segment. A representative **2** can accept or decline a pCSR **17.** A representative **2** can perform all or some of a conveyance service in conjunction with an AV **3.**

An AV **3** can be for example a self-governing machine, a self-maneuvering machine, or a self-driving machine that can be used to provide or perform a conveyance service of a person, a good, an article, a thing, an item, a conveyance client **1,** or a combination thereof. An AV **3** can perform or provide a conveyance service relating to a service provider **5** operating in a conveyance industry segment. An AV **3** can include hardware and/or software alone or in a combination. An AV **3** can be identified as a preferred AV **3.**

An AV owner/controller **4** can be but is not limited to an entity, a business, a person, a robot, a machine, or a combination thereof, that can own or control an AV **3.** An AV owner/controller **4** can input or provide a selected preference **19** used to identify a pCSR **17.** An AV owner/controller **4** can accept or decline a pCSR **17.** An AV owner/controller **4** can be a service provider **5,** a fleet manager, a logistics provider, a logistics supplier, or a combination thereof.

A service provider **5** can be for example an entity or a business that can retain or contract with a representative **2,** an AV **3,** a good supplier, or a combination thereof. A service provider **5** can facilitate a conveyance service between a representative **2,** an AV **3,** a good supplier, a conveyance client **1,** An AV owner/controller **4,** or a combination thereof. A service provider **5** can operate in at least one conveyance industry segment. A service provider **5** can be an AV owner/controller **4,** a good supplier, a fleet manager, a logistics provider, a logistics supplier, or a combination thereof.

An application **6** can be but is not limited to software accessible through a terminal **7.** An application **6** can be associated with an AV **3.** An application 6 can be a software that can for example facilitate an operation or a function to secure a pCSR **17,** an AV **3** that can be identified as a preferred AV **3,** or a combination thereof. An application **6** can be for example used to analyze, evaluate, secure, obtain, accept, or decline a pCSR **17.** An application **6** can display a pCSR **17.** A representative **2** can input or provide a representative preference **18** into an application **6.** An application **6** can display for example a visual representation **12.**

A terminal **7** can be but is not limited to an electronic computing device. A terminal **7** can be associated with an AV **3.** A terminal **7** can include but is not limited to a computer processor, a computer readable memory, an input source, a geographical location module, a display, a network interface, or a combination thereof. A terminal **7** can be capable of communicating by way of a link **8.** A terminal **7** can be used to access an application **6.** A terminal **7** can encompass hardware and/or software alone or in a combination. A terminal **7** can be associated with an AV **3.**

A link **8** can be but is not limited to a connection or an association with a software function, a software operation, a software component, a software module, or a combination thereof. A link **8** can be but is not limited to an electronic communication network channel. A link **8** can be a combination of connections between a central server **9,** an external server **10,** a terminal **7,** an application **6,** an AV **3,** an owner/controller application **11,** or a combination thereof. A link **8** can encompass hardware and/or software alone or in a combination.

A central server **9** can be a software and/or a hardware that can for example facilitate an operation or a function to secure a pCSR **17,** an AV **3** that can be identified as a preferred AV **3,** or a combination thereof, for a representative **2** or an AV **3.** A central server **9** can include but is not limited to a computer processor, a computer readable memory, a network interface, or a combination thereof. A central server **9** can connect to or communicate with an external server **10,** an application **6,** a terminal **7,** an owner/controller application **11,** an AV **3,** or a combination thereof, by way of a link **8.** A central server **9** can include or connect to a database. A central server **9** can include hardware and/or software alone or in a combination.

An external server **10,** can be but is not limited to a source of a conveyance service request ("CSR") **15** in conjunction with corresponding conveyance data, all or some of conveyance data relating to an AV **3** ("AV-related data"), or a combination thereof. An external server **10** can include but is not limited to a computer processor, a computer readable memory, a network interface, or a combination thereof. An external server **10** can connect to or communicate with a central server **9,** an application **6,** a terminal **7,** an owner/controller application **11,** an AV **3,** or a combination thereof, by way of a link **8.** An external server **10** can include or connect to a database. An external server **10** can encompass hardware and/or software alone or in a combination.

An owner/controller application **11** can be for example software appropriate for communicating with a central server **9,** an external server **10,** an AV **3,** an application **6,** or a combination thereof, by way of a link **8.** An owner/controller application **11** can be a software that can facilitate an operation or a function to secure a pCSR **17,** an AV **3** that can be identified as a preferred AV **3,** or a combination thereof. An owner/controller application **11** can be used by an AV owner/controller **4** to input or provide a selected preference **19** that can be used to identify a pCSR **17.** An owner/controller application **11** can be used to analyze, evaluate, secure, obtain, accept, or decline a pCSR **17.** An owner/controller application **11** can display a pCSR **17** to be accepted or declined, as well as, displaying a secured or obtained pCSR **17.**

A visual representation **12** can be a tool used to analyze or evaluate a CSR **15** or a CSR metric on, for example, a geographical map to secure a pCSR **17.** A visual representation **12** can be displayed in or on an AV **3.** A visual representation **12** can be viewed from a perspective, a point of reference, a point of interest, or a combination thereof. A visual representation **12** can include a dynamic map, a heat map, or a combination thereof.

A RAP **13,** automated in whole or in part, can for example continuously or repeatedly analyze or evaluate a CSR **15** in substantially real time relating to a representative preference **18** and a substantially real time geographical location of a representative **2** to secure a pCSR **17** for a representative **2.** A RAP **13** can secure a subsequent or additional pCSR **17** after a first pCSR **17** is secured or obtained, while a substantially real time geographical location of a representative **2** updates or changes. A RAP **13** can secure a pCSR **17** relating to a service provider **5** operating in at least one conveyance industry segment.

An AVAP **14,** automated in whole or in part, can for example continuously or repeatedly analyze or evaluate a CSR **15,** all or some of conveyance data relating to AV **3** ("AV-related data"), or a combination thereof, in substantially real time relating to a selected preference **19** and a substantially real time geographical location of an AV **3** to secure a pCSR **17** for or with an AV **3,** an AV **3** that can be identified as preferred AV **3,** or a combination thereof. An AVAP **14** can secure a subsequent or additional pCSR **17** after a first pCSR **17** is secured or obtained, while a substantially real time geographical location of an AV **3** updates or changes. An AVAP **14** can secure a pCSR **17** relating to a service provider **5** operating in a conveyance industry segment.

A conveyance service request ("CSR") **15** can be for example a request for transportation of a person, a good, an article, a thing, an item, a conveyance client **1,** or a combination thereof, from a geographical location to another geographical location. A CSR **15** can be but is not limited to a request from a conveyance client **1.** A CSR **15** can be sourced or provided from an external server **10.** A CSR **15** can be sourced or provided by a service provider **5.** A CSR **15** can be updated in substantially real time.

A filtered conveyance service request ("fCSR") **16** can be a CSR **15** that can be filtered by using a representative preference **18,** a substantially real time geographical location of a representative **2,** or a combination thereof. A fCSR **16** can be but is not limited to a CSR **15** that can be filtered by using a selected preference **19,** a substantially real time geographical location of an AV **3,** or a combination thereof. A fCSR **16** can be updated in substantially real time.

A preferred conveyance service request ("pCSR") **17** can be a fCSR **16** that can be identified as preferred by a representative **2,** an AV **3,** an AV owner/controller **4,** a central server **9,** an application **6,** an owner/controller application **11,** or a combination thereof. A pCSR **17** can be identified as preferred by using a representative preference **18** or a selected preference **19.** A pCSR **17** can be updated in substantially real time.

A representative preference **18** can be but is not limited to an option selected or provided by a representative **2** that can be used to filter a CSR **15** and identify a pCSR **17.** A representative preference **18** can be stored or cached on a central server **9,** an external server **10,** an application **6,** or a combination thereof. A representative preference **18** can be inclusive or exclusive for filtering a CSR **15.**

A selected preference **19** can be a rule or a parameter that can for example be used to facilitate an operation or a function to secure a pCSR **17,** an AV **3** that can be identified as preferred, or a combination thereof. A selected preference **19** can be but is not limited to an option selected or provided by An AV owner/controller **4** that can be used to filter a CSR **15** and identify a pCSR **17.** A selected preference **19** can be stored or cached on a central server **9,** an external server **10,** an application **6,** an owner/controller application **11,** or a combination thereof. A selected preference **19** can be inclusive or exclusive for filtering of a CSR **15,** all or some of conveyance data relating to an AV **3** ("AV-related data"), or a combination thereof.

### EXAMPLE 1: Representative Automated Platform (RAP)

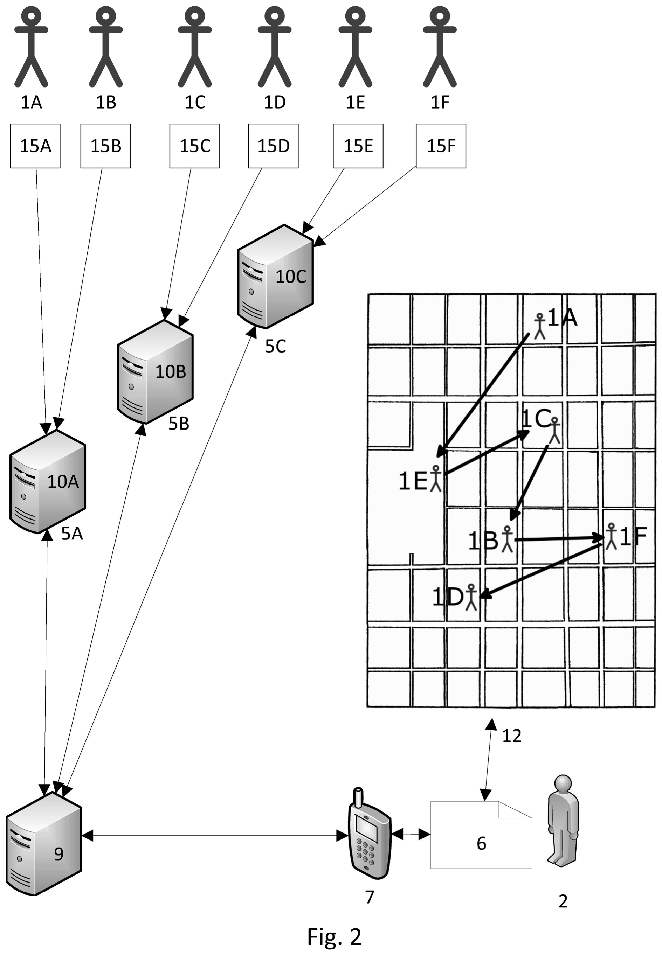

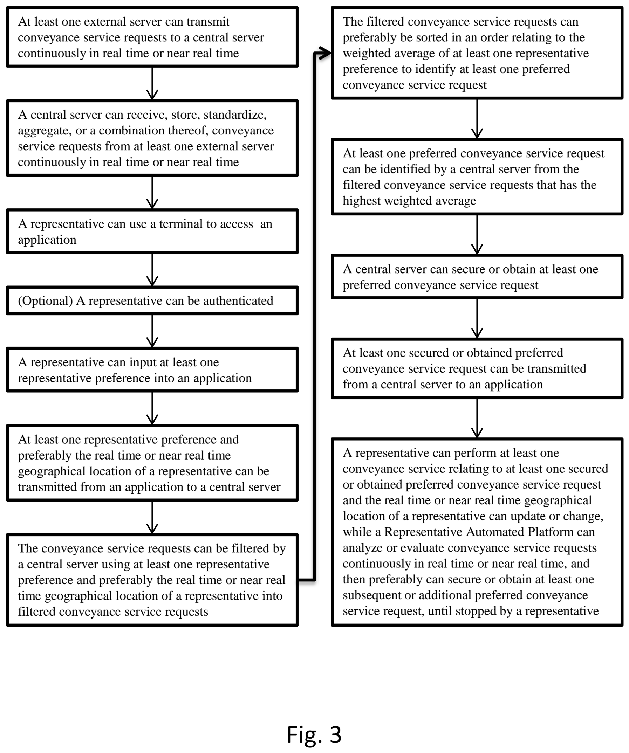

In this example, an embodiment of the present invention is described for assisting a representative in a process of securing or obtaining, within the conveyance industry, a preferred conveyance service request ("pCSR"). Generally, see **Fig. 1** and **Fig. 2** for an exemplary system and **Fig. 3** for an exemplary method of the present invention.

**FIG. 1** relates to an exemplary implementation of the inventive scheme as a macro level view of a RAP **13,** alternatively referred to herein as a "RAP", which may be automated in whole or in part to assist a representative **2** who wants to provide conveyance services. The conveyance service requests ("CSRs") **15** can be sourced from one or more external server **10** and can be transmitted to a central server **9** by way of a link **8.** A service provider **5** can be associated with an external server **10.** In this example, each service provider **5** is associated with one external server **10,** however, a service provider can be associated with multiple external servers. A central server **9** can filter CSRs **15** into filtered conveyance service requests ("fCSR") **16** by using a representative preference **18** and the substantially real time geographical location of a representative **2.** A central server **9** can calculate the weighted average of a representative preference **18.** A central server **9** can sort the fCSRs **16** in an order relating to the corresponding weighted averages to identify a preferred conveyance service request ("pCSR") **17.** A pCSR **17** can be identified by a central server **9** from the fCSRs **16** that has the highest weighted average. A pCSR **17** can be secured or obtained by a central server **9.** A secured or obtained pCSR **17** can be transmitted from a central server **9** to an application **6** by way of a link **8.** An application **6** can operate on a terminal **7.** A secured or obtained pCSR **17** can be displayed on an application **6.** A RAP **13** can analyze or evaluate and then secure a subsequent or additional pCSR **17** continuously in substantially real time, while a representative **2** performs a conveyance service relating to a secured or obtained pCSR **17** until the process is stopped by a representative **2.** A link **8** can be a connection or an association with a software function or a software component relating to an application **6,** a terminal **7,** a central server **9,** an external server **10,** or a combination thereof.

**FIG. 2****,** an individual conveyance service request ("CSR") **15** can be submitted by each individual conveyance client **1A, 1B, 1C, 1D, 1E,** and **1F.** An individual CSR corresponds with each individual conveyance client **1** in the figure. Conveyance service requests ("CSRs") **15A** and **15B** are submitted by conveyance clients **1A** and **1B** to external server **10A** associated with service provider **5A.** CSRs **15C** and **15D** are submitted by conveyance clients **1C** and **1D** to external server **10B** associated with service provider **5B.** CSRs **15E** and **15F** are submitted by conveyance clients **1E** and **1F** to external server **10C** associated with service provider **5C.** Each service provider **5** can have an external server **10.**

A central server **9** can receive CSRs **15** and then filter the CSRs **15** into filtered conveyance service requests ("fCSR") **16** by using a representative preference **18** and the substantially real time geographical location of a representative **2.** A central server **9** can calculate the weighted average of a representative preference **18.** A central server **9** can sort the fCSRs **16** in an order relating to the corresponding weighted averages to identify a preferred conveyance service request ("pCSR") **17.** A pCSR **17** can be identified by a central server **9** from the fCSRs **16** that has the highest weighted average.

A central server **9** can analyze or evaluate CSRs **15** and then secure a pCSR **17.** A secured or obtained pCSR **17** can be transmitted from a central server **9** to an application **6** by way of a link **8.** An application **6** can operate on a terminal **7** and can display a secured or pCSR **17.** A representative **2** can use a visual representation **12** in conjunction with a RAP **13** to visually analyze or evaluate where a conveyance client **1** or a pCSR **17** is geographically. A RAP **13** can analyze or evaluate and then secure a subsequent or additional pCSR **17** continuously in substantially real time, while a representative **2** performs a conveyance service relating to a secured or obtained pCSR **17,** until the process is stopped by a representative **2.**

A link **8** can be a connection or an association with a software function or a software component relating to an application **6,** a terminal **7,** a central server **9,** an external server **10,** or a combination thereof. A link **8** can be a connection or an association with an application **6,** a central server **9,** an external server **10,** or a combination thereof, on a terminal **7** associated with a representative **2.**

### EXAMPLE 2: Representative Automated Platform (RAP)

A second aspect of the inventive scheme includes a method to assist a representative in securing a preferred conveyance service request ("pCSR") relating to a representative preference using the RAP. The following are steps of an exemplary method in a preferable but not required order. Generally, see **FIGs. 1-2** for an exemplary system and **FIG. 3** for an exemplary method of the present invention.

**FIG. 3** provides a flowchart of steps of an exemplary method in which a representative **2** can benefit from the present invention. The flowchart shows one approach of how a RAP **13,** automated in whole or in part, can assist a representative **2** in analyzing or evaluating and then securing or obtaining a preferred conveyance service request ("pCSR") **17.** A RAP **13,** automated in whole or in part, after securing or obtaining a pCSR **17,** can continuously analyze or evaluate conveyance service requests ("CSRs") **15** in substantially real time and then secure a subsequent or additional pCSR**17** while a representative **2** is performing a conveyance service. A link **8** can be a connection or an association with a software function or a software component relating to an application **6,** a terminal **7,** a central server **9,** an external server **10,** or a combination thereof.

| | |
|---|---|
| Step 1. | At least one conveyance service request can be transmitted from at least one external server to at least one central server continuously in real time or near real time by way of at least one link |
| Step 2. | At least one conveyance service request can be stored, standardized, aggregated, or a combination thereof, at least once on at least one central server |
| Step 3. | At least one representative can use at least one terminal to access at least one application |
| Step 4. | At least one representative can be authenticated |
| Step 5. | At least one representative can input or provide at least one representative preference into at least one application |
| Step 6. | At least one representative preference and preferably at least one real time or near real time geographical location of at least one representative can be transmitted from at least one application to at least one central server by way of at least one link |
| Step 7. | At least one conveyance service request can be filtered by at least one central server using at least one representative preference and preferably at least one real time or near real time geographical location of at least one representative into at least one filtered conveyance service request |
| Step 8. | At least one filtered conveyance service request can preferably be sorted in at least one order relating to at least one weighted average of at least one representative preference to identify at least one preferred conveyance service request |
| Step 9. | At least one preferred conveyance service request can be identified by at least one central server as at least one filtered conveyance service request that has the highest weighted average from at least one filtered conveyance service request |
| Step 10. | At least one preferred conveyance service request can be transmitted from at least one central server to at least one application by way of at least one link |
| Step 11. | At least one application can, for example, display at least one pop-up with details, such as price and at least one service provider of at least one preferred conveyance service request |
| Step 12. | At least one representative can, for example, decline at least one preferred conveyance service request |
| Step 13. | At least one new or different preferred conveyance service request can be identified by at least one central server in real time or near real time |
| Step 14. | At least one application can, for example, display at least one new or different pop-up with details, such as price and at least one service provider of at least one new or different preferred conveyance service request |
| Step 15. | At least one representative can accept at least one new or different preferred conveyance service request |
| Step 16. | At least one central server can secure or obtain at least one accepted preferred conveyance service request |
| Step 17. | At least one secured or obtained preferred conveyance service request can be transmitted from at least one central server to at least one application by way of at least one link |
| Step 18. | At least one representative can perform at least one conveyance service relating to at least one secured or obtained preferred conveyance service request and at least one real time or near real time geographical location of at least one representative can update or change, while at least one Representative Automated Platform can analyze or evaluate at least one conveyance service request continuously in real time or near real time, and then preferably can secure or obtain at least one subsequent or additional preferred conveyance service request, until stopped by at least one representative |

This example can be applied to any conveyance of goods or services and may involve more than one conveyance industry segment. In this example, representative **2** can be a driver, a conveyance client **1** can be a passenger or recipient of a conveyance service, and pCSR **17** can be a delivery service request, a ride service request, and a food delivery service request.

In this example, a representative **2** uses the inventive RAP **13** to five secure preferred conveyance service requests ("pCSRs") **17.** A representative **2** can provide conveyance services based on guidance provided by the RAP **13.** Individual pCSRs **17** can be secured or obtained and then completed in any order as laid out by a RAP **13.** A RAP **13** can apply representative preferences **18** to enable only pCSRs **17** to be accepted. A central server **9** can continuously receive CSRs **15** from more than one external server **10** by way of a link **8** in substantially real time and can store, standardize, aggregate, and filter CSRs **15** in substantially real time. A central server **9** can sort filtered conveyance service requests ("fCSRs") **16** in substantially real time, or use another technique, to identify pCSRs **17.** A representative **2** can access an application **6** using a terminal **7** to gain knowledge of more than one conveyance industry segment, for example.

Once logged into an application **6,** representative **2** can input or provide representative preferences **18** into an application **6.** Representative **2** can input or provide two representative preferences **18,** an efficiency preference and a service provider **5** inclusion preference. An efficiency preference can be, for example, a preference of three or more pCSRs **17** within a specific geographical location that can be performed at the same time or during the same trip. A service provider **5** inclusion preference can be, for example, a preference to include three specific service providers **5** that a representative **2** holds accounts with.

A central server **9** can filter out CSRs **15** that do not match or satisfy the two representative preferences **18** for a representative **2.** Benefits of representative preferences **18** can be to allow a representative **2** to better meet their criteria in providing conveyance services such as higher earning potential, better efficiencies, and/or more suitable CSRs **15.** The two representative preferences **18** and the substantially real time geographical location of a representative **2** can be transmitted from an application **6** to a central server **9** by way of a link **8.**

A central server **9** can filter CSRs **15** into fCSRs **16** by comparing to, for example, the two representative preferences **18** and the substantially real time geographical location of a representative **2.** The CSRs **15** that match the indicated two representative preferences **18** can be identified as fCSRs **16.** The CSRs **15** that do not match the indicated two representative preferences **18** can be discarded or ignored as not being fCSRs **16.** The fCSRs **16** can be sorted by a weighted average of, for example, the two representative preferences **18** to identify pCSRs **17.** The representative preferences **18** can be but are not limited to unequal weights of, for example, 75% efficiency preference and, for example, 25% service provider **5** inclusion preference when calculating a weighted average. A representative **2** can optionally choose for representative preferences **18** to have equal or unequal weights. In this example, a representative **2** can favor an efficiency preference more than working with specific service providers **5.**

The fCSRs **16** with a highest weighted average can be identified as pCSRs **17.** For example, a central server **9** can identify pCSRs **17** from fCSRs **16** by using the highest weighted averages of an efficiency preference and service provider **5** inclusion preference. Additional CSRs **15** can be received and continuously filtered by a central server **9** into additional fCSRs **16.** Additional fCSRs **16** can be sorted by a central server **9** into pCSRs **17.**

The pCSRs **17** in conjunction with corresponding conveyance data can be transmitted from a central server **9** to an application **6** by way of a link **8.** Additional operations within this step include that an application **6** can, for example, display a pop-up with details such as price and a service provider **5** of pCSRs **17.** A representative **2** can analyze or evaluate pCSRs **17** with corresponding conveyance data and can, for example, decline pCSRs **17.** New pCSRs **17** can be identified by a central server **9** and can be, for example, displayed to a representative **2** via another pop-up on an application **6.** A representative **2** can accept new pCSRs **17** and a central server **9** can secure new accepted pCSRs **17** for a representative **2.** Secured or obtained pCSRs **17** can be transmitted from a central server **9** to an application **6** by way of a link **8.**

An application **6,** a central server **9,** an external server **10,** a terminal **7,** a link **8,** or a combination thereof, can be combined or integrated. A representative **2** can perform a conveyance service and the substantially real time geographical location of a representative **2** can update or change, while RAP **13** can continuously analyze or evaluate CSRs **15** in substantially real time, and then secure subsequent or additional pCSRs **17,** until stopped by a representative **2.**

In this example, RAP **13** can first secure three pCSRs **17** relating to an individual good supplier in the good delivery industry segment accepted by a representative **2** (service request #1, #2, and #3). A representative **2** can begin performing the conveyance services and can pick up all three good deliveries to be conveyed from the good supplier. Before the completion of service requests #1, #2, and #3, RAP **13** can, for example, secure a pCSR **17** in the ride-hail industry segment (service request #4). Representative **2** can begin service request #4 and pick up a conveyance client **1** at a beginning service geographical location then drop off a conveyance client **1** at an ending service geographical location to complete service request #4. After completion of service request #4, RAP **13** can, for example, secure a pCSR **17** in the food delivery industry segment (service request #5). Representative **2** can begin service request #5 and pick up the requested food at the good supplier geographical location then drop off the requested food at an ending service geographical location to complete service request #5. After completion of service request #5, RAP **13** can indicate to a representative **2** to complete service request #1, for example. Representative **2** can drop off a delivery at an ending service geographical location to complete service request #1. Next, a RAP **13** can indicate to a representative **2** to complete service request #3, for example. Representative **2** can drop off a delivery at an ending service geographical location to complete service request #3. Lastly, RAP **13** can indicate to a representative **2** to complete service request #2, for example. Representative **2** can drop off a delivery at an ending service geographical location to complete service request #2. A representative **2** can then, for example, turn off a RAP **13.**

### EXAMPLE 3: Autonomous Vehicle Automated Platform (AVAP)

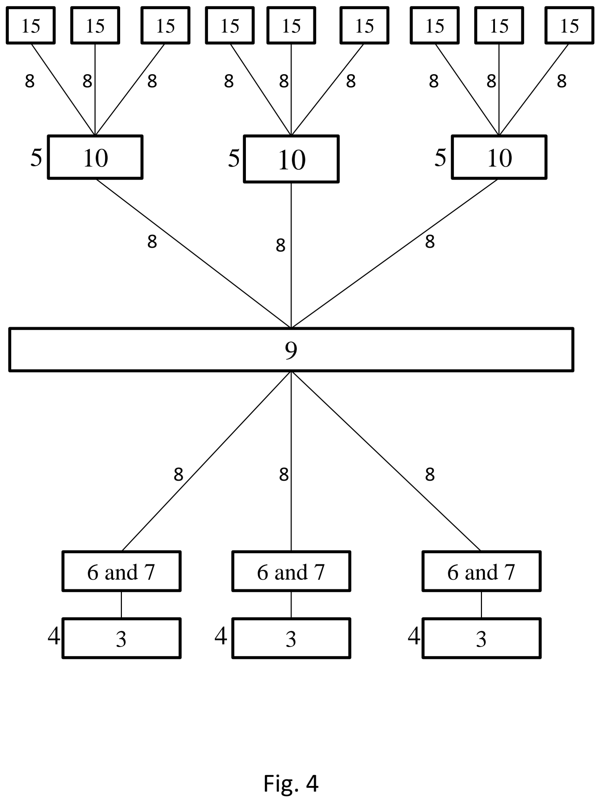

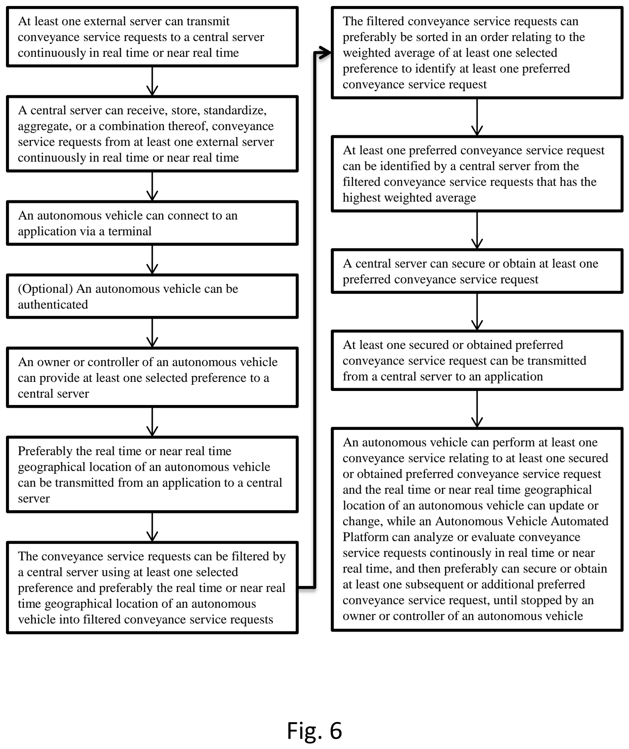

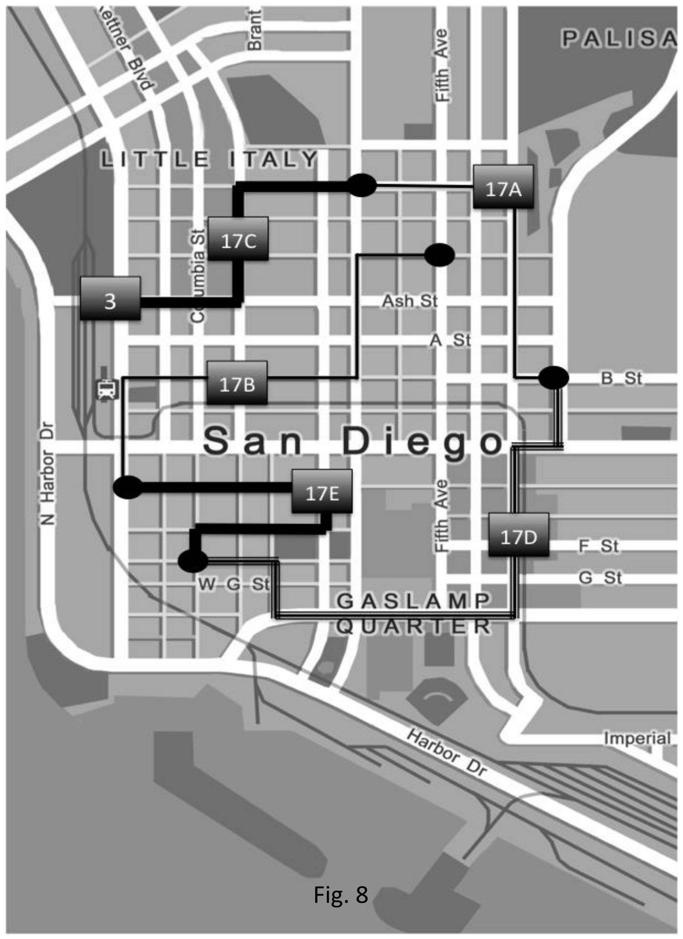

In this example, an embodiment of the present invention is described for assisting an autonomous vehicle ("AV") in a process of securing or obtaining, within the conveyance industry, a preferred conveyance service request ("pCSR") relating to a selected preference. Generally, see **FIGs. 4-5** for an exemplary system and **FIGs. 6** and **8** for an exemplary method of the present invention.

**FIG. 4** provides a macro level view of an Autonomous Vehicle Automated Platform ("AVAP") **14,** automated in whole or in part, where an AV owner/controller **4** can benefit from the present invention. The conveyance service requests ("CSRs") **15** can be sourced from an external server **10** and can be transmitted to a central server **9** by way of a link **8.** A service provider **5** can be associated with an external server **10.** Each service provider **5** is associated with one external server **10.** A central server **9** can filter CSRs **15** into filtered conveyance service requests ("fCSRs") **16** by using a selected preference **19** and the substantially real time geographical location of an AV **3.** A central server **9** can calculate the weighted average of a selected preference **19.** A central server **9** can sort the fCSRs **16** in an order relating to the corresponding weighted averages to identify a preferred conveyance service request ("pCSR") **17.** A pCSR **17** can be identified by a central server **9** from the fCSRs **16** that has the highest weighted average. A pCSR **17** can be secured or obtained by a central server **9.** A secured or obtained pCSR **17** can be transmitted from a central server **9** to an application **6** by way of a link **8.** An application **6** can operate on a terminal **7** associated with an AV **3.** An AVAP **14** can analyze or evaluate and then secure a subsequent or additional pCSR **17** continuously in substantially real time, while an AV **3** performs a conveyance service relating to a secured or obtained pCSR **17** until the process is stopped by an AV owner/controller **4.** A link **8** can be a connection or an association with a software function or a software component relating to an application **6,** an owner/controller application, a terminal **7,** a central server **9,** an external server **10,** or a combination thereof.

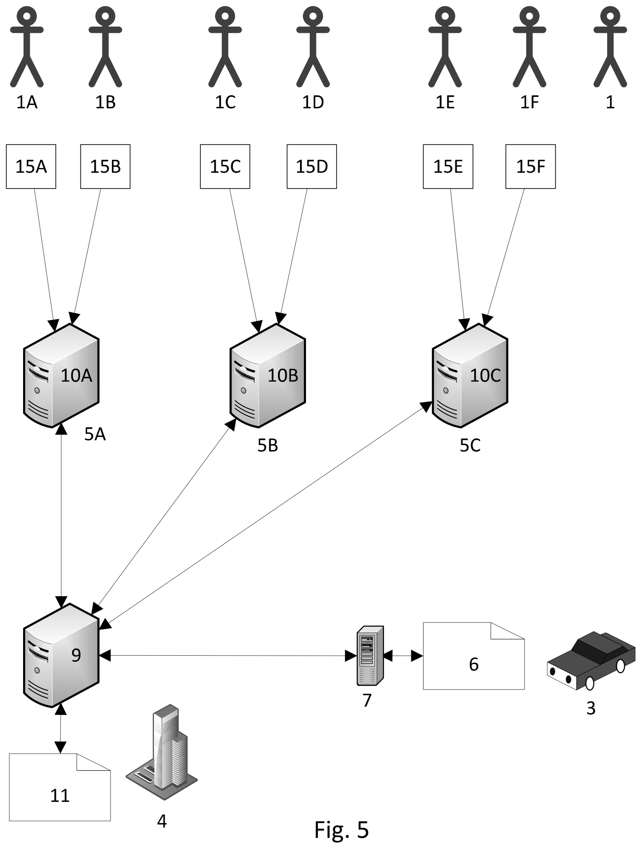

**FIG. 5** provides a macro level view of an exemplary AVAP **14,** automated in whole or in part, where an AV owner/controller **4** can benefit from the present invention. An individual conveyance service request ("CSR") **15** can be submitted by each individual conveyance client **1A, 1B, 1C, 1D, 1E,** and **1F.** An individual CSR corresponds with each individual conveyance client **1** in the figure. Conveyance service requests ("CSRs") **15A** and **15B** are submitted by conveyance clients **1A** and **1B** to external server **10A** associated with service provider **5A.** CSRs **15C** and **15D** are submitted by conveyance clients **1C** and **1D** to external server **10B** associated with service provider **5B.** CSRs **15E** and **15F** are submitted by conveyance clients **1E** and **1F** to external server **10C** associated with service provider **5C.** Each service provider **5** can have an external server **10.**

A central server **9** can receive CSRs **15** and then filter the CSRs **15** into filtered conveyance service requests ("fCSRs") **16** by using a selected preference **19** and the substantially real time geographical location of an AV **3.** A central server **9** can calculate the weighted average of a selected preference **19.** A central server **9** can sort the fCSRs **16** in an order relating to the corresponding weighted averages to identify a preferred conveyance service request ("pCSR") **17.** A pCSR **17** can be identified by a central server **9** from the fCSRs **16** that has the highest weighted average.

A pCSR **17** can be transmitted from a central server **9** to an owner/controller application **11** by way of a link **8.** An AV owner/controller **4** can accept a pCSR **17,** when an AVAP **14** is automated in part, by using an owner/controller application **11.** A central server **9** can then secure a pCSR **17.** A secured or obtained pCSR **17** can be transmitted from a central server **9** to an application **6** by way of a link **8.** An application **6** can operate on a terminal **7** associated with an AV **3.** An AVAP **14** can analyze or evaluate and then secure a subsequent or additional pCSR **17** continuously in substantially real time, while an AV **3** performs a conveyance service relating to a secured or obtained pCSR **17,** until the process is stopped by an AV owner/controller **4.**

A link **8** can be a connection or an association with a software function or a software component relating to an application **6,** an owner/controller application **11,** a terminal **7,** a central server **9,** an external server **10,** or a combination thereof. A link can be a connection or an association with an application **6,** an owner/controller application **11,** a central server **9,** an external server **10,** or a combination thereof, on a terminal **7** associated with an AV **3.**

### EXAMPLE 4: Autonomous Vehicle Automated Platform (AVAP)

In this example, an embodiment of the present invention is described for assisting an autonomous vehicle ("AV") in a process of securing or obtaining, within the conveyance industry, a preferred conveyance service request ("pCSR") relating to a selected preference. Generally, see **FIGs. 4-5** for an exemplary system and **FIGs. 6** and **8** for an exemplary method of the present invention.

**FIG. 8** provides a sample visual display within an AVAP **14,** automated in whole, being used by an AV **3** to evaluate and then secure, for example, five preferred conveyance service requests ("pCSRs") **17A-17E.** In this example, not all five pCSRs **17A-17E** were present or available when an AVAP **14** secured a first preferred conveyance service request ("pCSR"). After securing a first pCSR from **17A-17E,** the AVAP **14** can continuously analyze or evaluate conveyance service requests ("CSRs") **15** in substantially real time and then secure a subsequent or additional pCSR from **17A-17E** while an AV **3** is performing the first conveyance service and the substantially real time geographical location of the AV **3** is updated.

The pCSRs **17A-17E** change continuously and are updated in substantially real time, but for illustration purposes, depicted are all five secured or obtained pCSRs **17A-17E.** AVAP **14** is not required to secure pCSRs **17A, 17B, 17C, 17D,** and **17E** in any particular order because after a first pCSR, in this case, **17C,** is secured, an AVAP **14** analyzes or evaluates again or continuously in substantially real time with updated information prior to securing the next pCSR from the remaining requests, e.g., **17A, 17B, 17D** and **17E.**

A first pCSR **17C** is secured for AV **3** by the AVAP **14.** AV **3** picks up the first conveyance client **1** at the beginning service geographical location, displayed as box **17C,** and proceeds to the ending service geographical location depicted by the first black circle on the route. Prior to completing the first pCSR **17C,** the AVAP **14** continuously analyzes or evaluates and then secures a second pCSR **17A.** AV **3** drops off the first conveyance client **1** at the ending service geographical location and proceeds to the beginning service geographical location for the second pCSR **17A,** displayed as box **17A.**

AV **3** picks up the second conveyance client **1** at the beginning service geographical location and proceeds to the ending service geographical location depicted by the second black circle on the route. Prior to completing the second pCSR **17A,** AVAP **14** continuously analyzes and then secures a third pCSR **17D.** AV **3** drops off the second conveyance client **1** at the ending service geographical location and proceeds to the beginning service geographical location for the third pCSR **17D,** displayed as box **17D.**

AV **3** picks up the third conveyance client **1** at the beginning service geographical location and proceeds to the ending service geographical location depicted by the third black circle on the route. Prior to completing the third pCSR **17D,** AVAP **14** continuously analyzes and then secures a fourth pCSR **17E.** AV **3** drops off the third conveyance client **1** at the ending service geographical location and proceeds to the beginning service geographical location for the fourth pCSR **17E,** displayed as box **17E.**

An AV **3** picks up the fourth conveyance client **1** at the beginning service geographical location and proceeds to the ending service geographical location depicted by the fourth black circle on the route. Prior to completing the fourth preferred pCSR **17E,** AVAP **14** continuously analyzes and then secures a fifth pCSR **17B.** AV **3** drops off the fourth conveyance client **1** at the ending service geographical location and proceeds to the beginning service geographical location for the fifth pCSR **17B,** displayed as box **17B.**

AV **3** picks up the fifth conveyance client **1** at the beginning service geographical location and proceeds to the ending service geographical location depicted by the fifth black circle on the route. AV **3** drops off the fifth conveyance client **1** at the ending service geographical location. After AV **3** completes the fifth pCSR **17**B, the AV owner/controller **4** turns off AVAP **14** via an owner/controller application **11.**

### EXAMPLE 5: Autonomous Vehicle Automated Platform (AVAP)

Another aspect of the inventive scheme includes a method to assist an autonomous vehicle ("AV") in a process of securing a preferred conveyance service request ("pCSR") relating to a selected preference using the AVAP. The following are steps of an exemplary method in a preferable but not required order. Generally, see **FIGs. 4-5** for an exemplary system and **FIGs. 6** and **8** for an exemplary method of the present invention

**FIG. 6** provides a flowchart of steps of an exemplary method in which an AV owner/controller **4** can benefit from the present invention. The flowchart describes steps of how an AVAP **14,** automated in whole or in part, can assist an AV **3,** an AV owner/controller **4** in analyzing or evaluating and then securing or obtaining a preferred conveyance service request ("pCSR") **17.** An AVAP **14,** automated in whole or in part, after securing or obtaining a pCSR **17,** can continuously analyze or evaluate conveyance service requests ("CSRs") **15** in substantially real time and then secure a subsequent or additional pCSR **17** while an AV **3** is performing a conveyance service. A link **8** can be a connection or an association with a software function or a software component relating to an application **6,** an owner/controller application **11,** a terminal **7,** a central server **9,** an external server **10,** or a combination thereof.

| | |
|---|---|
| Step 1. | At least one conveyance service request can be transmitted from at least one external server to at least one central server continuously in real time or near real time by way of at least one link |
| Step 2. | At least one conveyance service request can be stored, standardized, aggregated, or a combination thereof, at least once on at least one central server |
| Step 3. | At least one owner or at least one controller of at least one autonomous vehicle can input or provide at least one selected preference into at least one owner or controller application |
| Step 4. | At least one autonomous vehicle can connect to at least one application via at least one terminal |
| Step 5. | At least one autonomous vehicle can be authenticated |
| Step 6. | At least one selected preference can be transmitted from at least one owner or controller application to at least one central server by way of at least one link |
| Step 7. | Preferably at least one real time or near real time geographical location of at least one autonomous vehicle can be transmitted from at least one application to at least one central server by way of at least one link |
| Step 8. | At least one conveyance service request can be filtered by at least one central server using at least one selected preference and preferably at least one real time or near real time geographical location of at least one autonomous vehicle into at least one filtered conveyance service request |
| Step 9. | At least one filtered conveyance service request can preferably be sorted in at least one order relating to at least one weighted average of at least one selected preference to identify at least one preferred conveyance service request |
| Step 10. | At least one preferred conveyance service request can be identified by at least one central server as at least one filtered conveyance service request that has the highest weighted average from at least one filtered conveyance service request |
| Step 11. | At least one central server can secure or obtain at least one preferred conveyance service request |
| Step 12. | At least one secured or obtained preferred conveyance service request can be transmitted from at least one central server to at least one application by way of at least one link |
| Step 13. | At least one autonomous vehicle can perform at least one conveyance service relating to at least one secured or obtained preferred conveyance service request and at least one real time or near real time geographical location of at least one autonomous vehicle can update or change, while at least one Autonomous Vehicle Automated Platform can analyze or evaluate at least one conveyance service request continuously in real time or near real time, and then preferably can secure or obtain at least one subsequent or additional preferred conveyance service request, until stopped by at least one owner or at least one controller of at least one autonomous vehicle |

The present invention can generally be applied to any conveyance of goods or services, for purposes of illustration, this example relates to an individual service provider **5** that owns or controls a fleet of AVs **3** in more than one conveyance industry segment. Even though a fleet of AVs **3** can be controlled or operated in a similar fashion, in this example, the focus is on one AV **3** being controlled or operated by a service provider **5.** In this example, a conveyance client **1** can be a passenger or recipient of a conveyance service, an AV owner/controller **4** can be a service provider **5,** and preferred conveyance service requests ("pCSRs") **17** can be a courier service request, a ride service request, and a food delivery service request.

An AV **3** can provide conveyance services based on guidance provided by an AVAP **14.** Individual pCSRs **17** can be secured or obtained and then completed in any order as laid out by AVAP **14.** AVAP **14** can apply selected preferences **19** to enable only pCSRs **17** to be accepted. A central server **9** can continuously receive conveyance service requests ("CSRs") **15** from, for example, one external server **10** by way of a link **8** in substantially real time and can store, standardize, aggregate, and filter CSRs **15** in substantially real time. A central server **9** can sort filtered conveyance service requests ("fCSRs") **16** in substantially real time, or use another technique, to identify pCSRs **17.** An application **6,** an owner/controller application **11,** a central server **9,** an external server **10,** a terminal **7,** a link **8,** or a combination thereof, can be combined or integrated.

An AV owner/controller **4** can input or provide, for example, selected preferences **19** into an owner/controller application **11.** In this example, an AV owner/controller **4** can input or provide two selected preferences **19,** an industry segment preference and a geographical location preference. An industry segment preference can be, for example, that an AV **3** can provide conveyance services in a courier industry segment, ride-hail industry segment, and food delivery industry segment. A geographical location preference can be, for example, that an AV **3** can provide conveyance services in a certain quadrant or geographical area. A service provider **5** can control where an AV **3** can provide conveyance services across a city or place. For example, a central server **9** can filter out CSRs **15** that do not match or satisfy criteria of the selected preferences **19** for an AV owner/controller **4.**

Benefits of selected preferences **19** can be to allow an AV owner/controller **4** to better meet their criteria in providing conveyance services such as higher earning potential, better efficiencies, greater number of conveyance services provided, and/or more suitable CSRs **15.** The two selected preferences **19** for this example can be transmitted from an owner/controller application **11** to a central server **9** by way of a link **8.** The geographical location of an AV **3** can be transmitted from an application **6** to a central server **9** by way of a link **8.** A central server **9** can communicate with an AV **3** by using an application on a terminal **7** associated with an AV **3.** An AV **3** can connect to an application **6** via a terminal **7** and can be authenticated.

A central server **9** can filter CSRs **15** into fCSRs **16** by comparing to, for example, the two selected preferences **19** and the substantially real time geographical location of an AV **3.** The CSRs **15** that match the indicated two selected preferences **19** can be identified fCSRs **16.** The CSRs **15** that do not match the indicated two selected preferences **19** can be discarded or ignored as not being fCSRs **16.** The fCSRs **16** can be sorted by a weighted average of, for example, the two selected preferences **19** to identify pCSRs **17.** An AV owner/controller **4** can optionally choose for selected preferences **19** to have equal or unequal weights. The selected preferences **19** can be but are not limited to equal weights, for example, of 50% when calculating a weighted average.

The selected preferences **19** chosen by an AV owner/controller **4** can optionally be given unequal weights, for example, 70% and 30%. In this specific example, an industry segment preference can be given a weight of 70% and can be set to include the ride-hail industry, courier industry, and food delivery industry by an AV owner/controller **4.** The fCSRs **16** in the ride-hail industry, courier industry, or food delivery industry can be assigned a score of 10 out of 10 by a central server **9.** The fCSRs **16** not in the ride-hail industry, courier industry, or food delivery industry can be assigned a score of 0 out of 10 by a central server **9.** A geographical location preference can be given a weight of 30% and can be set by an AV owner/controller **4** to include fCSRs **16** within an area or a perimeter of five miles from the substantially real time geographical location of an AV **3.** The fCSRs **16** within one mile from the substantially real time geographical location of an AV **3** can be assigned a score of 10 out of 10 by a central server **9.** The fCSRs **16** within two miles from the substantially real time geographical location of an AV **3** can be assigned a score of 8 out of 10 by a central server **9.** The fCSRs **16** within three miles from the substantially real time geographical location of an AV **3** can be assigned a score of 6 out of 10 by a central server **9.** The fCSRs **16** within four miles from the substantially real time geographical location of an AV **3** can be assigned a score of 4 out of 10 by a central server **9.** The fCSRs **16** within five miles from the substantially real time geographical location of an AV **3** can be assigned a score of 2 out of 10 by a central server **9.** The fCSRs **16** more than five miles away from the substantially real time geographical location of an AV **3** can be assigned a score of 0 out of 10 by a central server **9.** For example, a filtered conveyance service request ("fCSR") **16** in the ride-hail industry within three miles from the substantially real time geographical location of an AV **3** can be calculated or determined by a central server **9** as having a weighted average of (70% of 10) plus (30% of 6) that can equal 8.8 based on an industry segment preference and a geographical location preference. A fCSR **16** with the highest weighted average of 8.8 in this instance can be identified as a pCSR **17** in comparison to other fCSRs **16** with lower weighted averages.

A fCSR **16** with the highest weighted average can be identified as a pCSR **17.** For example, a central server **9** can identify a pCSR **17** from fCSRs **16** by using the highest weighted average of an industry segment preference and a geographical location preference. Additional CSRs **15** can be received and continuously filtered by a central server **9** into additional fCSRs **16.** Additional fCSRs **16** can be sorted by a central server **9** into pCSRs **17** when appropriate. A central server **9** can secure a pCSR **17** for an AV **3.** A secured or obtained pCSR **17** can be transmitted from a central server **9** to an application **6** in an AV **3** by way of a link **8.** An AV **3** can perform a conveyance service and the substantially real time geographical location of an AV **3** can update or change, while an AVAP **14** can analyze or evaluate CSRs **15** continuously, and then secure subsequent or additional pCSRs **17,** until stopped by an AV owner/controller **4.**

In this example, AVAP **14** can be used by an AV **3** to secure, for example, three pCSRs **17.** AV **3** can perform or provide conveyance services based on guidance provided by AVAP **14.** Individual pCSRs **17** can be secured or obtain and then completed in any order as laid out by AVAP **14.** In this example, AVAP **14** can first accept a pCSR **17** in the courier industry segment (service request #1). For example, AV **3** can begin the conveyance service and can pick up a package to be conveyed. A package can be placed in an AV **3.** Before the completion of service request #1, AVAP **14** can, for example, secure an additional pCSR **17** in the ride-hail industry segment (service request #2). AV **3** can begin service request #2 and pick up a conveyance client **1** at a beginning service geographical location then drop off a conveyance client **1** at an ending service geographical location to complete service request #2. After completion of service request #2, AVAP **14** can, for example, secure an additional pCSR **17** in the food delivery industry (service request #3). AV **3** can begin service request #3 and the food to be delivered can be placed in an AV **3** at a good supplier geographical location. An AV **3** can drop off the food delivery at an ending service geographical location to complete service request #3, for example. After completion of service request #3 AVAP **14** can, for example, indicate to an AV **3** to complete service request #1. An AV **3** can drop off the package at an ending service geographical location to complete service request #1, for example. An AV owner/controller **4** can then, for example, turn off AVAP **14.**

### EXAMPLE 6: Identifying Preferred Conveyance Service Requests (pCSR)

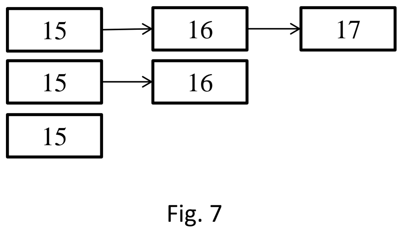

This example illustrates how a conveyance service request ("CSR") becomes a preferred conveyance service request ("pCSR") of the present invention. The following are steps of an exemplary method in a preferable but not required order. Generally, see **FIG. 7** for both an exemplary system and method of the present invention.

**FIG. 7** provides a flowchart of the transformation of a conveyance service request ("CSR") **15** into a preferred conveyance service request ("pCSR") **17.** Once a central server **9** receives a CSR **15** from an external server **10,** a central server **9** can filter a CSR **15** using a representative preference **18** or a selected preference **19** and the substantially real time geographical location of a representative **2** or an AV **3** into a filtered conveyance service request ("fCSR") **16.** A central server **9** can calculate the weighted average of a representative preference **18** or a selected preference **19.** A central server **9** can sort a fCSR **16** in an order relating to the corresponding weighted averages to identify a pCSR **17.** A pCSR **17** can be identified by a central server **9** as a fCSR **16** that has the highest weighted average from a fCSR **16.** Not every CSR **15** can become a fCSR **16** and not every fCSR **16** can become a pCSR **17.** A central server **9** can be used by a RAP **13** to analyze and identify a pCSR **17.** A central server **9** can be used by an AVAP **14** to analyze and identify a pCSR **17.** A function of a central server **9** or a function of an external server **10** can be performed by an application **6,** an owner/controller application **11,** or a combination thereof. All or some of conveyance data relating to an AV **3** ("AV-related data") can be filtered ("filtered subset of AV-related data") and can be identified as preferred ("preferred AV-related data") in a same or a similar process to filter and identify a CSR **15** into a pCSR **17.** A link **8** can be a connection or an association with a software function or a software component relating to an application **6,** an owner/controller application **11,** a terminal **7,** a central server **9,** an external server **10,** or a combination thereof.

The present example illustrates how conveyance service requests ("CSRs") **15** can become filtered conveyance service requests ("fCSRs") **16** and then a pCSR **17.** In this example, a representative **2** can be a driver, a conveyance client **1** can be a passenger or recipient of a conveyance service, and a pCSR **17** can be a ride service request. In this example, a representative **2** can use a RAP **13** to secure a pCSR **17.**

A central server **9** can receive CSRs **15** from an external server **10** continuously or repeatedly in substantially real time. A central server **9** can store, standardize, aggregate, or a combination thereof, CSRs **15** in any order. A representative **2** can input or provide two representative preferences **18,** the substantially real time geographical location of a representative, or a combination thereof, to a central server **9.**

A central server **9** can compare CSRs **15** to the substantially real time geographical location of a representative **2** and discard or ignore CSRs **15** being further than 10 miles perimeter. A subset of CSRs **15** within 10 miles perimeter that also match or satisfy an industry segment preference can be identified as fCSRs **16.**

In this example, an industry segment preference can be given a weight of 40% and can be set to include only the ride-hail industry segment by a representative **2.** The fCSRs **16** in a ride-hail industry segment can be assigned a score of 10 out of 10 by a central server **9.** The fCSRs **16** not in a ride-hail industry segment can be assigned a score of 0 out of 10 by a central server **9.**

A pricing preference can be given a weight of 60% and can be set by a representative **2** to include fCSRs **16** with at least $10.00 revenue per conveyance service performed.

The fCSRs **16** with less than $10.00 revenue can be assigned a score of 0 out of 10 by a central server **9.** The fCSRs **16** with pricing being $10.00-$14.99 revenue can be assigned a score of 4 out of 10 by a central server **9.** The fCSRs **16** with pricing being $15.00-$19.99 revenue can be assigned a score of 7 out of 10 by a central server **9.** The fCSRs **16** with pricing of $20.00 or more in revenue can be assigned a score of 10 out of 10 by a central server **9.**

For example, a fCSRs **16** in a ride-hail industry segment with pricing being $17.00 can be calculated or determined by a central server **9** as having a weighted average of (40% of 10) plus (60% of 7) that can equal 8.2 based on an industry segment preference and a pricing preference. A fCSR **16** can be sorted in an ascending order relating to a weighted average of 8.2 in this instance and can be identified as a pCSR **17** in comparison to other fCSRs **16** with lower weighted averages.

A RAP **13** can secure a pCSR **17** in a ride-hail industry segment with pricing being $17.00. A representative **2** can perform a conveyance service and the substantially real time geographical location of a representative **2** can update or change, while a RAP **13** can continuously analyze or evaluate CSRs **15** in substantially real time, and then secure a subsequent or additional pCSR **17,** until stopped by a representative **2.** A function of a central server **9** or an external server **10** can be performed by an application **6.**

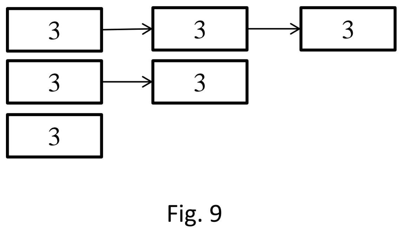

All or some of conveyance data relating to an AV 3 ("AV-related data") can be filtered and can be identified as preferred in a same or a similar process to filter and identify a CSR **15** into a pCSR 17 as illustrated in **FIG. 9****.** An application **6,** a central server **9,** an external server **10,** a terminal **7,** a link **8,** or a combination thereof, can be combined or integrated.

### EXAMPLE 7: Identifying a Preferred Conveyance Service Request (pCSR)

This example illustrates how a conveyance service request ("CSR") becomes a preferred conveyance service request ("pCSR") of the present invention. The following are steps of an exemplary method in a preferable but not required order. The following example provides an exemplary use of the AVAP by an AV. Generally see **Fig. 7** for both an exemplary system and method of the present invention.

**FIG. 7** illustrate how conveyance service requests ("CSRs") **15** can become filtered conveyance service requests ("fCSRs") **16** and then a preferred conveyance service request ("pCSR") **17.** The present example can be applied to any conveyance of goods or services, however, this example is for a food delivery industry segment. Here, a conveyance client **1** can be a person that can order food, an AV **3** can perform a conveyance service, an AV owner/controller **4** can be a private owner of an AV **3,** and a pCSR **17** can be a food delivery service request.

A central server **9** can receive CSRs **15** from external servers **10** continuously or repeatedly in substantially real time and can pre-categorize CSRs **15** by zip code. A central server **9** can store, standardize, aggregate, or a combination thereof, CSRs **15** in any order. An AV owner/controller **4** can input or provide one selected preference **19** to a central server **9.** The substantially real time geographical location of an AV **3** can be transmitted from an application **6** to a central server **9** by way of a link **8.**

A central server **9** can compare pre-categorized CSRs **15** to the substantially real time geographical location of an AV **3** and discard or ignore CSRs **15** that are, for example, in the different zip code associated with another AV **3.** A subset of CSRs **15** within the zip code area of an AV **3** that also matches or satisfies an estimated time of arrival preference can be identified as fCSRs **16.**

In this example, an estimated time of arrival preference can be given a weight of 100% and can be set by an AV owner/controller **4** to less than twenty minutes from an AV **3.** The fCSRs **16** with an estimated time of arrival of more than twenty minutes can be assigned a score of 10 out of 10 by a central server **9.** The fCSRs **16** with an estimated time of arrival of less than or equal to twenty minutes can be assigned a score of 0.5 per minute by a central server **9.** For example, a filtered conveyance service request ("fCSR") **16** with an estimated time of arrival of fourteen minutes can be assigned a score of 7 out of 10 or a fCSR **16** with an estimated time of arrival of six minutes can be assigned a score of 3 out of 10.

For example, a fCSR **16** in a food delivery industry segment with an estimated time of arrival of four minutes can be calculated or determined by a central server **9** as having a weighted average of (100% of 2) that can equal 2 based on an estimated time of arrival preference. A minimum function can be utilized to identify a fCSR **16** having the lowest weighted average in comparison to other fCSRs **16** with higher weighted averages as a pCSR **17.**

An application **6,** an owner/controller application **11,** a central server **9,** an external server **10,** a terminal **7,** a link **8,** an AV **3,** or a combination thereof, can be combined or integrated.

### EXAMPLE 8: Identifying Preferred AV-related data

This example illustrates how to identify a preferred AV ("preferred AV-related data") of the present invention. The following are steps of an exemplary method in a preferable but not required order. The following example provides an exemplary use of the AVAP by an AV. Generally see **FIGs. 4****,** **5****,** and **8****-12** for an exemplary system and method of the present invention.

**FIG. 9** provides a flowchart of the transformation of how an AV **3** becomes an AV **3** that can be identified as preferred. The flowchart can be used to display the transformation of all or some of conveyance data relating an AV **3** ("AV-related data") into all or some of preferred conveyance data relating an AV **3** ("preferred AV-related data"), an AV **3** that can be identified as preferred, or a combination thereof. The left column can represent AV-related data, an AV **3,** or a combination thereof. The middle column can represent all or some of filtered conveyance data relating an AV **3** ("filtered subset of AV-related data"), an AV **3** that can be filtered, or a combination thereof. The right column can represent all or some of preferred AV-related data, an AV **3** that can be identified as preferred, or a combination thereof.

Once a central server **9** receives a conveyance service request ("CSR") **15** with corresponding conveyance data, an AV **3** with corresponding conveyance data, all or some of AV-related data, a substantially real time geographical location of an AV **3,** or a combination thereof, from an external server **10,** a central server **9** can filter all or some of AV-related data using a selected preference **19** and the substantially real time geographical location of an AV **3** into all or some of filtered subset of AV-related data. A central server **9** can calculate the weighted average of a selected preference **19.** A central server **9** can sort all or some of filtered subset of AV-related data in an order relating to the corresponding weighted averages to identify an AV **3** that can be identified as preferred, all or some of preferred AV-related data, or a combination thereof.

All or some of preferred AV-related data can be identified by a central server **9** as all or some of filtered subset of AV-related data that can have the highest weighted average from all or some of filtered subset of AV-related data. An AV **3** that can be identified as preferred can be identified by a central server **9** as all or some of filtered subset of AV-related data that can have the highest weighted average from all or some of filtered subset of AV-related data. Not all or some of AV-related data can become all or some of filtered subset of AV-related data and not all or some of filtered subset of AV-related data can become all or some of preferred AV-related data, an AV **3** that can be identified as preferred, or a combination thereof. Not every AV **3** can become an AV **3** that can be filtered and not every AV **3** that can be filtered can become an AV **3** that can be identified as preferred.

A central server **9** can be used by a RAP **13** to analyze and identify an AV **3** that can be identified as preferred, all or some of preferred AV-related data, or a combination thereof. A central server **9** can be used by an AVAP **14** to analyze and identify an AV **3** that can be identified as preferred, all or some of preferred AV-related data, or a combination thereof. A function of a central server **9** or a function of an external server **10** can be performed by an application **6,** an owner/controller application **11,** an external server **10,** or a combination thereof. All or some of AV-related data can be filtered and can be identified as preferred in a same or a similar process to filter and identify a CSR **15** into a preferred conveyance service request ("pCSR") **17.** A link **8** can be a connection or an association with a software function or a software component relating to an application **6,** an owner/controller application **11,** a terminal **7,** a central server **9,** an external server **10,** or a combination thereof.

This example refers generally to **FIGs. 4****,** **5****,** and **-12.** While the inventive approach can generally be applied to any conveyance of goods or services, for purposes of illustration, this example relates to an individual fleet manager that owns or controls a fleet of AVs **3** ("AV fleet or fleet of AVs") in a conveyance industry segment can employ the inventive AVAP **14** to avoid delays in delivering conveyance services to a conveyance client 1. In this example, an AVAP **14** can be used by an AV owner/controller **4,** or a fleet manager to control or operate a fleet of three AVs **3A, 3B,** and **3C** to perform or service all or most conveyance service requests ("CSRs") **15.** In this example, conveyance clients **1A, 1B,** and **1C** can be passengers or recipients of the conveyance services, an AV owner/controller **4** can be a fleet manager, CSRs **15A, 15B,** and **15C** can correspond to each respective conveyance client **1A, 1B,** and **1C,** and a preferred conveyance service request ("pCSR") **17C** can be the oldest outstanding ride service request. In this example, an AV owner/controller **4** or a fleet manager can utilize an AVAP **14** to identify the oldest outstanding conveyance service request ("CSR") **15**C as the pCSR **17**C that needs to be fulfilled or performed as soon as possible by an AV **3** to maintain good consumer sentiment.

An AV **3** can provide conveyance services based on guidance provided by an AVAP **14.** An AVAP **14** can optimize fleet performance and can control or operate a fleet of AVs **3A, 3B,** and **3C** in an efficient manner and maintain good consumer sentiment. In this example, an AV owner/controller **4** or a fleet manager can use the selected preferences **19** to identify a pCSR **17**C, as being the oldest outstanding ride request, for or with an AV **3B** that can be identified as preferred ("preferred AV-related data"). In this example, an AVAP **14** can single out or identify the oldest outstanding CSR **15**C as being a pCSR **17**C. An application **6,** an owner/controller application **11,** a central server **9,** an external server **10,** a terminal **7,** a link **8,** an AV **3,** or a combination thereof, can be combined or integrated.

A central server **9** can receive CSRs **15A, 15B,** and **15C** with corresponding conveyance data, a fleet of AVs **3A, 3B,** and **3C** with corresponding conveyance data ("AV-related data"), a substantially real time geographical location of a fleet of AVs **3A, 3B,** and **3C,** or a combination thereof, from, for example, two external servers **10** by way of a link **8** in substantially real time. The substantially real time geographical location of a fleet of AVs **3A, 3B,** and **3C** can optionally be transmitted from an application **6** through an external server **10** to a central server **9** by way of a link **8.** A central server **9** can store, standardize, aggregate, or a combination thereof, CSRs **15A, 15B,** and **15C,** conveyance data corresponding to a fleet of AVs **3A, 3B,** and **3C** ("AV-related data"), a substantially real time geographical location of a fleet of AVs **3A, 3B,** and **3C,** or a combination thereof, in substantially real time. CSRs **15A, 15**B**,** and **15**C can be sent or transmitted from an external server **10** and can be received on a central server **9.** A central server **9** can store CSRs **15**A**, 15**B**,** and **15**C in a database and can organize the CSRs **15** in a first database table. In this example, all or some of the CSRs **15** can be stored in a first database table along with exact or specific timestamp of creation. A central server **9** can also store, organize, and analyze conveyance data corresponding to a fleet of AVs **3A, 3B,** and **3C** ("AV-related data"), a substantially real time geographical location of a fleet of AVs **3A, 3B,** and **3C,** or a combination thereof in a database in a second database table.

An AV owner/controller **4** or a fleet manager can input or provide the selected preferences **19** into an owner/controller application **11** being a website. The selected preferences **19** In this example can be transmitted from an owner/controller application **11,** being a website, to a central server **9** by way of a link **8.** In this example, an AV owner/controller **4** or a fleet manager can input or provide three selected preferences **19** total and can apply a selected preference **19** to each database table. In this example, the three selected preferences **19** can be an industry segment preference, a distance preference, and an oldest outstanding request preference. In this example, an industry segment preference can be a ride-hail industry segment, a distance preference can identify an AV **3** within a 1 mile perimeter, and an oldest outstanding request preference can identify the oldest outstanding CSR **15** based on the exact or specific timestamp of creation. An AV owner/controller **4** or a fleet manager can utilize any combination of the three selected preferences **19** when filtering and identifying a pCSR **17,** an AV **3** that can be identified as preferred ("preferred AV" or "preferred AV-related data"), or a combination thereof.

As a result of executing a database query, CSRs **15A, 15B,** and **15C** organized in a first database table can be filtered into a result set of filtered conveyance service requests ("fCSRs) **16A** and **16C** by a central server **9.** In this non-limiting operation, an industry segment preference, for example, a ride-hail industry segment preference can be applied. CSRs **15A** and **15C** being ride-hail CSRs, can match or satisfy the selected preference **19** and can become fCSRs **16A** and **16C.** CSR **15B** can be a food delivery service request, which does not match or satisfy the selected preference **19,** and as a result, can get discarded. By applying the oldest outstanding request preference, a central server **9** can sort the fCSRs **16A** and **16C** in ascending or descending order to identify the oldest timestamp or date of creation, and as a result, a filtered conveyance service request ("fCSR") **16C** can be identified as a pCSR **17C.** As a result of executing a database query, all or some of conveyance data relating to a fleet of AVs **3A, 3B,** and **3C** ("AV-related data") organized in second database table can be filtered into a result set of all or some of filtered subset of AV-related data relating to AVs **3A** and **3B** by a central server **9.** In this operation, a distance preference, for example, less than 1 mile from a pCSR **17**C can be applied. All or some of conveyance data relating to a fleet of AVs **3**A and **3**B or AV-related data ("AV-related data") representing AVs **3**A and **3**B that are located within 1 mile perimeter from a pCSR **17**C can match or satisfy the selected preference **19** and can become all or some of filtered conveyance data relating to a fleet of AVs **3**A and **3**B or filtered subset of AV-related data. All or some of conveyance data relating to AV **3**C or AV-related data representing an AV **3**C that can be located further than 1 mile from a pCSR **17**C does not match or satisfy the selected preference **19,** and as a result, can get discarded.

By sorting the remaining all or some of filtered subset of AV-related data relating to a fleet of AVs **3**A and **3**B or filtered subset of AV-related data according to their physical distance from a pCSR **17**C**,** a central server **9,** can identify all or some of preferred conveyance data relating to an AV **3**B or all or some of preferred AV-related data or AV **3**B that can be identified as preferred as being within the closest physical distance from a pCSR **17**C.

After identifying a match between a pCSR **17**C and an AV **3**B that can be identified as preferred ("preferred AV-related data"), a fleet manager can utilize an AVAP **14** that can automatically secure a pCSR **17**C for or with an AV **3**B and can improve the efficiency and performance of a fleet of AVs **3**A, **3**B, and **3**C. In this non limiting example, a fleet manager can maintain good consumer sentiment as the oldest outstanding CSR **15**C can be identified as a pCSR **17**C and can be secured or obtained for or with a preferred AV **3**B ("preferred AV-related data") to be serviced or performed as soon as possible.

### EXAMPLE 9: Autonomous Vehicle Automated Platform (AVAP)

This example illustrates how to identify a preferred AV or preferred AV-related data of the present invention. The following are steps of an exemplary method in a preferable but not required order. The following example provides an exemplary use of the AVAP by an AV in a process of securing or obtaining, within the conveyance industry, a preferred conveyance service request ("pCSR") relating to a selected preference. This example refers generally to **FIGs. 4****,** **5****,** and **8****-12.**

Referring to **FIGs. 4****,** **5****,** and **8****-12,** while the present example can be applied to any conveyance of goods or services, for purposes of illustration describes an AVAP **14** can be used by a fleet manager to control or operate a fleet of AVs **3** in more than one conveyance industry segment. The focus here is on two AVs **3**A and **3**B within a fleet that is operated or controlled by a fleet manager. AV **3**A operates in a ride-hail industry segment and AV **3**B operates in a food delivery industry segment that can be operated or controlled by the same fleet manager or same AV owner/controller **4.** Conveyance client **1** can be a passenger or recipient of a conveyance service, an AV owner/controller **4** can be a fleet manager, and preferred conveyance service requests ("pCSRs") **17**And **17**B can be a ride service request and a food delivery service request respectively. In this example, an AVAP **14** can identify and secure a preferred conveyance service request ("pCSR") **17**A for the worst performing AV **3**A in the ride-hail industry segment first and then can identify and secure a pCSR **17**B for the worst performing AV **3**B in the food delivery industry segment.

An AVAP **14** can optimize fleet performance by controlling or operating a fleet of AVs **3** in an efficient manner. An AVAP **14** can manage or control AVs **3** from a single AV **3** perspective, a fleet perspective, an independent third-party perspective, or a combination thereof. An AVAP **14** can monitor and single out or pinpoint an AV **3** that is underperforming, due to poor operating performance. In this example, an AV owner/controller **4** or a fleet manager can enhance an AV's **3** selected preferences **19** to increase a likelihood of securing or obtaining a pCSR **17** for an underperforming AV **3** if so desired. An application **6,** an owner/controller application **11,** a central server **9,** an external server **10,** a terminal **7,** a link **8,** an AV **3,** or a combination thereof, can be combined or integrated.

A central server **9** can continuously receive conveyance service requests ("CSRs") **15** with corresponding conveyance data, a fleet of AVs **3** with corresponding conveyance data ("AV-related data"), a substantially real time geographical location of a fleet of AVs **3,** or a combination thereof, from, for example, one external server **10** by way of a link **8.** A central server **9** can store, standardize, aggregate, and filter CSRs **15,** AV-related data, a substantially real time geographical location of a fleet of AVs **3,** or a combination thereof. The substantially real time geographical location of a fleet of AVs **3** can be transmitted from an API on an external server **10** to a central server **9** by way of a link **8.**

A central server **9** can categorize or pre-categorize a fleet of AVs **3** with corresponding conveyance data ("AV-related data") in a database. A central server **9** can categorize or pre-categorize CSRs **15** with corresponding conveyance data in a database. In this example, a central server **9** can categorize or pre-categorize a fleet of AVs **3** with corresponding conveyance data ("AV-related data") in a database based on a substantially real time geographical location of a fleet of AVs **3.** AV **3**A with corresponding conveyance data ("AV-related data"), operating in ride-hail industry segment, can be categorized in first database table and an AV **3**B with corresponding conveyance data ("AV-related data"), operating in food delivery industry segment, can be categorized in second database table. CSRs **15** from all industry segments can be categorized or pre-categorized in third database table.

A fleet manager can input or provide a selected preference **19** into an owner/controller application **11,** being a computer application, that can be communicated with or transmitted to a central server **9** or AVAP **14** by way of a link **8.** A fleet manager can use or apply two selected preferences **19** being a longest idle time preference and a ride hail industry segment preference to filter and identify an AV **3**A that can be identified as preferred ("Preferred AV-related data"). A fleet manager can also use or apply a selected preference **19** being a geographical location preference or shortest travel time preference to filter and identify a pCSR **17**A. In this example, an AV owner/controller **4** or a fleet manager can input or provide multiple selected preferences **19** and can apply a selected preference **19** to each database. In this example, the AVAP **14** can discover which AV **3** in a ride hail industry segment is waiting the longest time without performing a conveyance service.

As a result of executing a database query, all or some of conveyance data relating to a fleet of AVs **3** ("AV-related data") organized in first database table can be filtered into a result set of all or some of filtered conveyance data relating to a fleet of AVs **3** ("filtered subset of AV-related data") by a central server **9.** All or some of conveyance data relating to a fleet of AVs **3** ("AV-related data") performing conveyance services in a ride hail industry segment can match or satisfy the selected preference **19** and can become all or some of filtered conveyance data relating to a fleet of AVs **3** ("filtered subset of AV-related data"). All or some of filtered subset of AV-related data can be sorted by idle time and an AV **3** that is waiting the longest time without performing a conveyance service can be identified as the AV **3**A that can be identified as preferred ("preferred AV-related data"). An AV **3** that does not work or operate in the ride-hail industry, can be discarded or ignored and as a result, cannot become an AV **3**A that can be identified as preferred. A central server **9** or fleet manager can filter out AVs **3** that do not meet or match the two selected preferences **19** and the substantially real time geographical location of a fleet of AVs **3.** For example, if AV **3**C operates in only the refrigerated freight industry segment due to vehicle requirement restrictions, AV **3**C can be filtered out of a database result set.

As a result of executing a database query based on a geographical location preference, CSRs **15** organized in third database table can be filtered and sorted by geographical proximity or travel time from an AV **3**A that can be identified as preferred ("preferred AV-related data"). The CSRs **15** that do not match a selected preference **19** can be discarded or ignored. The filtered conveyance service request ("fCSR") **16** with the shortest travel time to an AV **3**A that can be identified as preferred ("preferred AV-related data"), can be identified as a pCSR **17**A by AVAP **14** or a central server **9.** A pCSR **17**A can be secured or obtained for or with an AV **3**A that can be identified as preferred ("preferred AV-related data").

A fleet manager can input or provide a selected preference **19** into an owner/controller application **11,** being a computer application, that can be communicated with or transmitted to a central server **9** or AVAP **14** by way of a link **8.** A fleet manager can use or apply two selected preferences **19** being a longest idle time preference and a food delivery industry segment preference to filter and identify an AV **3**B that can be identified as preferred ("preferred AV-related data"). A fleet manager can also use or apply a selected preference **19** being geographical location preference or shortest travel time preference to filter and identify a pCSR **17**B. In this example, an AV owner/controller **4** or a fleet manager can input or provide multiple selected preferences **19** and can apply a selected preference **19** to each database. In this example, an AVAP **14** can discover which AV **3** in a food delivery industry segment is waiting the longest time without performing a conveyance service.

As a result of executing a database query, all or some of conveyance data relating to a fleet of AVs **3** ("AV-related data") organized in second database table can be filtered into a result set of all or some of filtered conveyance data relating to a fleet of AVs **3** ("filtered subset of AV-related data") by a central server **9.** All or some of conveyance data relating to a fleet of AVs **3** ("AV-related data") performing conveyance services in a food delivery industry segment can match or satisfy a selected preference **19** and can become all or some of filtered conveyance data relating to a fleet of AVs **3** ("filtered subset of AV-related data"). All or some of filtered conveyance data relating to a fleet of AVs **3** ("filtered subset of AV-related data") can be sorted by idle time and an AV **3** that can be waiting the longest time without performing a conveyance service can be identified as an AV **3**B that can be identified as preferred ("preferred AV-related data"). A central server **9** or fleet manager can filter out AVs **3** that do not meet or match the two selected preferences **19** and the substantially real time geographical location of a fleet of AVs **3.** An AV **3** that does not work or operate in the food delivery industry, can be discarded or ignored and cannot become an AV **3**B that can be identified as preferred ("preferred AV-related data"). For example, if AV **3**D works or operates in only the biohazard freight industry due to vehicle requirement restrictions, AV **3**D can be filtered out of a database result set.

As a result of executing a database query based on a geographical location preference, CSRs **15** organized in third database table can be filtered and sorted by geographical proximity or travel time from AV **3**B that can be identified as preferred ("preferred AV-related data"). The CSRs **15** that do not match a selected preference **19** can be discarded or ignored. The fCSR **16** with the closest geographical proximity to an AV **3**B that can be identified as preferred ("preferred AV-related data"), can be identified as a pCSR **17**B by AVAP **14** or a central server **9**. A pCSR **17**B can be secured or obtained for or with an AV **3**B that can be identified as preferred ("preferred AV-related data").

Both AV **3**A and **3**B can perform conveyance services and the substantially real time geographical location of an AV **3**A and **3**B can update or change, while the AVAP **14** can analyze or evaluate CSRs **15,** a fleet of AVs **3,** conveyance data corresponding to a fleet of AVs **3** ("AV-related data"), or a combination thereof, continuously in substantially real time, and then secure subsequent or additional pCSRs **17** for or with AVs **3**A and **3**B that can be identified as preferred ("preferred AV-related data"), until stopped by an AV owner/controller **4** or a fleet manager. In this example, a fleet of AVs **3** in conjunction with corresponding conveyance data ("AV-related data") can be filtered and AVs **3**A and **3**B can be identified ("preferred AV-related data") as preferred in a same or similar process to filter and identify CSRs **15** into pCSRs **17.**

### EXAMPLE 10: Autonomous Vehicle Automated Platform (AVAP)

The following example provides an exemplary use of the AVAP by an AV owner/controller or a fleet manager can benefit from the present invention. The following can illustrate at least five different scenarios relating to a service provider **5,** that can be implemented for or with an AVAP in a process of securing or obtaining a preferred conveyance service request ("pCSR") within the conveyance industry. This example refers generally to **FIGs. 4****,** **5****,** and **8****-12.**

This example describes selected features of an exemplary system, network, platform and/or method of use of the inventive scheme from which an AV owner/controller **4,** a fleet manager, a good supplier, a service provider **5,** a dispatcher, a logistics provider, a logistics supplier, or a combination thereof, can benefit.

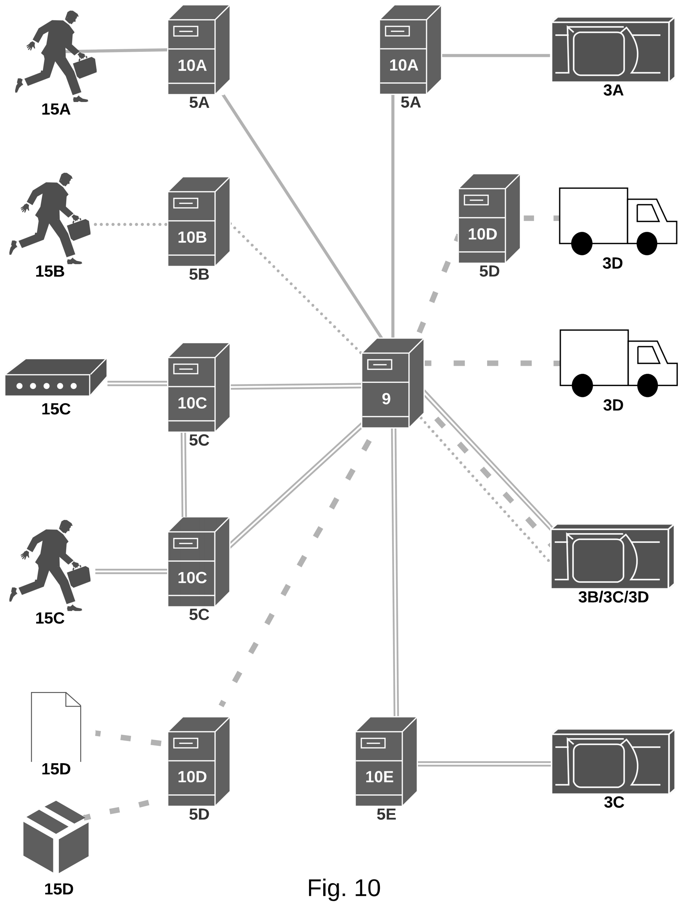

**FIG. 10** illustrates a macro level view of an exemplary AVAP **14,** automated in whole or in part, through which an AV owner/controller **4,** a fleet manager, a good supplier, a service provider **5,** a dispatcher, a logistics provider, a logistics supplier, or a combination thereof, can benefit. In this example, at least five different scenarios relating to a service provider **5** or the various aforementioned users, can be implemented via the AVAP **14.**

Each individual service provider **5** or the various aforementioned users can be displayed with a corresponding letter A, B, C, D, and E to identify different service providers **5** or the various aforementioned users. Each individual service provider **5**A, **5**B, **5**C, and **5**D can be displayed for example, with a different or unique line representing direct or indirect connections. A service provider **5**E or a fleet manager can manage or operate a fleet of AVs **3** for another service provider **5**C, which is demonstrated and displayed as having a same double solid line as service provider **5**C. Each individual service provider **5** can use or utilize an external server **10** in conjunction with a central server **9.**

A conveyance service request ("CSR") **15**A can be a ride-hail request submitted to an external server **10**A associated with a service provider **5**A, as indicated by a single solid line. A CSR **15**B can be a ride-hail request submitted to an external server **10**B associated with a service provider **5**B, as indicated by a circular dotted line. Conveyance service requests ("CSRs") **15**C can be a food delivery request and a ride-hail request that can come from two external servers **10**C associated with a service provider **5**C, as both can be indicated by a double solid line. CSRs **15**D can be a courier delivery request and a good delivery request submitted to one external server **10**D associated with a service provider **5**D or good supplier, as indicated by a dashed line. There are no CSRs **15** submitted to external server **10**E associated with service provider **5**E or fleet manager.

As illustrated, each individual service provider **5** can control, own, operate, or manage a service provider **5** network that can have a different feature or a different variation. Each individual service provider **5** network can be displayed with a different combination of a connection. Each individual service provider **5** network can display a data flow, via a different or unique line, and who each individual service provider **5** can communicate with. A link **8** can be a connection or an association with a software function or a software component relating to an application **6,** an owner/controller application **11,** a terminal **7,** a central server **9,** an external server **10,** or a combination thereof.

Referring for this example to **FIGs. 4****,** **5****,** and **8****-12,** a conveyance service request ("CSR") **15**A can be a ride-hail request submitted by a conveyance client **1** to an external server **10**A associated with a service provider **5**A, as indicated in **FIG. 10** by a single solid line. A CSR **15**B can be a ride-hail request submitted by a conveyance client **1** to an external server **10**B associated with a service provider **5**B, as indicated by a circular dotted line. Conveyance service requests ("CSRs") **15**C can be a food delivery request and a ride-hail request that can come from two external servers **10**C associated with a service provider **5**C, as both can be indicated by a double solid line. CSRs **15**D can be a courier delivery request and a good delivery request submitted by two conveyance clients **1** to one external server **10**D associated with service provider **5**D or good supplier, as indicated by a dashes line. There are no CSRs **15** submitted to an external server **10**E associated with a service provider **5**E or fleet manager on **FIG. 10****.**

Each individual service provider **5** can be displayed with a corresponding letter A, B, C, D, and E to identify different service providers **5** or different aforementioned users. Each individual service provider **5** can optionally have or utilize an owner/controller application **11.** Each individual service provider **5**A, **5**B, **5**C, and **5**D can be displayed for example, with a different or unique line representing direct or indirect lines of connections. A service provider **5**E or a fleet manager can manage or operate a fleet of AVs **3** for another service provider **5**C, which is demonstrated and displayed with the same double solid line as service provider **5**C.

Each service provider **5** can utilize an external server **10** in conjunction with a central server **9.** In this example, a ride-hail request, which is illustrated with a human and briefcase icon or visual, can be characterized as a CSR **15**A in conjunction with corresponding conveyance data and can be received, managed, operated, or a combination thereof, on or at one external server **10**A that can be associated with service provider **5**A. In this example, a service provider **5**A can utilize one external server **10**A in conjunction with a central server **9** to manage a CSR **15**A in conjunction with corresponding conveyance data and another or separate external server **10**A in conjunction with the central server **9** for managing or controlling an AV **3**A, conveyance data relating to an AV **3**A ("AV-related data"), a substantially real time geographical location of an AV **3**A, or a combination thereof. In this example, a service provider **5**A can utilize two different external servers **10**A in conjunction with a central server **9** that can manage an on-demand service provider **5**A network and match the supply of an AV **3**A for or with the demand for ride-hail requests.

A service provider **5**B can be associated with one external server **10**B in conjunction with a central server **9**, that can receive, store, standardize, aggregate, or a combination thereof, a CSR **15**B in conjunction with corresponding conveyance data. In this example, a ride-hail request, which is illustrated with a human and briefcase icon or visual, can be characterized as a CSR **15**B in conjunction with corresponding conveyance data and can be received, stored, or managed on or at one external server **10**B in conjunction with a central server **9.** In this example, a service provider **5**B does not own or control one external server **10**B in conjunction with a central server **9** to manage or operate an AV **3**B, conveyance data relating to an AV **3**B ("AV-related data"), a substantially real time geographical location of an AV **3**B, or a combination thereof, but does have direct communication to or with an AV **3**B through a central server **9**.

Both external servers **10**C in conjunction with a central server **9** can utilize a database table for pre-categorizing, categorizing, storing, organizing, or a combination thereof, all or some of CSRs **15**C in conjunction with corresponding conveyance data. In this example, a food delivery request, which is illustrated with a pizza box icon or visual, can be characterized as a CSR **15**C in conjunction with corresponding conveyance data and can be received, categorized, operated, stored, and/or organized in one external server **10**C in conjunction with a central server **9.** A ride-hail request, which is illustrated with a human and briefcase icon or visual, can be characterized as a CSR **15**C in conjunction with corresponding conveyance data and can be received, categorized, stored, operated, or organized at a separate external server **10**C in conjunction with the central server **9**. A service provider **5**C can utilize two different external servers **10**C or at least two different database tables in conjunction with a central server **9** to manage or control all or some of conveyance services based on an individual conveyance industry segment. In this example, a service provider **5**C is the only service provider **5** that can configure both external servers **10**C communicate directly with each other, as illustrated by a double solid line **52** between both external servers **10**C. In this example, a service provider **5**C can update or change a selected preference **19** or all or some of CSRs **15**C in conjunction with corresponding conveyance data that can be pre-categorized, categorized, stored, and/or organized on one external server **10**C, an external server **10**C, both external servers **10**C, a central server **9**, or a combination thereof.

A service provider **5**D or good supplier can be associated with two external servers **10**D in conjunction with a central server **9,** which can store, standardize, and/or aggregate all or some of CSRs **15**D in conjunction with corresponding conveyance data, all or some of conveyance data relating to three AVs **3**D ("AV-related data"), all or some of the substantially real time geographical location of three AVs **3**D, or a combination thereof. In this example, a courier delivery request, which is illustrated with a document icon or visual, can be characterized as a CSR **15**D in conjunction with corresponding conveyance data and can be standardized, aggregated, organized, and/or managed in one external server **10**D in conjunction with a central server **9.**

In this example, a good delivery request, which is illustrated with a package icon or visual, can be characterized as a CSR **15**D in conjunction with corresponding conveyance data and can be standardized, aggregated, organized, and/or managed on or at the same external server **10**D in conjunction with a central server **9.** In this example, a service provider **5**D or good supplier can utilize one external server **10**D or a database table in conjunction with a central server **9** to administer all or some of conveyance services based on two different conveyance industry segments. In this example, a service provider **5**D or a good supplier can utilize one external server **10**D or a database table in conjunction with a central server **9** to administer all or some of CSRs **15**D in conjunction with corresponding conveyance data. In this example, a service provider **5**D or a good supplier can utilize another or separate external server **10**D or a database table in conjunction with the central server **9** to administer all or some of AVs **3**D, all or some of conveyance data relating to three AVs **3**D ("AV-related data"), all or some of the substantially real time geographical location of three AVs **3**D, or a combination thereof. In this example, a service provider **5**D or a good supplier can utilize two different external servers **10**D in conjunction with a central server **9** to manage an on-demand delivery network with one external server **10**D facilitating all or some of the supply of AVs **3**D and the other external server **10**D facilitating all or some of the demand for conveyance services.

A service provider **5**E or a fleet manager can be associated with one external server **10**E in conjunction with a central server **9**, which can store, pre-standardize, and/or aggregate conveyance data relating to an AV **3**C ("AV-related data"), a substantially real time geographical location of an AV **3**C, or a combination thereof, that can be directly or indirectly sourced or provided by a service provider **5**C that can be associated with two external servers **10**C in conjunction with a central server **9**. In this example, a service provider **5**E or a fleet manager can utilize one external server **10**E in conjunction with a central server **9** to control or operate an AV **3**C, that can only perform all or some of conveyance services for a service provider **5**C.

Service provider **5**E or a fleet manager can optionally manage or operate an external server **10**C directly or indirectly with a central server **9**, that can be associated with a service provider **5**C. In this example, a ride-hail request, that is illustrated with a human and briefcase icon or visual, can be characterized as a CSR **15**C in conjunction with corresponding conveyance data that can be matched and secured or obtained for or with an AV **3**C through an external server **10**C, a central server **9,** one external server **10**E, or a combination thereof.

External servers **10**A, **10**B, **10**C, **10**D, and **10**E, can be connected to a central server **9** by way of a link **8.** Each link **8** can be displayed for example, with a different or unique line representing direct or indirect lines of connections between individual network participants contained therein.

A service provider **5**A can only perform ride-hail requests because service provider **5**A can only operate in the ride-hail industry segment, as evident with no other CSRs **15** associated with a service provider **5**A or an external server **10**A. A service provider **5**A can employ an AVAP **14** that can only utilize an AV **3**A to perform a conveyance service relating to a CSR **15**A. In this example, a service provider **5**A can have their own AV **3**A controlled or operated by a central server **9** in conjunction with one external server **10**And can have their own CSR **15**A controlled or operated by the central server **9** in conjunction with the other external server **10**A.

Service provider **5**A can optionally have direct or indirect communication between a central server **9** and an external server **10**A by way of a link **8.** In this example, a service provider **5**A can demonstrate a preferred system or method, or a combination thereof, when operating a closed-end or private service provider **5** network. A service provider **5** can however utilize an AVAP **14** that can allow or facilitate other AVs **3** to perform conveyance services, as evident by an AV **3**C being operated or controlled by a service provider **5**E for a service provider **5**C.

A service provider **5**B can only provide ride-hail requests because service provider **5**B can only operate in the ride-hail industry segment, as evident with no other CSRs **15** associated with service provider **5**B or external server **10**B. In this example, a service provider **5**B does have their own AV **3**B, however, service provider **5**B does not have the appropriate software or logistics to perform and execute conveyance services in an efficient manner and requires resources from a logistics provider. In this example, a service provider **5**B can access logistics to perform a conveyance service from a service provider **5**E or a fleet manager, as a service provider **5**E is also a logistics provider and can provide access to service provider's **5**E logistics capabilities for a fee. In this example, a service provider **5**B can directly contract or use an AV **3**B that can be associated with a service provider **5**B by employing an AVAP **14** that utilizes logistics from a service provider **5**E to perform a ride-hail request relating to a CSR **15**B. In this example, an AV **3**B can be illustrated as an AV **3**B that can be operated, controlled, and/or managed on other service provider **5**C and **5**D networks, as indicated with the AV **3**B having an additional **3**C and **3**D and displayed in **FIG. 10** as AV **3**B/**3**C/**3**D.

A service provider **5**C can perform a ride-hail request and a food delivery request because a service provider **5**C can operate in both the ride-hail industry segment and the food delivery industry segment, as evident with no other CSRs **15** associated with a service provider **5**C or both external servers **10**C. In this example, a service provider **5**C is the only service provider **5** that can categorize or pre-categorize all or some of CSRs **15**C in conjunction with corresponding conveyance data on two external servers **10**C or at least two database tables in conjunction with a central server **9**, based on an individual conveyance industry segment, which can improve efficiencies when a service provider **5** has the correct infrastructure, including both hardware and/or software. A service provider **5**C can access and utilize an AV **3**C through a central server **9** in conjunction with an external server **10**C to perform a conveyance service relating to a CSR **15**C, being a food delivery request.

Service provider **5**C can manage or operate an AV **3**C that can be associated with a service provider **5**C by employing an AVAP **14** to perform a food delivery request relating to a CSR **15**C. In this example, a service provider **5**C is the only service provider **5** that can own and lease out AV **3**C to a service provider **5**E or a fleet manager along with a CSR **15**C being the ride-hail request associated with an external server **10**C, in return for access to service provider's **5**E logistics. In this example, a service provider **5**C needs service provider's **5**E logistics as a service provider **5**C cannot fulfill or execute conveyance services in an efficient manner due to a greater number of CSRs **15** in multiple conveyance industry segments relative to a smaller number of AVs **3**. As a result, a service provider **5**E or a fleet manager can utilize an AVAP **14** to gain access and operate on service provider's **5**C network to perform a CSR **15**C relating to a ride-hail request.

A service provider **5**D can also be perceived or referred to as a good supplier. A service provider **5**D or a good supplier can perform a courier delivery request and a good delivery request because a service provider **5**D can operate in both, the courier industry segment and the good delivery industry segment, as evident with no other CSRs **15** associated with a service provider **5**D or an external server **10**D. In this example, a service provider **5**D or a good supplier is the only service provider **5** that can store, standardize, aggregate, manage, or a combination thereof, all or some of CSRs **15**D in conjunction with corresponding conveyance data on one external server **10**D or a database table in conjunction with a central server **9**, and the conveyance services are related to two different conveyance industry segments. In this example, a service provider **5**D or good supplier can optionally utilize at least two database tables on a central server **9** in conjunction with one external server **10**D relating to each individual conveyance industry segment.

A service provider **5**D or good supplier can directly or indirectly access and utilize all or some of the three AVs **3**D to perform conveyance services relating to both CSRs **15**D. In this example, a service provider **5**D or a good supplier is the only service provider **5** that controls or operates two different types of AVs **3**D. In this example, an AV **3**D can be connected and controlled through both external servers **10**D and a central server **9,** which is illustrated with an autonomous truck icon or visual, that can be characterized as all or some of conveyance data relating to an AV **3**D ("AV-related data"), a substantially real time geographical location of an AV **3**D, or a combination thereof, on or at one external server **10**D. In this example, an AV **3**D can be connected and controlled through one external server **10**D and a central server **9,** which is illustrated with an autonomous truck icon or visual, that can be characterized as all or some of conveyance data relating to AV **3**D ("AV-related data"), a substantially real time geographical location of an AV **3**D, or a combination thereof, on the central server **9.**

AV **3**D can be connected and controlled through one external server **10**D and a central server **9**, which is illustrated with an AV **3**D icon or visual, that can be characterized as all or some of conveyance data relating to AV **3**D ("AV-related data"), a substantially real time geographical location of an AV **3**D, or a combination thereof, on the central server **9**.

In this example, a service provider **5**D or a good supplier can employ an AVAP **14** to access and utilize the AV **3**D with a truck icon through a central server **9** in conjunction with both external servers **10**D to perform a conveyance service relating to a CSR **15**D, being a courier delivery request. In this example, a service provider **5**D or a good supplier can employ an AVAP **14** to access and utilize the AV **3**D with a truck icon through a central server **9** in conjunction with one external server **10**D to perform a conveyance service relating to a CSR **15**D, being a good delivery request. In this example, a service provider **5**D or a good supplier can employ an AVAP **14** to utilize and optionally lease time on the remaining AV **3**D through a central server **9** in conjunction with an external server **10**D to perform a conveyance service, when a service provider **5**D or good supplier has excess supply of AVs **3** or a lack of CSRs **15**.

A service provider **5**E can also be perceived or referred to as a fleet manager and as a result, a service provider **5**E or fleet manager has optimized vehicle utilization with great efficiency over time and is also a logistics provider. A service provider **5**E or a fleet manager can perform a ride-hail request and optionally a food delivery request because a service provider **5**E or a fleet manager can operate in both the ride-hail industry segment and the food delivery industry segment because a service provider **5**E or fleet manager operates on a service provider's **5**C network.

A service provider **5**E or a fleet manager is also a logistics provider and can provide logistics capabilities to a service provider **5**B for a fee. A service provider **5**E or a logistics provider can provide logistics capabilities to a service provider **5**C in exchange for operating or controlling an AV **3**C and performing a CSR **15**C, being the ride-hail request associated with an external server **10**C on service provider's **5**C network. In this example, a service provider **5**E or a fleet manager does not have their own network of AVs **3** or CSRs **15** and can employ an AVAP **14** to access and utilize service provider's **5**C network to perform a CSR **15**C relating to the ride-hail request. In this example, a service provider **5**B and a service provider **5**C can employ an AVAP **14** to access and utilize service provider's **5**E logistics capabilities to perform conveyance services.

An application **6,** an owner/controller application **11,** a central server **9**, an external server **10,** a terminal **7,** a link **8,** an AV **3,** or a combination thereof, can be combined or integrated.

### EXAMPLE 11: Identifying a Preferred Conveyance Service Request (pCSR)

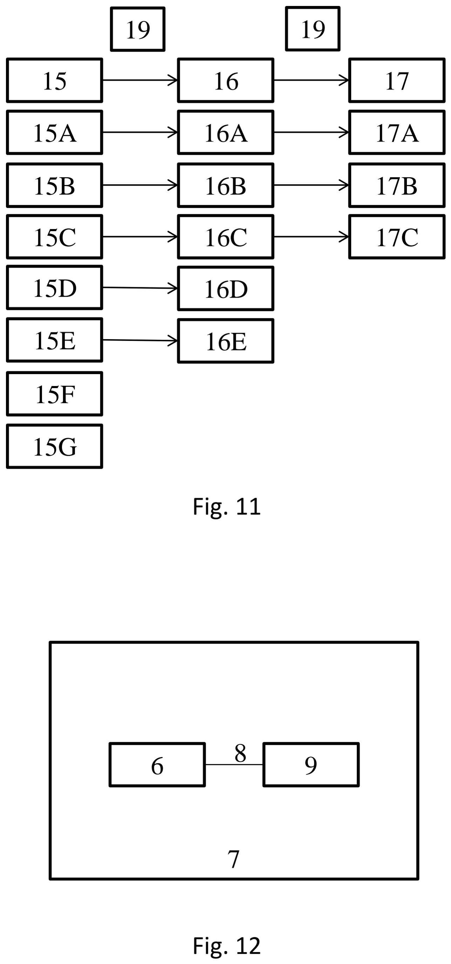

This example illustrates how to identify a preferred conveyance service request ("pCSR") of the present invention. This example describes selected features of an exemplary system, network, platform, and method of use of the inventive scheme from which a representative, an AV, an AV owner/controller, a fleet manager, a good supplier, a service provider **5,** a dispatcher, a logistics provider, a logistics supplier, or a combination thereof, can benefit. The following are steps of an exemplary method in a preferable but not required order. The following example provides an exemplary use of the AVAP or RAP. Generally, see **FIG. 11** for an exemplary system, network, platform, and method of the present invention.

**FIG. 11** illustrates an exemplary sequence for transformation of a conveyance service request ("CSR") **15** into a preferred conveyance service request ("pCSR") **17** and can be applied to any conveyance of goods or services,. Each individual CSR **15** can be displayed with a corresponding letter A, B ,C, D, E, F, and G to identify different service providers associated with each request. A selected preference **19** can be applied to filter conveyance service requests ("CSRs") **15** into filtered conveyance service requests ("fCSRs) **16.** The preferred conveyance service requests ("pCSRs") **17** can be identified from the fCSRs **16** by utilizing a selected preference **19.** Both CSRs **15**F and **15**G do not match or satisfy a selected preference **19** and therefore do not become fCSRs **16.** The fCSRs **16, 16**A, **16**B, **16**C, **16**D, and **16**E can be sorted relating to a selected preference **19** and as a result both fCSRs **16**D and **16**E do not become pCSRs **17.** The fCSRs **16, 16**A, **16**B, and **16**C become pCSRs **17, 17**A, **17**B, and **17**C. All or some of AV-related data can be filtered into a filtered subset of AV-related data and can be identified as preferred AV-related data in a same or a similar process to filter and identify a CSR **15** into a pCSR **17.** A link **8** can be a connection or an association with a software function or a software component relating to an application **6,** an owner/controller application, a terminal **7,** a central server **9,** an external server **10,** or a combination thereof.

### EXAMPLE 12: Integration of Hardware & Software

In this example, an embodiment of the present invention is described for integrating hardware and software. This example describes selected features of an exemplary system, network, platform, and method of use of the inventive scheme from which a representative, an AV, an AV owner/controller, a fleet manager, a good supplier, a service provider **5,** a dispatcher, a logistics provider, a logistics supplier, or a combination thereof, can benefit. Numerical references refer to those in the figures. The following example provides an exemplary use of the AVAP or RAP. Generally, see **FIG. 12** for an exemplary system, network, platform, and method of the present invention.

**FIG. 12** provides a high-level diagram showing an exemplary integration of hardware and software. An application **6,** a central server **9,** a terminal **7,** a link **8,** or a combination thereof, can be combined or integrated. An application **6,** a central server **9,** a link **8,** or a combination thereof, can be combined or integrated on a terminal **7.** An application **6,** a central server **9,** a link **8,** or a combination thereof, can be combined or integrated on a terminal **7** associated with an AV **3.** A link **8** can be a connection or an association with a software function or a software component relating to an application **6,** an owner/controller application **11,** an AV **3,** a terminal **7,** a central server **9,** an external server **10,** or a combination thereof.

The following detailed description of invention and examples of terms and concepts used herein for securing a preferred conveyance service request ("pCSR") and performing a conveyance service within the conveyance industry. The system and method include but is not limited to the following hardware, software, parties, automated platforms, and some information involved in securing a pCSR within the conveyance industry.
Near Real Time or Real Time: The following are illustrative, non-limiting examples and embodiments of "substantially real time" or "near real time" as used in the invention disclosure:
Near real time can for example pertain to a delay introduced, by automated data processing, between at least one occurrence of an event and a use of the processed data. Near real time can refer to the timeliness of data or information, which can be delayed by the time required for electronic communication and automatic data processing. Near real time can imply no significant delays. Real time or near real time can refer to the highest level of development or state of the art. Real time or near real time can be in substantially real time or in substantially near real time.

A real time or near real time can be in or similar to real time. A real time or near real time can depict at least one event or at least one situation as it existed at the current time less the processing time. At least one function of a platform, a network, a system, a method, or a combination thereof, can be performed in real time or near real time. A real time or near real time geographical location of an AV or an AV fleet can be updated in real time or near real time.
Conveyance Client: The following are illustrative, non-limiting examples and embodiments of a "conveyance client" as used in the present disclosure:
A conveyance client can be but is not limited to a person, an entity, a robot, a machine, or a combination thereof, that can for example receive or request a conveyance service. A conveyance client does not have to be a consumer of a conveyance service. A conveyance client can perform at least one function in real time or near real time being updated or refreshed in the highest level of development or state of the art.

A conveyance client can, for example, input or generate a conveyance service request ("CSR"), which can become a filtered conveyance service request ("fCSR") and/or a preferred conveyance service request ("pCSR") for or with a representative, an AV, an AV owner/controller, a service provider, a good supplier, a fleet manager, a logistics provider, a logistics supplier, or a combination thereof.

To provide a few examples, a conveyance client can be a passenger in the ride-hail industry segment, a consumer of a good in the food delivery industry segment, and a consumer of freight in the freight delivery industry segment. A conveyance client can analyze or evaluate all or some of conveyance data relating to an AV ("AV-related data"). The conveyance client can utilize a front end application relating to an Automated Platform to analyze or evaluate all or some of AV-related data operating for or with an AV owner/controller, a service provider, a good supplier, a fleet manager, a logistics provider, a logistics supplier, or a combination thereof. A conveyance client can benefit from an an improved system, an improved method, or a combination thereof, relating to the present invention.
Service Provider: The following are illustrative, non-limiting examples and embodiments of a "service provider" as used in the present disclosure:
A service provider can be for example an entity or a business that can retain or contract with a representative, an AV, an AV owner/controller, a good supplier, a fleet manager, a logistics provider, a logistics supplier, or a combination thereof, to provide a conveyance service. A service provider can facilitate a conveyance service between a representative, an AV, an AV owner/controller, a good supplier, a fleet manager, a conveyance client, a logistics provider, a logistics supplier, or a combination thereof. A service provider can be an entity or a business that can for example provide or perform a service, a delivery service, or a combination thereof. A service provider can own, operate, or control an AV.

A service provider, via at least one external server, can be a source or provider of a conveyance service request ("CSR") with corresponding conveyance data, AV-related data, a real time or near real time geographical location of an AV, or a combination thereof, relating to at least one conveyance industry segment. A service provider can for example utilize at least one external server that can be a source or provider of a CSR with corresponding conveyance data, an AV, all or some of AV-related data, all or some of real time or near real time geographical location of an AV, any data or information related to an AV, or a combination thereof, relating to at least one conveyance industry segment.

A service provider can operate, own, or control an AV. A service provider can operate, own, or control an AV on behalf of a third party. A service provider can operate, own, or control a network to facilitate a conveyance service in at least one conveyance industry segment. A service provider can operate, own, or control an AV on at least one network. A service provider can operate, own, or control an AV on at least one other network. A service provider can operate, own, or control an AV on behalf of a third party on a network. A service provider can be for example an entity or a business that can retain or contract with including but not limited an AV fleet to provide a conveyance service. A service provider can retain or contract an AV fleet in at least one conveyance industry segment. A service provider can use the AVAP to control or operate an AV fleet. A service supplier can have different types of vehicles for different types of occasions. A service provider can own, operate, or control an AV fleet. A service provider can own, operate, or control an AV fleet on a network. A service provider can own, operate, or control an AV fleet on at least one other network. A service provider can own, operate, or control an AV fleet on behalf of a third party on at least one network.

A service provider can use a RAP or an AVAP to facilitate, operate, or manage a conveyance service. A service provider can use the RAP or AVAP to control or operate an AV. A service provider can use the RAP or AVAP to secure or obtain a pCSR for or with an AV that can be identified as preferred ("preferred AV-related data"), an AV, or a combination thereof. A service provider or the like can input or provide a selected preference into an owner/controller application, being a computer program and a selected preference can be transmitted to a central server, an external server, an application, or a combination thereof. A service provider can use the AVAP, the RAP, or a combination thereof, to facilitate, operate, perform, or the like, a conveyance service in at least one conveyance industry segment.

A service provider can use a central server, an external server, an application, an owner/controller application, or a combination thereof, to facilitate and perform a conveyance service. A service provider can operate in at least one conveyance industry segment. A service provider can independently control or operate a conveyance network of a representative, an AV, a good supplier, a fleet manager, a logistics provider, a logistics supplier, a conveyance client, an AV owner/controller, or a combination thereof. A service provider can optionally be perceived or referred to as an AV owner/controller. A service provider can utilize Information Technology infrastructure relating to a service provider, a good supplier, an AV owner/controller, a fleet manager, a logistics provider, a logistics supplier, or a combination thereof. A service provider can perform at least one function in substantially real time or near real time being updated or refreshed in the highest level of development or state of the art. A service provider can accept or decline a pCSR, an AV that can be identified as preferred ("preferred AV-related data"), or a combination thereof.

A service provider can be but is not limited to a vehicle that can have or utilize a designated locker, or the like, that can be a good supplier or an AV. A service provider can be but is not limited to a vehicle that can have or utilize a compartment, or the like, that can be a mobile good supplier, a mobile AV, a mobile store front, a last mile delivery vehicle, a mobile logistics provider, a mobile logistics supplier, or a combination thereof.

The service provider can be but is not limited to a controller of a rideshare service, a ride-hail service, a car-share service, a taxi service, a shuttle service, a person delivery service, a food delivery service, a good delivery service, an animal delivery service, a medical service and/or delivery, a courier service, an item delivery service, a freight delivery service, a peer-to-peer conveyance service, a transportation service, or a combination thereof.

A service provider can operate in at least one individual conveyance industry segment. A service provider can be a source or provider of all or some of a CSR in conjunction with corresponding conveyance data, all or some of AV-related data, all or some of an AV, all or some of a substantially real time geographical location of an AV, all or some of AV-related data relating to an AV fleet, all or some of an AV fleet, all or some of a substantially real time geographical location of an AV fleet, or a combination thereof. A service provider can utilize an external server that can be a source or provider of all or some of an AV fleet, all or some of AV-related data relating to an AV fleet, all or some of a substantially real time geographical location of an AV fleet, any data or information related to an AV fleet, or a combination thereof, relating to a conveyance industry segment. A service provider can have or utilize an API that can provide all or some of a CSR with corresponding conveyance data, all or some of AV-related data, all or some of a real time or near real time geographical location of an AV, all or some of AV-related data relating to an AV fleet, all or some of a substantially real time geographical location of AV fleet, or a combination thereof. A service provider can have or generate all or some of conveyance data.

A service provider can operate or control an AV for or on behalf of an OEM or an auto manufacturer to provide a conveyance service. A service provider can control or operate an AV or an AV fleet for or on behalf of an OEM on at least one network that can operate in at least one conveyance industry segment. A service provider can utilize an external server for or with at least one conveyance industry segment. A service provider can lease or sublease an AV. A service provider can lease or sublease an AV fleet. A service provider can lease or sublease an AV or an AV fleet from at least one third party.
Good Supplier: The following are illustrative, non-limiting examples and embodiments of a "good supplier" as used in the present disclosure:
A good supplier can be an entity or a business that can provide or supply a good, an article, a thing, an item, or a combination thereof, to be conveyed in a conveyance service. A good supplier can be for example an entity or a business that can provide or supply a service, a delivery service, or a combination thereof. A good supplier can be an entity or a business that provides or supplies a service, a delivery service, or a combination thereof. A good supplier can own, operate, or control an AV. A good supplier can operate for or with or on behalf a service provider or an an individual service provider. A good supplier can be perceived or referred to as a service provider. A good supplier can be perceived or referred to as an AV, an AV fleet, a representative, a service provider, a fleet manager, an AV owner/controller, a logistics provider, a logistics supplier, or a combination thereof. A good supplier can accept or decline a pCSR, an AV that can be identified as preferred, or a combination thereof. A good supplier can perform at least one function in substantially real time being updated or refreshed in the highest level of development or state of the art. A good supplier can accept or decline a pCSR.

A good supplier can be an entity or a business that can retain or contract with one or more of a representative, an AV, an AV owner/controller, a service provider, a fleet manager, a logistics provider, a logistics supplier, a map provider, a third party, or a combination thereof, to provide a conveyance service. A good supplier can facilitate a conveyance service between one or more of a representative, an AV, an AV owner/controller, a service provider, a fleet manager, a logistics provider, a logistics supplier, a client, a map provider, a third party, or a combination thereof.

A good supplier, via at least one external server, can be a source or provider of a CSR with corresponding conveyance data, AV-related data, a substantially real time geographical location of an AV, or a combination thereof, relating to a conveyance industry segment. A good supplier can for example utilize at least one external server that can be a source or provider of a CSR with corresponding conveyance data, an AV, all or some of AV-related data, all or some of a substantially real time geographical location of an AV, any data or information related to an AV, or a combination thereof, relating to a conveyance industry segment. A good supplier can be a source or a provider of all or some of a CSR in conjunction with corresponding conveyance data, all or some of AV-related data, all or some of an AV, all or some of a substantially real time geographical location of an AV, all or some of conveyance data relating to an AV fleet, all or some of an AV fleet, all or some of a substantially real time geographical location of an AV fleet, or a combination thereof. A good supplier can have or generate all or some of conveyance data. A good supplier can have or utilize an API that can provide all or some of a CSR with corresponding conveyance data, all or some of AV-related data, all or some of a real time geographical location of an AV, all or some of conveyance data relating to an AV fleet, all or some of a real time geographical location of an AV fleet, or a combination thereof. A good supplier can for example utilize an external server that can be a source or a provider of all or some of an AV fleet, all or some of conveyance data relating to an AV fleet, all or some of a real time geographical location of an AV fleet, any data or information related an AV fleet, or a combination thereof.

A good supplier can operate, own, or control an AV. A good supplier can operate, own, or control an AV on behalf of a third party. A good supplier can operate, own, or control a network to facilitate a conveyance service in a conveyance industry segment. A good supplier can operate, own, or control an AV on a network. A good supplier can operate, own, or control an AV on another network. A good supplier can operate, own, or control an AV on behalf of a third party on a network. A good supplier can be for example an entity or a business that can retain or contract with including but not limited an AV fleet to provide a conveyance service. A good supplier can retain or contract an AV fleet in a conveyance industry segment. A good supplier can use an AVAP to control or operate an AV fleet. A good supplier can own, operate, or control an AV fleet. A good supplier can own, operate, or control an AV fleet on a network. A good supplier can own, operate, or control an AV fleet on another network. A good supplier can own, operate, or control an AV fleet on behalf of a third party on a network.

A good supplier can use a RAP or an AVAP to facilitate, operate, or manage a conveyance service. A good supplier can use an AVAP to control or operate an AV. A good supplier can use an AVAP to secure a pCSR for or with an AV that can be identified as preferred, an AV, or a combination thereof. A good supplier can input or provide a selected preference into an owner/controller application, being a website and a selected preference can be transmitted to a central server, an external server, an application, or a combination thereof. A good supplier can use an AVAP Automated Platform, a RAP, or a combination thereof, to facilitate, operate, and/or perform a conveyance service in a conveyance industry segment.

A good supplier can use a central server, an external server, an application, an owner/controller application, or a combination thereof, to facilitate and perform a conveyance service. A good supplier can operate in at least one conveyance industry segment. A good supplier can independently control or operate a conveyance network of a representative, an AV, a service provider, a fleet manager, a logistics provider, a logistics supplier, a conveyance client, an AV owner/controller, or a combination thereof. A good supplier can optionally be perceived or referred to as an AV owner/controller. A good supplier can utilize Information Technology infrastructure relating to a good supplier, a service provider, an AV owner/controller, a fleet manager, a logistics provider, a logistics supplier, or a combination thereof.

A good supplier can be but is not limited to a vehicle that can have or utilize a designated locker that can be a service provider or an AV. A good supplier can be but is not limited to a vehicle that can have or utilize a compartment that can be a mobile service provider, a mobile AV, a mobile store front, a last mile delivery vehicle, a mobile logistics provider, a mobile logistics supplier, or a combination thereof. A good supplier can be a food truck. A good supplier can be an entity that produces or supplies freight. A good supplier can operate in an individual conveyance industry segment. A good supplier can be a source or a provider of a CSR. A good supplier can provide or perform a conveyance service relating to a food item.

A good supplier can be a controller of but is not limited to a food delivery service, a good delivery service, an animal delivery service, a medical service and/or delivery, a courier service, an item delivery service, a freight delivery service, a peer-to-peer conveyance service, a delivery service, a transportation service, or a combination thereof.

A good supplier can operate or control an AV for or on behalf of an OEM or an auto manufacturer to provide a conveyance service. A good supplier can control or operate an AV or an AV fleet for or on behalf of an OEM on a network that can operate in a conveyance industry segment. A good supplier can utilize an external server for a conveyance industry segment. A good supplier can lease or sublease an AV. A good supplier can lease or sublease a fleet of AVs. A good supplier can lease or sublease an AV or a fleet of AVs from a third party.
Representative: The following are illustrative, non-limiting examples and embodiments of a "representative" as used in the present disclosure:
A representative can be a person, an entity, a robot, or a machine, that can secure a pCSR, a fCSR, a CSR, or a combination thereof. A representative can provide or perform a conveyance service of one or more of a person, a good, an article, a thing, an item, a conveyance client, or a combination thereof. A representative can be retained by or contracted with a service provider, a good supplier, an AV owner/controller, a fleet manager, a logistics provider, a logistics supplier, or a combination thereof. A representative can be an entity or a person that can provide or perform a service, a delivery service, or a combination thereof. A representative can own, operate, or control an AV.

A representative can, at any time, sign on and/or sign off of one or more of a service provider network, an AV owner/controller, a fleet manager network, a logistics provider network, a logistics supplier network, an application, a central server, an external server, or a combination thereof. A representative can sign in to one or more of a service provider network, a fleet manager network, an AV owner/controller network, a logistics provider network, a logistics supplier network, a central server, an external server, or a combination thereof. Once a beginning service geographical location, an ending service geographical location, pricing information, or a combination thereof, is known, a conveyance service offering ("CSO") can be generated.

A representative can input or provide a representative preference to be used to filter a CSR. A representative can input or provide a representative preference used to identify one or more of a pCSR, a fCSR, or a combination thereof. A representative can use RAP, AVAP, or a combination thereof, to facilitate, operate, or perform a conveyance service in a conveyance industry segment.

A representative can use an application to access a service provider network, a good supplier network, an owner/controller of an AV network, a fleet manager network, a logistics provider network, a logistics supplier network, or a combination thereof, via including a terminal, a central server, an external server, an application, or a combination thereof, to facilitate a conveyance service. A representative can provide a conveyance service in a conveyance industry segment. A representative can provide a conveyance service for a service provider, a good supplier, an AV owner/controller, a fleet manager, a logistics provider, a logistics supplier, or a combination thereof. A representative can use Information Technology infrastructure relating to one or more of a service provider, a good supplier, an AV owner/controller, a fleet manager, a logistics provider, a logistics supplier, or a combination thereof. A representative can perform a function in substantially real time or substantially near real time being updated or refreshed in the highest level of development or state of the art.

A RAP can secure or obtain a pCSR for a representative. A representative can utilize the RAP to secure or obtain a proposed or recommended CSR other than a pCSR. A representative can accept or decline a pCSR when using the RAP. A representative can secure or obtain a fCSR other than a pCSR. A representative can accept or decline a pCSR using an application, a central server, an external server, or a combination thereof.

A representative can be perceived or referred to as a service provider when utilizing an AV. A representative can be perceived or referred to as an AV owner/controller when utilizing an AV. A representative can be perceived or referred to as an AV, an AV owner/controller, a service provider, a good supplier, a fleet manager, a logistics provider, a logistics supplier, a third party, or a combination thereof. A representative can use a visual representation such as but not limited a dynamic map, a heat map, or a combination thereof, to analyze or evaluate where a conveyance client or a pCSR can be geographically located. A representative can use an AV to perform at least one conveyance service. A representative can be perceived or referred to as a good supplier when utilizing an AV. A representative can use a scooter or a bicycle.

A representative can be an independent third party. A representative can be an independent contractor. In the ride-hail/ride-share industry segment, a representative can be a driver. In the food delivery industry segment, a representative can be a driver picking up a food item and dropping a food item off to a conveyance client. In the courier industry segment, a representative can be a person picking up and dropping off a good, a thing, an article, or a combination thereof. A representative can provide a conveyance service in an individual conveyance industry segment. A representative can provide a conveyance service for an individual service provider.

A representative can utilize or perform a function of a visual representation the same or similar as a conveyance client. A representative can be managed or operated with an AV or a fleet of AVs to perform a conveyance service. A service provider, a fleet manager, a logistics provider, a logistics supplier, or the like, can use a representative, an AV, an AVAP, or a RAP to manage, operate, or perform a conveyance service in a conveyance industry segment. A representative can have or generate all or some of conveyance data.

A representative can perform all or some of a conveyance service. A representative can perform all or some of a conveyance service in conjunction with an AV. A representative can perform part of a conveyance service and an AV can perform another part of a conveyance service. A representative can perform part of a conveyance service during a waypoint and an AV can perform another part of a conveyance service. A representative can pick up food and put the food in an AV to be delivered. A representative can order food and put the food in an AV to be delivered. A representative can put food in an AV, such as a drone, to be delivered. A representative can put food in an AV, such as a ground vehicle to be delivered. A representative can be perceived as or similar to a scooter, a scooter service, a bicycle, or a bicycle service.
Autonomous Vehicle (AV): The following are illustrative, non-limiting examples and embodiments of an "autonomous vehicle (AV)" as used in the present disclosure:
An AV can be but is not limited to a machine, a robot, or a car that performs or provides a conveyance service. An AV can be perceived as an entity or a business that can provide or perform a service, a delivery service, or a combination thereof. An AV can be, for example, a self-governing machine, a self-maneuvering machine, or a self-driving machine, or the like, that can be used to convey or transport a person, a good, a thing, an article, an item, a conveyance client, or a combination thereof, from one geographical location to another geographical location.

When an AV is considered, an AV that can be filtered ("filtered subset of AV-related data"), an AV that can be identified as preferred ("preferred AV-related data"), or a combination thereof, can also be considered. When all or some of a substantially real time geographical location of an AV is considered, all or some of a substantially real time geographical location of an AV that can be filtered ("filtered subset of AV-related data"), all or some of a substantially real time geographical location of an AV that can be identified as preferred ("preferred AV-related data"), or a combination thereof, can also be considered.

An AV can communicate with an AV owner/controller, a service provider, a good supplier, a fleet manager, a logistics provider, a logistics supplier, a conveyance client, a representative, or a combination thereof, using a link between a central server, an external server, an owner/controller application, an application, or a combination thereof. An AV can sign in to a network of a service provider, an AV owner/controller, a good supplier, a fleet manager, a logistics provider, a logistics supplier, a central server, an application, an external server, an owner/controller application, or a combination thereof. Once a beginning service geographical location, an ending service geographical location, pricing information, or a combination thereof, is known, a conveyance service offering relating to an AV can be generated. An AV can provide or perform a conveyance service for a conveyance client or an entity.

An AV can be partially autonomous, or semi-autonomous, or the like. An AV can be characterized by different levels of autonomy corresponding to the Society of Automotive Engineers' levels (SAE) adopted by the National Highway Traffic Safety Administration for automated driving systems, ranging from complete human driver control to full autonomy. An AV can include hardware and/or software alone or in a combination. An AV can utilize or be associated with a terminal, an application, a link, a central server, an external server, an owner/controller application, or a combination thereof.
An AV can perform a function in real time or near real time being updated or refreshed in the highest level of development or state of the art.

An AV can for example communicate a CSR with corresponding conveyance data, a fCSR in conjunction with corresponding conveyance data, a pCSR with corresponding conveyance data, all or some of conveyance data relating to an AV ("AV-related data"), all or some of filtered conveyance data relating to an AV ("filtered subset of AV-related data"), all or some of preferred conveyance data relating to an AV ("preferred AV-related data"), all or some of a substantially real time geographical location of an AV, a selected preference, or a combination thereof, to or with a central server, an external server, a terminal, an application, an owner/controller application, or a combination thereof, relating to an AV owner/controller, a service provider, a good supplier, a fleet manager, a logistics provider, a logistics supplier, or the like.

An AV can provide or perform a conveyance service in at least one conveyance industry segment. An AV can provide or perform a conveyance service relating to a service provider, an AV owner/controller, a good supplier, a fleet manager, a logistics provider, a logistics supplier, or a combination thereof, operating in at least one conveyance industry segment.

An AV can be controlled or operated by a service provider, a good supplier, a fleet manager, a logistics provider, a logistics supplier, an AV owner/controller, an individual, a third party, or the like, operating in a conveyance industry segment. An AV can be accessed, utilized, controlled, or operated remotely by, for example, a service provider, an AV owner/controller, a good supplier, a logistics provider, a logistics supplier, a fleet manager, or the like, utilizing a central server, an external server, an application, an owner/controller application, or a combination thereof, by way of or with a link. An application or an owner/controller application can operate on or control a terminal that can be associated with an AV and can interface with at least one AV function. A selected preference can be used to secure a pCSR, a fCSR, or a combination thereof, for or with an AV or an AV that can be identified as preferred.

An AV can be sourced or provided by a service provider, a good supplier, a fleet manager, a logistics provider, a logistics supplier, an AV owner/controller, or a combination thereof. All or some of conveyance data relating to an AV can be sourced or provided by an external server that can be associated with a service provider, a good supplier, a fleet manager, a logistics provider, a logistics supplier, an AV owner/controller, or a combination thereof.

An AV can have or generate all or some of AV-related data. An AV can have or be associated with all or some of AV-related data. An AV that can be filtered can have or be associated with all or some of filtered conveyance data relating to an AV ("filtered subset of AV-related data"). An AV that can be identified as preferred can have or be associated with all or some of preferred conveyance data relating to an AV ("preferred AV-related data"). An AV can communicate all or some of information or data with a central server, an external server, an application, an owner/controller application, an AV, or a combination thereof.

An AVAP can secure or obtain a pCSR for or with an AV, an AV that can be filtered, an AV that can be identified as preferred, or a combination thereof. An AVAP can secure or obtain an AV, an AV that can be filtered, an AV that can be identified as preferred, or a combination thereof, for or with a pCSR. An AV can utilize an AVAP to secure or obtain a proposed or recommended CSR other than a pCSR. An AV can be utilized with an AVAP to secure or obtain a proposed or recommended an AV other than an AV can be identified as preferred. An AV can be geofenced when utilized, operated, or controlled by or with an AVAP.

An AV can utilize machine learning technology or the like to analyze and then secure a pCSR or propose or recommend a different CSR other than a pCSR. An AV can utilize machine learning technology or the like to evaluate and then secure or obtain an AV that can be identified as preferred or propose or recommend a different AV other than an AV that can be identified as preferred. An AV can utilize machine learning technology or the like to facilitate a conveyance service. An AV can utilize machine learning technology to communicate with another AV.

An AV can be but is not limited to a vehicle that can have or utilize a designated locker. An AV can be but is not limited to a vehicle that can have or utilize a designated locker that can be a service provider or a good supplier. An AV can be but is not limited to a vehicle that can have or utilize a compartment that can be a mobile service provider, a mobile good supplier, a mobile store front, a last mile delivery vehicle, a mobile logistics provider, a mobile logistics supplier, or a combination thereof.

An AV can be but is not limited to a car, an automobile, a van, a delivery van, a delivery vehicle, a last mile delivery vehicle, a vehicle that can have or utilize a locker, a vehicle that can have or utilize a storage unit, a vehicle that can have or utilize a compartment, a RV, a truck, a delivery truck, a semi-trailer truck, a shuttle, a helicopter, a boat, a vessel, an aircraft, a spacecraft, a bus, a train, a wagon, a rickshaw, a scooter, a bike, a moped, a trike, an all-terrain vehicle, an eighteen wheeler, a transportation machine, a drone, a medical vehicle, or a combination thereof.

An AV can be a machine, a robot, a car, or the like that can perform a conveyance service without the aid of a human driver. An AV can secure or obtain a fCSR other than a pCSR. An AV, an AV owner/controller, or a combination thereof, can secure or obtain an AV that can be filtered other than an AV that can be identified as preferred. An AV can be owned or controlled by a service provider, an entity, a business, an individual, an AV owner/controller, a good supplier, a fleet manager, a third party, a logistics provider, a logistics supplier, or a combination thereof.

A terminal associated with an AV can be accessed, utilized, controlled, or operated by an application or an owner/controller application through an In-Vehicle infotainment, an interface, a touchscreen, a keypad, a heads up display, a voice recognition, a voice control, or a combination thereof. A terminal associated with an AV can have an input source such as a touchscreen, a keypad, a voice recognition, a voice control, a heads up display, an In-Vehicle infotainment system, or the like.

A terminal can be for example an AV that can be utilized to combine or integrate an application, an owner/controller application, a central server, an external server, a terminal, a link, or a combination thereof. An application, an owner/controller application, an AV, a terminal, a central server, an external server, a link, or a combination thereof, can be combined or integrated.

An AV can be perceived or referred to as a representative, a service provider, a good supplier, an AV owner/controller, a fleet manager, a third party, a logistics provider, a logistics supplier, or a combination thereof. An AV can accept or decline a pCSR using an application, a central server, an external server, an owner/controller application, or a combination thereof.

An AV can be used to convey freight from a geographical location to another geographical location. An AV can perform a conveyance service while an AV owner/controller is at work. An AV can be used for a medical service and delivery. An AV can provide a conveyance service in an individual conveyance industry segment. An AV can provide a conveyance service relating to an individual service provider. An AV can be a tuk-tuk, a remorque, or a rickshaw. An AV can be characterized as level 0, level 1, level 2, level 3, level 4, and level 5 autonomy in accordance with the Society of Automotive Engineers' levels (SAE).

An AV can be but is not limited to a delivery van, a delivery vehicle, a van with a locker, storage unit or compartment, or a combination thereof, that can transport or convey a delivery item or a delivery good. An AV can be a delivery vehicle that can transport or convey a good or perform or provide a service that can operate on a sidewalk, a bike lane, or the like.

When an AV is updated in substantially real time or near real time, a physical real time or near real time geographical location of an AV can be updated in real time or near real time. When an AV is updated in substantially real time or near real time, a physical substantially real time or near real time geographical location of an AV as well as a digital representation can be updated in substantially real time or near real time. A physical AV can be updated in substantially real time or near real time as well as a digital representation on a visual representation, an infotainment, an application, a central server, an owner/controller application, or a combination thereof.

When an AV is considered, at least one fleet of AVs or an AV fleet can also be considered. An AV can be part of an AV fleet. When an AV fleet is considered, an AV fleet that can be filtered, an AV fleet that can be identified as preferred, or a combination thereof, can also be considered. An AV can be perceived as or referred to as a fleet of AVs, an AV fleet, or a combination thereof.

An AV can be controlled or operated by more than one service provider, more than one good supplier, more than one fleet manager, more than one AV owner/controller, more than one logistics provider, more than one logistics supplier, or the like, operating in a conveyance industry segment. An AV can be controlled or operated by an OEM operating in a conveyance industry segment. An AV can be owned by an OEM and controlled or operated by a service provider operating in at least one conveyance industry segment. An AV or an AV fleet can be controlled or operated by a fleet manager. An AV can be owned by an OEM and controlled or operated by a fleet manager operating in at least one conveyance industry segment. An AV can be owned by an OEM and controlled or operated by a third party operating in a conveyance industry segment. An AV can be utilized by a service provider to facilitate a conveyance service for or on behalf of a good supplier. An AV or an AV fleet can be controlled or operated by an AV owner/controller.

An AV can be controlled or operated by a logistics provider, a logistics supplier, or a combination thereof. An AV owner/controller, a service provider, a good supplier, a fleet manager, a logistics provider, a logistics supplier, or a combination thereof, can control or operate an AV for a third party. A third party can control or operate an AV for an AV owner/controller, a service provider, a good supplier, a fleet manager, a logistics provider, a logistics supplier, or a combination thereof.

An AV can have or generate all or some of conveyance data relating to an AV relating to an AV sensor or the like. An AV can have or generate all or some of conveyance data relating to an AV battery level or the like. All or some of conveyance data relating to an AV can be all or some data relating to one AV or an AV fleet. Conveyance data relating to an AV can include a substantially real time or near real time geographical location of an AV, a fleet of AVs, an AV fleet, or a combination thereof. An AV can generate all or some of conveyance data relating to an AV that can be stored or cached on an application associated with an AV.

When an AV is considered, all or some of conveyance data relating to an AV ("AV-related data") can also be considered. When an AV that can be filtered is considered, all or some of filtered conveyance data relating to an AV ("filtered subset of AV-related data") can also be considered. When an AV that can be identified as preferred is considered, all or some of preferred conveyance data relating to an AV ("preferred AV-related data") can also be considered. An AV can be utilized by or with an AVAP, a RAP, or a combination thereof, to facilitate, operate, and/or perform a conveyance service in a conveyance industry segment.
AV Owner/Controller: The following are illustrative, non-limiting examples and embodiments of an "AV Owner/Controller" as used in the present disclosure:
An AV owner/controller can be a person, an entity, a robot, a machine, or a combination thereof, that can for example own, operate, or control an AV used to provide a conveyance service for a conveyance client. An AV owner/controller can be an entity or a person that can for example provide or perform a service, a delivery service, or a combination thereof. An AV owner/controller can own, operate, or control an AV. An AV owner/controller can analyze or evaluate and then secure a preferred conveyance service request ("pCSR") for or with an AV, an AV that can be identified as preferred ("preferred AV-related data"), or a combination thereof.

An AV owner/controller can for example retain, contract with, or be a representative, an AV, a service provider, a good supplier, a fleet manager, a logistics provider, a logistics supplier, or a combination thereof, to provide a conveyance service. An AV owner/controller can facilitate a conveyance service between a representative, an AV, a service provider, a good supplier, a fleet manager, a conveyance client, a logistics provider, a logistics supplier, or a combination thereof.

An AV owner/controller can for example have or be associated with an external server that can be a source or a provider of a CSR with corresponding conveyance data, an AV, all or some of conveyance data relating to an AV, all or some of a substantially real time or near real time geographical location of an AV, any data or information related to an AV, or a combination thereof, relating to a conveyance industry segment.

An AV owner/controller can operate, own, or control one or more AV. An AV owner/controller can operate, own, or control an AV on behalf of a third party. An AV owner/controller can operate, own, or control a network to facilitate a conveyance service in at least one conveyance industry segment. An AV owner/controller can operate, own, or control an AV on at least one network or on another network. An AV owner/controller can operate, own, or control an AV on behalf of a third party on a network.

An AV owner/controller can use an AVAP to facilitate, operate, or manage a conveyance service. An AV owner/controller can use an AVAP to control or operate an AV. An AV owner/controller can use an AVAP to secure or obtain a pCSR for or with an AV that can be identified as preferred ("preferred AV-related data"), an AV, or a combination thereof.

An AV owner/controller can use a central server, an external server, an application, an owner/controller application, or a combination thereof, to facilitate and perform a conveyance service. An AV owner/controller can independently control or operate a conveyance network of a representative, an AV, a good supplier, a fleet manager, a logistics provider, a logistics supplier, a conveyance client, a service provider, or a combination thereof. An AV owner/controller can use an application or an owner/controller application to access a service provider network or the like via a terminal, a central server, an external server, or a combination thereof, to facilitate a conveyance service.

An AV owner/controller can use an owner/controller application or an application or to analyze and then secure a pCSR for or with an AV that can be identified as preferred, an AV, or a combination thereof. An AV owner/controller can identify an AV or an AV that can be identified as preferred, to be secured or obtained for or with a pCSR.

An AV owner/controller can at any time sign on and/or sign off of a network of a service provider, a good supplier, a fleet manager, a logistics provider, a logistics supplier, a central server, an external server, an owner/controller application, or a combination thereof. An AV owner/controller can use Information Technology infrastructure relating to a service provider, a good supplier, a fleet manager, a logistics provider, a logistics supplier, a third party, or a combination thereof.

An AV owner/controller can operate in a conveyance industry segment. An AV owner/controller can optionally be perceived or referred to as a fleet manager or an independent third party operating in at least one conveyance industry segment. An AV owner/controller can be a private individual person. An AV owner/controller can accept or decline a pCSR, an AV that can be identified as preferred, or a combination thereof.

An AV owner/controller can work for or be associated with a service provider, a good supplier, a fleet manager, a logistics provider, a logistics supplier, a third party, or a combination thereof. An AV owner/controller can control or operate an AV in at least one conveyance industry segment. An AV owner/controller can control or operate an AV relating to a service provider, a good supplier, a fleet manager, a logistics provider, a logistics supplier, or a combination thereof. An AV owner/controller can perform a function in substantially real time or near real time being updated or refreshed in the highest level of development or state of the art.

An AV owner/controller can input or provide a selected preference into an owner/controller application, an application, a central server, or a combination thereof. An AV owner/controller can input or provide a selected preference to be used to filter a CSR for an AV. An AV owner/controller can input or provide a selected preference used to identify a pCSR, a fCSR, or a combination thereof. An AV owner/controller can input or provide a selected preference to be used to filter all or some of AV-related data. An AV owner/controller can input or provide a selected preference used to identify an AV that can be filtered, all or some of filtered subset of AV-related data, an AV that can be identified as preferred, all or some of preferred AV-related data, or a combination thereof.

An AV owner/controller can for example filter two variables when utilizing an AVAP if desired, being a CSR and an AV, using a selected preference. An AV owner/controller can for example identify two preferred variables when utilizing an AVAP if desired, being a pCSR, an AV that can be identified as preferred, all or some of preferred conveyance data relating to an AV ("preferred AV-related data"), or a combination thereof, using a selected preference.

An AVAP can secure a pCSR, an AV that can be identified as preferred ("preferred AV-related data"), or a combination thereof, for an AV owner/controller. An AV owner/controller can utilize an AVAP to secure a proposed or recommended different CSR other than a pCSR. An AV owner/controller can utilize an AVAP to secure a proposed or recommended different AV other than an AV can be identified as preferred. An AV owner/controller can accept or decline a pCSR when using an AVAP. An AV owner/controller can use an AVAP to identify and secure a pCSR for or with an AV, an AV that can be identified as preferred, or a combination thereof.

Examples of an AV owner/controller include an entity operating one or more of a rideshare service, a ride-hail service, a car-share service, a taxi service, a shuttle service, a person delivery service, a food delivery service, a good delivery service, an animal delivery service, a medical service and/or delivery, a courier service, an item delivery service, a freight delivery service, a peer-to-peer conveyance service, a delivery service, or a transportation service.

An AV owner/controller can be perceived or referred to as a fleet manager, a service provider, a good supplier, a logistics provider, a logistics supplier, a third party, an AV, an AV fleet, or a combination thereof. An AV owner/controller can be a private AV owner/controller.

An AV owner/controller can operate in an individual conveyance industry segment. An AV owner/controller control or operate an AV relating to an individual service provider or the like. AV owner/controller can be a source or a provider of all or some of a CSR in conjunction with corresponding conveyance data, all or some of conveyance data relating to an AV ("AV-related data), all or some of an AV, all or some of a substantially real time geographical location of an AV, all or some of conveyance data relating to an AV fleet, all or some of an AV fleet, all or some of a substantially real time geographical location of an AV fleet, or a combination thereof.

An AV owner/controller can have or utilize an API that can provide all or some of a CSR with corresponding conveyance data, all or some of AV-related data, all or some of a substantially real time geographical location of an AV, all or some of conveyance data relating to an AV fleet, all or some of a substantially real time geographical location of AV fleet, or a combination thereof.

An AV owner/controller can operate or control an AV for or on behalf of an OEM or an auto manufacturer to provide a conveyance service. An AV owner/controller can control or operate an AV or a fleet of AVs for or on behalf of an OEM on a network that can operate in at least one conveyance industry segment. An AV owner/controller can control or operate an AV or an AV fleet for or on behalf of an OEM on a service provider network that can operate in at least one conveyance industry segment. An AV owner/controller can utilize an external server for or with at least one conveyance industry segment. An AV owner/controller can lease or sublease an AV or an AV fleet. An AV owner/controller can lease or sublease an AV or an AV fleet from a third party. An AV owner/controller can be a lessee of an AV or an AV fleet. An AV owner/controller can be for example an entity or a business that can retain or contract with including but not limited an AV fleet to provide a conveyance service. An AV owner/controller can retain or contract an AV fleet in a conveyance industry segment. An AV owner/controller can use an AVAP to control or operate an AV fleet. An AV owner/controller can own, operate, or control an AV fleet. An AV owner/controller can own, operate, or control an AV fleet on one or more networks. An AV owner/controller can own, operate, or control an AV fleet on behalf of a third party on a network.

An AV owner/controller can secure a fCSR other than a pCSR. An AV owner/controller can secure an AV that can be filtered other than an AV that can be identified as preferred . An AV owner/controller can accept or decline a pCSR using an owner/controller application, an application, a central server, an external server, or a combination thereof.

An AV owner/controller can for example utilize an external server that can be a source or a provider of all or some of an AV fleet, all or some of conveyance data relating to an AV fleet, all or some of a substantially real time geographical location of AV fleet, any data or information related to an AV fleet, or a combination thereof, relating to a conveyance industry segment.

An AV owner/controller can input or provide a selected preference into an owner/controller application, being a computer program, and a selected preference can be transmitted to a central server, an application, or a combination thereof. An AV owner/controller can use an AVAP, a RAP, or a combination thereof, to facilitate, operate, or perform a conveyance service in at least one conveyance industry segment.

An AV owner/controller can identify an AV that can be identified as preferred, that can be waiting the longest to perform a conveyance service and secure a pCSR for or with an AV that can be identified as preferred ("preferred AV-related data"). An AV owner/controller can identify an AV that is not performing as expected and secure a pCSR for or with an AV that can be identified as preferred, an AV, or a combination thereof. An AV owner/controller can identify an AV fleet that can be moved towards a football stadium to perform a conveyance service when a game ends.
Representative Automated Platform (RAP): The following are illustrative, non-limiting examples and embodiments of a "representative automated platform (RAP)" as used in the present disclosure:
A RAP can be a system and/or a method that can for example facilitate an operation or a function to secure a pCSR. A RAP can be a system and/or method that can be utilized or operated by a service provider, a good supplier, a fleet manager, a logistics provider, a fleet manager, a dispatcher, representative, or a combination thereof.

A RAP can utilize a rules based approach. A RAP can utilize a rules based system, a rules based method, or a combination thereof. A RAP can be a software as a service (SaaS). A RAP can be a subscription service. A RAP can optimize vehicle utilization for or with a representative, a service provider, a good supplier, a fleet manager, a dispatcher, a logistics provider, a logistics supplier, a representative, or a combination thereof. A RAP can be updated or refreshed in substantially real time or near real time and can refer to being updated or refreshed in the highest level of development or state of the art. A RAP can perform a function in substantially real time and can refer to being updated or refreshed in the highest level of development or state of the art.

A RAP, automated in whole or in part, can for example analyze a conveyance service request ("CSR") relating to a representative preference and a substantially real time geographical location of a representative to secure a pCSR for a representative. Any CSR secured, obtained, or identified by a RAP can be perceived or referred to as a pCSR. A RAP can be a computer program product. A RAP can be used by a representative, a service supplier, a good supplier, a fleet manager, a dispatcher, an AV owner/controller, or a combination thereof.

A RAP can provide or identify a route or a dispatching instruction to or for an AV. A RAP can provide or identify a route or a dispatching instruction to or for an AV owner/controller, a service provider, a good supplier, a fleet manager, a logistics provider, a logistics supplier, or a combination thereof. A RAP can have an entity, a person, an entity, or a computer manage logistics on a backend system, a frontend system, or a combination thereof. A pCSR can be secured or obtained and can be displayed to a representative. A RAP can secure a subsequent or additional pCSR after a first pCSR is secured or obtained.

A RAP can have or be utilized from a perspective. A RAP can have or be utilized from a different perspective. A RAP can have or be utilized from a perspective at the same time. A RAP can have or be utilized from a perspective relating to an AV owner/controller, a representative, a service provider, a good supplier, a fleet manager, a logistics provider, a logistics supplier. A RAP can implement or utilize machine learning technology. A RAP can implement or utilize machine learning technology to evaluate information or data sourced or provided by an input source.

A RAP, when automated in part, can allow a representative to use an application or a central server to analyze or evaluate and then secure a pCSR. A pCSR in conjunction with corresponding conveyance data, a fCSR in conjunction with corresponding conveyance data, or a combination thereof, can be transmitted from a central server to an application and displayed as a pop-up, an icon, a visual, a symbol, a pattern, a marker, a notification, an alert, a message, a short message service, a multimedia messaging service, a smart messaging service, or an extended message service. A representative can accept or decline a pCSR, a fCSR, or a combination thereof, that can be displayed on an application. If a representative declines a pCSR or a fCSR, a new or different pCSR or a new or different fCSR can be identified by a RAP and displayed.

A RAP can secure a pCSR provided or sourced by a service provider, an external server, a central server, or a combination thereof. A RAP can secure a pCSR in a conveyance industry segment. A RAP can secure, for a representative, a subsequent or additional pCSR in a different conveyance industry segment. A RAP can secure a pCSR relating to a service provider. A RAP can update a pCSR, a fCSR, a CSR, or a combination thereof, in substantially real time as a substantially real time geographical location of a representative changes or updates. A RAP can identify and secure a new or different pCSR as a substantially real time geographical location of a representative updates or changes. A RAP can update a pCSR, a fCSR, a CSR, or a combination thereof, as traffic information updates.

A RAP can repeatedly or continuously analyze or evaluate a CSR in substantially real time and secure a subsequent or additional pCSR while a representative performs a conveyance service and a substantially real time geographical location of a representative updates or changes. A RAP can update or notify a representative while performing a conveyance service of a direction, a route, a conveyance client, a CSR, a fCSR, a pCSR, a beginning service geographical location, an ending service geographical location, traffic information, or a combination thereof. A RAP can update or change an order of which a conveyance service is to be performed by repeatedly or continuously analyzing or evaluating in substantially real time a CSR, a fCSR, a pCSR, a substantially real time geographical location of a representative, a representative preference, or a combination thereof. A RAP can unsecure or cancel a secured or obtained pCSR or a secured or obtained fCSR.

A RAP can use machine learning technology to propose or recommend and optionally secure a pCSR, a fCSR, a CSR, or a combination thereof. A RAP can propose or recommend a different CSR other than a pCSR based on a historical conveyance service, a historical pattern, a trend of a representative, the current substantially real time environment, a substantially real time geographical location of a representative, a representative preference, a different representative preference, a different representative preference, or a combination thereof. A representative can rank a representative preference for a RAP to make a proposal or recommendation. A RAP can propose, recommend, or notify a representative of an alternative or a different CSR in addition to or replacement of a pCSR. A proposal or recommendation of a different CSR can assist a representative perform an additional CSR. Any proposed or recommended a CSR by a RAP that is secured or obtained can be identified as a pCSR.

A pCSR, a fCSR, or a CSR can be secured or obtained without any interaction with a representative. A RAP can secure a pCSR in an individual conveyance industry segment. A RAP can secure a pCSR relating to an individual service provider.

A RAP can secure a fCSR or a CSR other than a pCSR. A RAP can update or notify a representative of a pCSR identified by a central server, an application, or a combination thereof, that can be accepted or declined by a representative. A different CSR can be accepted or selected by a representative other than a pCSR identified by a RAP.

A secured or obtained conveyance service can be performed at the same time or during the same or similar trip. A RAP can create and/or optimize a route of a pCSR based on a representative preference, a substantially real time geographical location of a representative, or a combination thereof. A RAP can show a pCSR on a visual representation, an application, a central server, or a combination thereof. A RAP can utilize an application, a terminal, a central server, an external server, a link, or a combination thereof, that can be combined or integrated.

A RAP can unsecure or cancel a secured or obtained pCSR or a secured or obtained fCSR if a better pCSR or a better fCSR becomes available for example in substantially real time.

A RAP can propose or recommend a different CSR in another geographical location or other area based on a historical conveyance service. A RAP can propose or recommend a pCSR, a fCSR, a CSR, or a combination thereof, based on elevated pricing when a representative has chosen a specific conveyance industry segment preference and a level of service preference as a representative preference and a pricing preference not being a representative preference. An application can propose or recommend a different CSR other than a pCSR.

A RAP can automatically secure a pCSR after a pop-up or a notification has had a given amount of time elapse. A representative can accept or decline a pCSR identified by a RAP by swiping or using another gesture on an application. A RAP can utilize a neural network. A RAP can utilize quantum computing. A RAP can display a pCSR or a fCSR and a representative can secure a pCSR or a fCSR. More than one pCSR can be secured concurrently for a representative.

An AV owner/controller, a service provider, a good supplier, a fleet manager, a logistics provider, a logistics supplier, or a combination thereof, can utilize a RAP in conjunction with an AVAP to facilitate or perform a conveyance service. A representative can perform all or some of a conveyance service utilizing a RAP. A representative can perform all or some of a conveyance service in conjunction with an AV utilizing a RAP, an AVAP, or a combination thereof. A representative can perform part of a conveyance service and an AV can perform another part of a conveyance service utilizing a RAP, an AVAP, or a combination thereof.
Autonomous Vehicle Automated Platform (AVAP): The following are illustrative, non-limiting examples and embodiments of an "autonomous vehicle automated platform (AVAP)" as used in the present disclosure:
An AVAP, automated in whole or in part, can be a system and/or a method that can facilitate an operation to secure a pCSR, an AV that can be identified as preferred ("preferred AV-related data"), or a combination thereof. An AVAP, automated in whole or in part, can be a system and/or a method that can for example be utilized or operated by an AV owner/controller, a service provider, a good supplier, a fleet manager, a logistics provider, a logistics supplier, a dispatcher, a representative, an AV, or a combination thereof. An AVAP can optimize vehicle utilization for or with an AV owner/controller, a service provider, a good supplier, a fleet manager, a dispatcher, a representative, a logistics provider, a logistics supplier, or a combination thereof.

An AVAP can be a computer program product. An AVAP can utilize a rules based approach. An AVAP can utilize a rules based system, a rules based method, or a combination thereof. An AVAP can be a software as a service (SaaS). An AVAP can be a subscription service.

An AVAP can manage, control, or operate an AV. An AVAP, automated in whole or in part, can for example analyze or evaluate a CSR relating to a selected preference and a substantially real time geographical location of an AV to secure a pCSR for or with an AV, an AV that can be identified as preferred, or a combination thereof. When a pCSR is secured or obtained for or with an AV, an AV that can be identified as preferred can also be considered. Any CSR secured, obtained, or identified by an AVAP can be perceived or referred to as a pCSR.

An AVAP, automated in whole or in part, can for example analyze or evaluate all or some of conveyance data relating to an AV ("AV-related data") relating to a selected preference and a substantially real time geographical location of an AV to secure an AV, an AV that can be identified as preferred ("preferred AV-related data"), or a combination thereof, for or with a pCSR. When an AV is considered, an AV that can be filtered ("filtered subset of AV-related data"), an AV that can be identified as preferred ("preferred AV-related data"), or a combination thereof, can also be considered. Any an AV secured, obtained, or identified by an AVAP can be perceived or referred to as an AV that can be identified as preferred ("preferred AV-related data").

An AVAP can provide or identify a route or a dispatching instruction to or for an AV. An AVAP can provide or identify a route or a dispatching instruction to or for an AV owner/controller, a service provider, a good supplier, a fleet manager, a dispatcher, a representative, a logistics provider, a logistics supplier, or a combination thereof. An AVAP can be used by an AV owner/controller, an AV, a service provider, a good supplier, a fleet manager, a dispatcher, a representative, a logistics provider, a logistics supplier, or a combination thereof.

An AVAP can have or be utilized from a perspective. An AVAP can have or be utilized from a different perspective. An AVAP can have or be utilized from a perspective at the same time. An AVAP can have or be utilized from a perspective relating to an AV owner/controller, a service provider, a good supplier, a fleet manager, a dispatcher, a representative, a logistics provider, or a logistics supplier. An AVAP can optimize fleet performance and can control or operate an AV in an efficient manner. An AVAP can optimize fleet performance by taking perspective from a single AV to a fleet of AVs. An AVAP can single out or identify an AV that may be underperforming and enhance a selected preference for that AV, to increase a likelihood of securing or obtaining a pCSR for the underperforming AV.

An AVAP can have an entity, a person, an entity, or a computer manage logistics for an AV owner/controller, an AV, a service provider, a good supplier, a fleet manager, a dispatcher, a representative, a logistics provider, a logistics supplier, or a combination thereof. An AVAP can have an entity, a person, an entity, or a computer manage logistics on a backend system, a frontend system, or a combination thereof.

An AVAP can secure a pCSR, an AV, an AV that can be identified as preferred ("preferred AV-related data"), or a combination thereof, relating to a service provider, an AV owner/controller, a good supplier, a fleet manager, a dispatcher, a representative, a logistics provider, or a logistics supplier. A pCSR can be secured for or with an AV, an AV that can be identified as preferred ("preferred AV-related data"), or a combination thereof. An AVAP can secure a subsequent or additional pCSR after a first pCSR is secured for or with an AV, an AV that can be identified as preferred ("preferred AV-related data"), or a combination thereof.

An AVAP can secure a pCSR, an AV, an AV that can be identified as preferred ("preferred AV-related data"), or a combination thereof, provided or sourced by a service provider, a good supplier, a fleet manager, a logistics provider, a logistics supplier, a dispatcher, an AV owner/controller, an external server, a central server, an application, an owner/controller application, or a combination thereof. An AVAP can secure a pCSR, an AV, an AV that can be identified as preferred ("preferred AV-related data"), or a combination thereof, in a conveyance industry segment. An AVAP can secure, for an AV or an AV that can be identified as preferred ("preferred AV-related data"), a subsequent or additional pCSR in a different conveyance industry segment. An AVAP can secure a subsequent or additional pCSR in a different conveyance industry segment for or with an AV that is identified as preferred.

An AVAP can secure a pCSR, an AV, an AV that can be identified as preferred ("preferred AV-related data"), or a combination thereof, on or at a central server, an external server, an application, an owner/controller application, or a combination thereof. An AVAP can secure a pCSR on a central server and secure an AV that can be identified as preferred ("preferred AV-related data") on another central server. An AVAP can secure another a pCSR for an AV that can be identified as preferred if the previously secured or obtained a pCSR is rejected or not available.

An AVAP can manage, operate, or control a fleet of AVs for or with a service provider, an AV owner/controller, a good supplier, a fleet manager, a dispatcher, a representative, a logistics provider, or a logistics supplier. An AVAP can facilitate all or some of a conveyance service. An AVAP can facilitate part of a conveyance service and contract out another part of a conveyance service. An AVAP can be utilized with a RAP to facilitate a conveyance service. An AVAP can use a unique identifier or a unique number to manage, operate, or control an AV.

An AVAP can update a pCSR, a fCSR, a CSR, all or some of conveyance data relating to an AV ("AV-related data"), all or some of filtered conveyance data relating to an AV ("filtered subset of AV-related data"), all or some of preferred conveyance data relating to an AV ("preferred AV-related data"), or a combination thereof, in substantially real time as all or some of a substantially real time geographical location of an AV changes or updates. An AVAP can identify and secure a new or different pCSR or a new or different AV that can be identified as preferred ("preferred AV-related data"), as all or some of a substantially real time geographical location of an AV updates or changes. An AVAP can update a pCSR, a fCSR, a CSR, all or some of AV-related data, all or some of filtered subset of AV-related data, all or some of preferred AV-related data, or a combination thereof, as traffic information updates.

An AVAP can be updated or refreshed in substantially real time and can refer to being updated or refreshed in the highest level of development or state of the art. An AVAP can perform a function in substantially real time and can refer to being updated or refreshed in the highest level of development or state of the art. An AVAP can use a selected preference to enable only a pCSR to be secured or obtained for or with an AV that can be identified as preferred ("preferred AV-related data"). An AVAP can apply a selected preference to enable only an AV that can be identified as preferred ("preferred AV-related data") to be secured or obtained for or with a pCSR.

An AVAP can repeatedly or continuously analyze or evaluate a CSR in substantially real time and secure a subsequent or additional pCSR while an AV performs or provides a conveyance service and all or some of a substantially real time geographical location of an AV updates or changes. An AVAP can repeatedly or continuously analyze or evaluate an AV or all or some of conveyance data ("AV-related data") relating to an AV in substantially real time and secure a subsequent or additional pCSR while an AV or an AV that can be identified as preferred ("preferred AV-related data"), performs or provides a conveyance service and all or some of a substantially real time geographical location of an AV updates or changes.

The AVAP can update or notify an AV or an AV owner/controller while performing a conveyance service of a direction, a route, a conveyance client, a CSR, a fCSR, a pCSR, a beginning service geographical location, an ending service geographical location, traffic information, all or some of AV-related data, all or some of filtered subset of AV-related data, all or some of preferred AV-related data, or a combination thereof.

An AVAP can update or change an order of which a conveyance service is to be performed by repeatedly or continuously analyzing or evaluating, in substantially real time, a CSR, a fCSR, a pCSR, all or some of AV-related data, all or some of filtered subset of AV-related data, all or some of preferred AV-related data, a substantially real time geographical location of an AV, a selected preference, or a combination thereof.

An AVAP can unsecure or cancel a secured or obtained pCSR or a secured or obtained fCSR. An AVAP can unsecure or cancel a CSR, a fCSR, a pCSR, all or some of AV-related data, all or some of filtered subset of AV-related data, all or some of preferred AV-related data, an AV, an AV that can be filtered, an AV that can be identified as preferred, or a combination thereof.

An AVAP can unsecure or cancel a CSR, a fCSR, a pCSR, all or some of AV-related data, all or some of filtered subset of AV-related data, all or some of preferred AV-related data, an AV, an AV that can be filtered, an AV that can be identified as preferred, or a combination thereof, on a central server, an external server, an application, an owner/controller application, or a combination thereof.

The AVAP can utilize machine learning technology for a number of different functions including to analyze or evaluate information or data sourced or provided by an input source, to propose or recommend and, optionally, secure a pCSR, a fCSR, a CSR, an AV that can be identified as preferred ("preferred AV-related data"), an AV that can be filtered, an AV, or a combination thereof. An AV owner/controller, a service provider, a good supplier, a representative, a dispatcher, a fleet manager, a logistics provider, or a logistics supplier can rank a selected preference for an AVAP to make a proposal or recommendation.

An AVAP can propose or recommend a different CSR other than a pCSR based on a historical conveyance service, a historical pattern, a trend of an AV, the current substantially real time environment, a substantially real time geographical location of an AV, a selected preference, a different selected preference, a different combination of a selected preference, or a combination thereof. An AVAP can propose or recommend a different AV other than an AV that can be identified as preferred ("preferred AV-related data").

An AVAP can propose, recommend, or notify an AV, an AV owner/controller, a service provider, a good supplier, a fleet manager, a dispatcher, a representative, a logistics provider, a logistics supplier, or a combination thereof, of an alternative or a different CSR in addition to or replacement of a pCSR. A proposal or recommendation of a different CSR can assist an AV owner/controller, an AV, a service provider, a good supplier, a fleet manager, a dispatcher, a representative, a logistics provider, a logistics supplier, or a combination thereof, perform or provide an additional CSR. Any proposed or recommended CSR by an AVAP that is secured or obtained can be identified as a pCSR. Any proposed or recommended AV by an AVAP that is secured or obtained can be identified as an AV that can be identified as preferred ("preferred AV-related data").

An AVAP, when automated in part, can allow an AV owner/controller or a service provider to use an application, an owner/controller application, a central server, an external server, or a combination thereof, to analyze or evaluate and then secure a pCSR. A pCSR in conjunction with corresponding conveyance data, a fCSR in conjunction with corresponding conveyance data, all or some of preferred conveyance data relating to an AV ("preferred AV-related data"), all or some of filtered conveyance data relating to an AV ("filtered subset of AV-related data"), or a combination thereof, can be transmitted from a central server to an application or an owner/controller application and displayed as a pop-up, an icon, a visual, a symbol, a pattern, a marker, a notification, an alert, a message, a short message service, a multimedia messaging service, a smart messaging service, or an extended message service.

An AV owner/controller or a service provider can accept or decline a pCSR, a fCSR, all or some of preferred AV-related data, all or some of filtered subset of AV-related data, or a combination thereof, that can be displayed on an application or an owner/controller application.

If an AV owner/controller or a service provider declines a pCSR or a fCSR, a new or different pCSR or fCSR can be identified by the AVAP and displayed. If an AV owner/controller or a service provider declines an AV associated with preferred AV-related data or a filtered subset of AV-related data, a new or different AV that can be identified as preferred or filtered by the AVAP and displayed.

A pCSR, a fCSR, a CSR, an AV, an AV identified as filtered, an AV identified as preferred, or a combination thereof, can be secured or obtained without any interaction by an AV owner/controller. An AVAP can secure a pCSR for or with an AV, an AV that can be identified as preferred, or a combination thereof, in an individual conveyance industry segment. An AVAP can secure a pCSR for or with an AV, an AV that can be identified as preferred ("preferred AV-related data"), or a combination thereof, relating to an individual service provider.

An AVAP can secure a fCSR or a CSR other than a pCSR. An AVAP can secure an AV that can be filtered or an AV other than an AV that can be identified as preferred. An AVAP can update or notify an AV owner/controller or a service provider of a pCSR identified by a central server, an application, an owner/controller application, or a combination thereof, that can be accepted or declined by An AV owner/controller, or a service provider. A different CSR can be accepted or selected by an AV owner/controller or a service provider other than pCSR identified by an AVAP. A different AV can be accepted or selected by an AV owner/controller or a service provider other than an AV that can be identified as preferred that can be identified by an AVAP.

An AVAP can be used by an AV owner/controller, a service provider, a good supplier, a fleet manager, a dispatcher, a representative, a logistics provider, a logistics supplier, or a combination thereof, to facilitate a conveyance service. An AVAP can benefit a fleet manager, a service provider, a good supplier, an AV owner/controller, a dispatcher, a representative, a logistics provider, or a logistics supplier by having a third party control, manage, or operate an AV to provide or perform a conveyance service. An AVAP can benefit a third party by having a fleet manager, a service provider, a good supplier, an AV owner/controller, a logistics provider, or a logistics supplier control, manage, or operate an AV to provide or perform a conveyance service.

A secured or obtained conveyance service can be performed at the same time or during the same or similar trip. An AVAP can create and/or optimize a route of a pCSR based on a selected preference, a substantially real time geographical location of an AV, or a combination thereof. An AVAP can show a pCSR or an AV that can be identified as preferred on an owner/controller application, an application, a central server, a visual representation, or a combination thereof. An AVAP can utilize an application, an owner/controller application, an AV, a terminal, a central server, an external server, a link, or a combination thereof, that can be combined or integrated.

An AVAP can unsecure or cancel a secured or obtained pCSR or a secured or obtained fCSR if a better pCSR or a better fCSR becomes available. An AVAP can unsecure or cancel a secured or obtained AV that can be identified as preferred ("preferred AV-related data") or a secured or obtained AV that can be filtered ("filtered subset of AV-related data") if a better AV that can be identified as preferred or a better AV that can be filtered becomes available. An AVAP can unsecure or cancel an AV that can be identified as preferred if an AV that can be identified as preferred is or becomes unavailable.

An AVAP can propose or recommend a different CSR in another geographical location or other area based on a historical conveyance service. An AVAP can propose or recommend a pCSR, a fCSR, a CSR, an AV, an AV that can be filtered, an AV that can be identified as preferred ("preferred AV-related data"), or a combination thereof, based on high CSR density when an AV owner/controller has chosen a specific conveyance industry segment preference and a level of service preference as a selected preference. A central server, an application, an owner/controller application, or a combination thereof, can propose or recommend a different CSR other than a pCSR. A central server, an application, an owner/controller application, or a combination thereof, can propose or recommend a different AV other than an AV that can be identified as preferred.

An AVAP, automated in whole or in part, can be used as a tool to help a service provider, an AV owner/controller, a good supplier, a fleet manager, a logistics provider, a logistics supplier, or a combination thereof, integrate an AV to a conveyance industry segment. An AVAP can be an operating system, an operating method, a backend operating system, a backend operating method, or a combination thereof.

An AVAP can automatically secure a pCSR, an AV, an AV that can be identified as preferred ("preferred AV-related data"), or a combination thereof, after a pop-up or a notification has had a given amount of time elapse. An AV owner/controller can accept or decline a pCSR, an AV, an AV that can be identified as preferred ("preferred AV-related data"), or a combination thereof, identified by an AVAP by swiping or using another gesture on an owner/controller application or an application. An AVAP can utilize a neural network. An AVAP can utilize quantum computing. More than one pCSR can be secured or obtained concurrently for or with an AV, an AV that can be identified as preferred, or a combination thereof.

An AVAP can manage, control, or operate a fleet of AVs. An AVAP can manage, control, or operate a fleet of AVs for or with an AV owner/controller, a service provider, a good supplier, a fleet manager, a dispatcher, a representative, a logistics provider, or a logistics supplier. An AVAP can secure a pCSR for or with a fleet of AVs. An AVAP can secure a fleet of AVs that can be identified as preferred ("preferred AV-related data") for or with a pCSR.

An AVAP can assign a unique identifier or a unique number to an AV or a fleet of AVs. An AVAP can use a unique identifier or a unique number to manage, control, or operate an AV or a fleet of AVs. An AVAP can use a unique identifier or a unique number to manage, control, or operate an AV owner/controller, a service provider, a good supplier, a fleet manager, a dispatcher, a representative, a logistics provider, a logistics supplier, or a combination thereof.

An AVAP can optimize fleet performance by taking perspective from a single AV from multiple AVs. An AVAP can license or hire at least on third party to manage logistics for an AV owner/controller, a service provider, a good supplier, a dispatcher, a fleet manager, a representative, a logistics provider, a logistics supplier, or a combination thereof.

An AVAP can be utilized to manage, control, or operate a robot taxi service. An AVAP can be utilized to manage, control, or operate a food delivery service. An AVAP can be utilized to manage, control, or operate a package delivery service. An AVAP can be utilized to manage, control, or operate multiple conveyance industry segments.

An AVAP can integrate or incorporate an input source or an API, such as for example, a driving navigation application. An AVAP can use or utilize information or data from a third party API or service, such as a routing or mapping service. An AVAP can integrate or incorporate a high-definition map or a mapping provider. An AVAP can integrate information or data from a third party. An AVAP can integrate information or data from a map provider. An AVAP can improve with a "network effect."

An AV owner/controller, a service provider, a good supplier, a fleet manager, a dispatcher, a representative, a logistics provider, a logistics supplier, or a combination thereof, can utilize an AVAP in conjunction with a RAP to facilitate or perform a conveyance service. A representative can perform all or some of a conveyance service utilizing an AVAP. A representative can perform all or some of a conveyance service in conjunction with an AV utilizing an AVAP. A representative can perform part of a conveyance service and an AV can perform another part of a conveyance service utilizing an AVAP.

An AVAP can allow or ask a conveyance client or a recipient of a conveyance service to select or choose a route for a conveyance service. An AVAP can identify a pCSR and then secure an AV that can be identified as preferred ("preferred AV-related data") on a central server relating to a service provider, an AV owner/controller, a good supplier, a fleet manager, a dispatcher, a representative, a logistics provider, a logistics supplier, or a third party. An AVAP can identify a pCSR or an AV that can be identified as preferred and can be secured or obtained on another server relating to a service provider, an AV owner/controller, a good supplier, a fleet manager, a dispatcher, a representative, a logistics provider, a logistics supplier, or a third party.

An AVAP can utilize a database table to filter and identify a pCSR. An AVAP can use a database table to filter and identify an AV that can be identified as preferred ("preferred AV-related data"). An AVAP can use a database table to filter and identify a pCSR and an AV that can be identified as preferred ("preferred AV-related data").

An AVAP can identify a traffic based information, for example, a car accident and communicate a traffic based information to an AV, an AV owner/controller, a service provider, a good supplier, a fleet manager, a dispatcher, a representative, a logistics provider, a logistics supplier, an application, an owner/controller application, a central server, or a combination thereof.

An AVAP can communicate with or connect to a central server relating to an AV owner/controller, a service provider, a good supplier, a fleet manager, a dispatcher, a representative, a logistics provider, a logistics supplier, or a combination thereof. An AVAP can communicate with or connect to another central server relating to an AV owner/controller, a service provider, a good supplier, a fleet manager, a dispatcher, a representative, a logistics provider, a logistics supplier, or a combination thereof. An AVAP can communicate with or connect to three central servers, being one central server to manage, control, or operate an AVAP, one central server associated with a fleet manager, and another central server associated with a service provider.

The following are different examples of a present invention used by various parties or entities:
An independent third party can own or develop a present invention and can license all or some of a software, a Software as a service (SaaS), a subscription service, a technology, an AVAP, a RAP, a system, a method, or a combination thereof, to an OEM, where an OEM can control, manage, or operate a present invention. For example, Independent Company A can own or develop a present invention and can license an AVAP to OEM Company B, where OEM Company B can control, manage, or operate the backend logistics. Independent Company A can own or develop a present invention and can license AVAP to multiple OEM companies, where multiple OEM companies can control, manage, or operate the backend logistics.

An independent third party can own, manage, and/or operate a present invention, all or some of a software, a Software as a service (SaaS), a subscription service, a technology, an AVAP, a RAP, a system, a method, or a combination thereof, for an OEM. For example, Independent Company A can own or license an AVAP and Independent Company A can control, manage, or operate the backend logistics for OEM Company B. Independent Company A can own or license an AVAP and Independent Company A can control, manage, or operate the backend logistics for multiple OEM Companies.

An OEM can own or license a present invention, all or some of a software, a Software as a service (SaaS), a subscription service, a technology, an AVAP, a RAP, a system, a method, or a combination thereof, and an OEM can control, manage, or operate a present invention on their own OEM conveyance network. OEM Company C can own or license an AVAP, where OEM Company C can control, manage, or operate the backend logistics for their own conveyance network. OEM Company C can own or license an AVAP, where OEM Company C can control, manage, or operate the backend logistics in multiple conveyance industry segments on their own conveyance network.

An OEM can own or license a present invention, all or some of a software, a Software as a service (SaaS), a subscription service, a technology, an AVAP, a RAP, a system, a method, or a combination thereof, and an OEM can control, manage, or operate a present invention on another conveyance network. For example, OEM Company C can own or license an AVAP, where OEM Company C can control, manage, or operate the backend logistics for Service Provider Company A's conveyance network. In another example, OEM Company C can own or license an AVAP, where OEM Company C can control, manage, or operate the backend logistics for other multiple service provider's conveyance network.

A service provider can own or license the inventive platform or portion(s) thereof including all or some of the software, a Software as a service (SaaS), a subscription service, a technology, an AVAP, a RAP, a system, a method, or a combination thereof, and a service provider can control, manage, or operate a present invention on their own service provider conveyance network. In one example, Service Provider Company B can own or license an AVAP, where Service Provider Company B can control, manage, or operate the backend logistics for their own conveyance network. In another example, Service Provider Company B can own or license an AVAP where Service Provider Company B can control, manage, or operate the backend logistics in multiple conveyance industry segments on their own conveyance network.

A service provider can own or license the inventive platform or portion(s) thereof including all or some of a software, a Software as a service (SaaS), a subscription service, a technology, an AVAP, a RAP, a system, a method, or a combination thereof, and an independent third party can control, manage, or operate a present invention on the service provider conveyance network. For example, Service Provider Company C can own or license an AVAP in which Independent Company B can control, manage, or operate the backend logistics for Service Provider Company C's conveyance network. In another example, Service Provider Company C can own or license an AVAP, and Independent Company B can control, manage, or operate the backend logistics for multiple service provider conveyance networks.
Visual Representation: The following are illustrative, non-limiting examples and embodiments of "visual representation" as used in the present disclosure:
A visual representation can be a tool used to assist a representative analyze or evaluate a CSR or a CSR metric on, for example, a geographical map to secure a pCSR. A visual representation can be viewed from a perspective, a point of reference, a point of interest, or a combination thereof. A visual representation can utilize an application, an owner/controller application, an AV, a terminal, a central server, an external server, a link, or a combination thereof, that can be combined or integrated.

A visual representation can be, for example, a geographical map that can display a pCSR in conjunction with corresponding conveyance data, a fCSR in conjunction with corresponding conveyance data, a CSR in conjunction with corresponding conveyance data, a metric relating to a respective request, a selected preference, a representative preference, a substantially real time geographical location of a representative, an AV, an AV owner/controller, a service provider a good supplier, a fleet manager, a conveyance client, a logistics provider, a logistics supplier, or a combination thereof. A visual representation can be, for example, a geographical map that can display all or some of conveyance data relating to an AV ("AV-related data"), all or some of filtered conveyance data relating to an AV ("filtered subset of AV-related data"), all or some of preferred conveyance data relating to an AV ("preferred AV-related data"), or a combination thereof.

A visual representation can be, for example, a geographical map that can display a preferred conveyance service offering ("pCSO") in conjunction with corresponding conveyance data, a filtered conveyance service offering ("fCSO") in conjunction with corresponding conveyance data, a conveyance service offering ("CSO") in conjunction with corresponding conveyance data, a metric relating to a respective offering, or a combination thereof.

A visual representation can be displayed in or on an AV. A visual representation can be displayed in or on an AV to show a route or a path for an AV. A visual representation can be utilized by a conveyance client in an AV. A visual representation can have or be associated with a commercial or an advertisement. A visual representation can be an interactive map. A visual representation can be an interactive map that can be used by a conveyance client. A visual representation can be an interactive map that can be used by a conveyance client to communicate with a service provider, a good supplier, a fleet manager, an AV owner, a logistics provider, a logistics supplier, an AV, or a combination thereof. Another embodiment of the present invention includes, a pCSR in conjunction with corresponding conveyance data, all or some of fCSRs in conjunction with corresponding conveyance data, all or some of CSRs in conjunction with corresponding conveyance data, a secured or obtained pCSR, a representative preference, a substantially real time or near real time geographical location of a representative, or a combination thereof, is displayed on a remote display.

A visual representation can be displayed on an application, a central server, an owner/controller application, a remote display, or a combination thereof. A visual representation can be in any form or format, visual. A variation in the form, format, and order of a visual representation component is within the scope of the present invention. A visual representation can be updated or refreshed in substantially real time or near real time and can refer to being updated or refreshed in the highest level of development or state of the art. A visual representation can perform a function in substantially real time or near real time and can refer to being updated or refreshed in the highest level of development or state of the art.

A visual representation can display a CSR, a CSR metric, or a combination thereof, in a conveyance industry segment on a geographical map. A visual representation can be a tool that can display a CSR, a CSR metric, or a combination thereof, relating to a service provider on a geographical map. A visual representation can display a route from a representative or an AV to a beginning service geographical location and then to an ending service geographical location.

An AV owner/controller, a service provider, a good supplier, a fleet manager, a logistics provider, a logistics supplier, or a combination thereof, can be displayed on or with a visual representation that can display a level of service preference. An AV owner/controller, a service provider, a good supplier, a fleet manager, a logistics provider, a logistics supplier, or a combination thereof, can be displayed on or with a dynamic map or a heat map that can display a level of service preference. A visual representation can be a dynamic map, a substantially real time or near real time heat map, a historical heat map, a predictive heat map, or a combination thereof. A visual representation can be compiled on a third party server such as a map provider server. A visual representation can be compiled with information or data from a map provider. A representative can use a visual representation to analyze or evaluate pricing information or another metric from a service provider.

A visual representation can be used to analyze or evaluate an area on a geographical map that can show a metric relating to an individual conveyance industry segment. A visual representation can be used to analyze or evaluate an area on a geographical map that can show a metric relating to an individual service provider. A visual representation can be, for example, a geographical map that can display a substantially real time geographical location of an AV fleet.
Application: The following are illustrative, non-limiting examples and embodiments of an "application" as used in the present disclosure:
An application can be a software that can for example facilitate an operation or a function to secure a pCSR, an AV that can be identified as preferred ("preferred AV-related data"), or a combination thereof. An application can be a software that can for example be utilized or operated by an AV owner/controller, a service provider, a good supplier, a fleet manager, a dispatcher, a representative, a logistics provider, a logistics supplier, or a combination thereof. An application can be a software for example a computer application, a computer program, an API, a website, a web application, a smartphone application, a cloud application, or a service.

An application can be but is not limited to software that can for example facilitate analyzing, evaluating, securing, obtaining, accepting, declining, canceling, displaying, communicating, or a combination thereof, a pCSR in conjunction with corresponding conveyance data, all or some of preferred conveyance data relating to an AV ("preferred AV-related data"), all or some of a substantially real time geographical location of an AV, or a combination thereof. An application can be provided in any form or format, such as any appropriate tangible or intangible medium of expression but can be provided in an electronic form. An application can be associated with a central server, a link, an external server, a good supplier, an AV, an owner/controller application, a service provider, an AV owner/controller, a good supplier, a fleet manager, a dispatcher, a representative, a logistics provider, a logistics supplier, or a combination thereof.

An application can be software appropriate for communicating to or with a central server, an external server, a good supplier, an AV, a terminal, an owner/controller application, a service provider, an AV owner/controller, a good supplier, a fleet manager, a dispatcher, a representative, a logistics provider, a logistics supplier, a representative, a conveyance client, or a combination thereof. An application can operate on a terminal, a central server, an external server, or a combination thereof. An application can standardize or convert a CSR in conjunction with corresponding conveyance data, all or some of conveyance data relating to an AV ("AV-related data"), a substantially real time geographical location of an AV, or a combination thereof, structured in a different format, into a uniform format. A representative can input or provide a representative preference into an application.

An application can provide a substantially real time geographical location of a representative, a substantially real time geographical location of an AV, a substantially real time geographical location of a service provider, a substantially real time geographical location of a good supplier, a substantially real time geographical location of a fleet manager, a substantially real time geographical location of a logistics provider, a substantially real time geographical location of a logistics supplier, a substantially real time geographical location of an AV owner/controller, or a combination thereof, using a geographical location module of a terminal. An application can provide real time geographical location of a representative, conveyance client, and/or AV using a geographical location module of a terminal. An application operates on a terminal residing within an AV and interfaces with the vehicle functions. Information or data inputted or discovered by an application can be cached. An application can be updated or refreshed in substantially real time and can refer to being updated or refreshed in the highest level of development or state of the art. An application can perform a function in substantially real time and can refer to being updated or refreshed in the highest level of development or state of the art.

An application can communicate information or data all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time geographical location of an AV, a representative preference, a selected preference, a secured or obtained pCSR, a secured or obtained AV that can be identified as preferred ("preferred AV-related data"), or a combination thereof. An application can communicate all or some of information or data with a central server, an external server, an application, an owner/controller application, an AV, or a combination thereof.

An application can filter and identify all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time geographical location of an AV, a representative preference, a selected preference, a secured or obtained pCSR, a secured or obtained AV that can be identified as preferred ("preferred AV-related data"), or a combination thereof, together or separately.

An application can be a software that can for example facilitate an operation or a function to secure a CSR, a fCSR, a pCSR, an AV ("AV-related data"), an AV that can be filtered ("filtered subset of AV-related data"), an AV that can be identified as preferred ("preferred AV-related data"), or a combination thereof.

An application can be used to analyze, evaluate, secure, obtain, accept, decline, cancel, or communicate a pCSR, an AV that can be identified as preferred, all or some of preferred conveyance data relating to an AV ("preferred AV-related data"), or a combination thereof. An application can be used by a representative, an AV, a service provider, a good supplier, an AV owner/controller, a fleet manager, a dispatcher, a logistics provider, a logistics supplier, or a combination thereof. An application can be used, accessed, controlled, or operated by an AV owner/controller, a service provider, a good supplier, a fleet manager, a dispatcher, a representative, a logistics provider, a logistics supplier, or a combination thereof, to optionally analyze or evaluate and then secure a pCSR, an AV that can be identified as preferred ("preferred AV-related data"), or a combination thereof.

An application can display a visual representation. An application can display a secured or obtained pCSR, a secured or obtained AV that can be identified as preferred, all or some of preferred conveyance data relating to an AV ("preferred AV-related data"), or a combination thereof. An application can display a pCSR, an AV that can be identified as preferred, all or some of preferred AV-related data, or a combination thereof, that can be accepted or declined. An application can display conveyance data relating to a CSR, a fCSR, a pCSR, or a combination thereof. An application can display all or some of conveyance data relating to an AV ("AV-related data"), all or some of filtered conveyance data relating to an AV ("filtered subset of AV-related data"), all or some of preferred conveyance data relating to an AV ("preferred AV-related data"), or a combination thereof.

There can be a different variation of an application used by a representative, an AV, a service provider, a good supplier, an AV owner/controller, a fleet manager, a logistics provider, a logistics supplier, or a combination thereof. An application can transmit an Inertial Measurement Unit (IMU) reading of a terminal to a central server to determine an orientation or a direction of a representative, an AV, a service provider, a good supplier, an AV owner/controller, a fleet manager, a dispatcher, a logistics provider, a logistics supplier, or a combination thereof. An application can be in a form of but is not limited to a mobile application, a non-mobile application, a website, a plugin, or a combination thereof.

An application can operate on a central server, an external server, an owner/controller application, or a combination thereof. An application can perform a central server function or an external server function. An application can perform a similar function as a central server or an external server function to identify a pCSR, an AV that can be identified as preferred, all or some of preferred conveyance data relating to an AV ("preferred AV-related data"), or a combination thereof. There can be a different application used by a representative, an AV, a service provider, a good supplier, an AV owner/controller, a fleet manager, a dispatcher, a logistics provider, a logistics supplier, or a combination thereof.

A pCSR in conjunction with corresponding conveyance data, an AV that can be identified as preferred, all or some of preferred conveyance data relating to an AV ("preferred AV-related data"), or a combination thereof, can be transmitted to an application and can be displayed as a pop-up, an icon, a visual, a symbol, a pattern, a marker, a notification, an alert, a message, a short message service, a multimedia messaging service, a smart messaging service, an extended message service, or a combination thereof.

An application can secure a pCSR, a fCSR, a CSR, an AV that can be identified as preferred ("preferred AV-related data"), an AV that can be filtered ("filtered subset of AV-related data"), an AV ("AV-related data"), or a combination thereof, and can communicate directly or indirectly with a central server, an external server, an application, an owner/controller application, an AV, an AV owner/controller, a service provider, a good supplier, a fleet manager, a dispatcher, a representative, a logistics provider, a logistics supplier, a third party, or a combination thereof.

An application can secure a pCSR, a fCSR, or a combination thereof, and can communicate indirectly with an external server via a central server. An application can secure a pCSR, a fCSR, or a combination thereof, and can communicate directly with an external server, or a service provider. An application can be a service provider application.

An application can secure an AV that can be identified as preferred, an AV that can be filtered, or a combination thereof, and can communicate indirectly with an external server via a central server. An application can secure an AV that can be identified as preferred, an AV that can be filtered, or a combination thereof, and can communicate directly with an external server, or a service provider. An application can be a service provider application, an AV owner/controller application, a good supplier application, a fleet manager application, a representative application, a logistics provider application, a logistics supplier application, or a combination thereof.

One or more applications can be on or associated with an AV. Additional or multiple applications with different functions can reside on or be associated with one AV. For example, there can be two different applications on or associated with one AV, first being a dealership application allowing for vehicle maintenance and second an application integrated with a central server that facilitates conveyance services.

An application can be associated with an AV. An application can be associated with a fleet of AVs. An application can be accessed, controlled, or operated remotely by a service provider, an AV owner/controller, an AV, a good supplier, a fleet manager, a logistics provider, a logistics supplier, a representative, or a combination thereof, to optionally analyze or evaluate and then secure a pCSR and/or an AV that can be identified as preferred ("preferred AV-related data"). An application, an owner/controller application, an AV, a terminal, a central server, an external server, a link, or a combination thereof, can be combined or integrated.

A CSR or all or some of conveyance data relating to an AV ("AV-related data") can be filtered in substantially real time on an application. A pCSR can be identified in real time, from a fCSR on an application. An AV that can be identified as preferred, all or some of preferred conveyance data relating to an AV ("preferred AV-related data"), or a combination thereof, can be identified from all or some of filtered conveyance data relating to an AV ("filtered subset of AV-related data") on an application. A representative can input or provide a representative preference into or to an application.

A different geographical location can be used other than a substantially real time geographical location of a representative when filtering a CSR. A different geographical location can be used other than a substantially real time geographical location of an AV when filtering a CSR. A different geographical location can be used other than a substantially real time geographical location of an AV when filtering all or some of conveyance data relating to an AV ("AV-related data"). An application can expose or be accessed through an API relating to a service provider, an AV owner/controller, a good supplier, a fleet manager, a dispatcher, a representative, a logistics provider, a logistics supplier, or a third party.

The following are different examples of an application used by various parties:
A representative can access an application via a terminal. A representative can analyze or evaluate and then secure a pCSR. An application can be used with a RAP to secure a pCSR.

An AV can access an application via a terminal. A service provider, a good supplier, an AV owner/controller, a fleet manager, a dispatcher, a representative, a logistics provider, a logistics supplier, or a combination thereof, can analyze or evaluate and then secure a pCSR, an AV that can be identified as preferred ("preferred AV-related data"), or a combination thereof.

An AV owner/controller, a service provider, a good supplier, a fleet manager, a dispatcher, a representative, a logistics provider, a logistics supplier, a third party, or a combination thereof, can access an application to manage, control, and/or operate an AV.

An application can be used with an AVAP to secure a pCSR for or with an AV that can be identified as preferred ("preferred AV-related data"). An application can be used with an AVAP to secure an AV that can be identified as preferred ("preferred AV-related data") for or with a pCSR. An application can secure a pCSR relating to a service provider operating in a conveyance industry segment. An application can secure an AV that can be identified as preferred ("preferred AV-related data") relating to a fleet provider operating in a conveyance industry segment.
Owner/Controller Application: The following are illustrative, non-limiting examples and embodiments of an "Owner/Controller application" as used in the present disclosure:
An owner/controller application can be a software that can for example facilitate an operation or a function to secure a pCSR, an AV that can be identified as preferred ("preferred AV-related data"), or a combination thereof. An owner/controller application can be a software that can for example be utilized or operated by an AV owner/controller, a service provider, a good supplier, a fleet manager, a dispatcher, a representative, a logistics provider, a logistics supplier, or a combination thereof.

An owner/controller application can be a software for example a computer application, a computer program, an API, a website, a web application, a smartphone application, a cloud application, or a service. An owner/controller application can be software to facilitate analyzing, evaluating, securing, obtaining, accepting, declining, canceling, displaying, communicating, or a combination thereof, a pCSR in conjunction with corresponding conveyance data, all or some of preferred conveyance data relating to an AV ("preferred AV-related data"), all or some of a substantially real time geographical location of an AV, or a combination thereof, that can be used by an AV owner/controller, or a service provider. An owner/controller application can for example control or operate an AV or a fleet of AVs. An owner/controller application can be provided in any form or format, such as any appropriate tangible or intangible medium of expression but can be provided in electronic form.

An owner/controller application can be associated with a central server, an external server, a link, a good supplier, an AV, an application, a service provider, an AV owner/controller, a fleet manager, a dispatcher, a representative, a logistics provider, a logistics supplier, or a combination thereof. An AV owner/controller, a service provider, a good supplier, a fleet manager, a dispatcher, a representative, a logistics provider, a logistics supplier, or a combination thereof, can input or provide a selected preference into an owner/controller application. An owner/controller application can operate on a terminal, a central server, an external server, or a combination thereof. An owner/controller application can be used in conjunction with or in addition to an application associated with an AV. Information and/or data inputted or discovered by an owner/controller application can be cached.

An owner/controller application can be updated or refreshed in substantially real time and can refer to being updated or refreshed in the highest level of development or state of the art. An owner/controller application can perform a function in substantially real time and can refer to being updated or refreshed in the highest level of development or state of the art.

An owner/controller application can communicate information or data all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time geographical location of an AV, a representative preference, a selected preference, a secured or obtained pCSR, a secured or obtained AV that can be identified as preferred ("preferred AV-related data"). An owner/controller application can communicate all or some of information or data with a central server, an external server, an application, an owner/controller application, an AV, or a combination thereof.

An owner/controller application can filter and identify all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time geographical location of an AV, a representative preference, a selected preference, a secured or obtained pCSR, a secured or obtained AV that can be identified as preferred ("preferred AV-related data"), or a combination thereof, together or separately.

An owner/controller application can be a software that can for example facilitate an operation or a function to secure a CSR, a fCSR, a pCSR, an AV, an AV that can be filtered, an AV that can be identified as preferred ("preferred AV-related data"), or a combination thereof.

An owner/controller application can secure a pCSR, a fCSR, a CSR, an AV that can be identified as preferred, an AV that can be filtered, an AV, or a combination thereof, and can communicate directly or indirectly with a central server, an external server, an application, an owner/controller application, an AV, an AV owner/controller, a service provider, a good supplier, a fleet manager, a logistics provider, a logistics supplier, a third party, or a combination thereof.

An owner/controller application can be but is not limited to software that can for example be used to input or provide a selected preference. An owner/controller application can be used to analyze, evaluate, secure, obtain, accept, decline, cancel, or communicate a pCSR, an AV that can be identified as preferred, all or some of preferred conveyance data relating to an AV ("preferred AV-related data"), or a combination thereof. An owner/controller application can be used by a service provider, an AV, an AV owner/controller, a representative, a good supplier, a dispatcher, a fleet manager, a logistics provider, a logistics supplier, or a combination thereof, to secure a pCSR for or with an AV or an AV that can be identified as preferred ("preferred AV-related data"). An owner/controller application can be used, accessed, controlled, or operated by a service provider, a good supplier, an AV owner/controller, a fleet manager, a dispatcher, a representative, a logistics provider, a logistics supplier, or a combination thereof, remotely to secure a pCSR, an AV that can be identified as preferred ("preferred AV-related data"), or a combination thereof.

An owner/controller application can display a visual representation. An owner/controller application can display a secured or obtained pCSR, a secured or obtained AV that can be identified as preferred, all or some of preferred conveyance data relating to an AV ("preferred AV-related data"), or a combination thereof. An owner/controller application can display a pCSR, an AV that can be identified as preferred, all or some of preferred conveyance data relating to an AV ("preferred AV-related data"), or a combination thereof, that can be accepted or declined. An owner/controller application can display conveyance data relating to a CSR, a fCSR, a pCSR, or a combination thereof. An owner/controller application can display all or some of conveyance data relating to an AV ("AV-related data"), all or some of filtered conveyance data relating to an AV ("filtered subset of AV-related data"), all or some of preferred conveyance data relating to an AV ("preferred AV-related data"), or a combination thereof.

There can be different variations of an owner/controller application used by a representative, an AV, a service provider, a good supplier, an AV owner/controller, a fleet manager, a dispatcher, a logistics provider, a logistics supplier, or a combination thereof. An owner/controller application can for example control or operate a fleet of AVs. An owner/controller application can be a service provider application, an AV owner/controller application, a good supplier application, a fleet manager application, a representative application, a logistics provider application, a logistics supplier application, or a combination thereof.

A pCSR in conjunction with corresponding conveyance data, an AV that can be identified as preferred, all or some of preferred conveyance data relating to an AV ("preferred AV-related data"), or a combination thereof, can be transmitted to an owner/controller application and can be displayed as a pop-up, an icon, a visual, a symbol, a pattern, a marker, a notification, an alert, a message, a short message service, a multimedia messaging service, a smart messaging service, an extended message service, or a combination thereof.

An owner/controller application can perform a similar function as a central server, an application, or an external server, or a combination thereof, to identify a pCSR, an AV that can be identified as preferred, all or some of preferred conveyance data relating to an AV ("preferred AV-related data"), or a combination thereof. A function of a central server, an application, an external server, or a combination thereof, can be performed by an owner/controller application. An owner/controller application can operate on a central server, an application, an external server, or a combination thereof. An application, an owner/controller application, an AV, a terminal, a central server, an external server, a link, or a combination thereof, can be combined or integrated.

An owner/controller application can standardize or convert a CSR in conjunction with corresponding conveyance data, all or some of conveyance data relating to an AV ("AV-related data"), all or some of a substantially real time geographical location of an AV, or a combination thereof, structured in a different format, into a uniform format. An owner/controller application can be associated with an AV. An owner/controller application can be associated with a fleet of AVs. An owner/controller application can be in a form of but is not limited to a mobile application, a non-mobile application, a website, a plugin, or a combination thereof.

A CSR or all or some of conveyance data relating to an AV ("AV-related data") can be filtered in substantially real time on an owner/controller application. A pCSR can be identified in substantially real time, from a fCSR on an owner/controller application. An AV that can be identified as preferred, all or some of preferred conveyance data relating to an AV ("preferred AV-related data"), or a combination thereof, can be identified from all or some of filtered conveyance data relating to an AV ("filtered subset of AV-related data") on an owner/controller application.

An owner/controller application can secure a pCSR, a fCSR, or a combination thereof, and can communicate indirectly with an external server via a central server. An owner/controller application can secure a pCSR, a fCSR, or a combination thereof, and can communicate directly with an external server. An owner/controller application can secure a pCSR, a fCSR, or a combination thereof, and can communicate directly with a service provider. An owner/controller application can be a service provider application.

An owner/controller application can secure an AV that can be identified as preferred, an AV that can be filtered, or a combination thereof, and can communicate indirectly with an external server via a central server. An owner/controller application can secure an AV that can be identified as preferred, an AV that can be filtered, or a combination thereof, and can communicate directly with an external server, a service provider, an AV owner/controller, a good supplier, a fleet manager, a dispatcher, a representative, a logistics provider, or a logistics supplier.

An owner/controller application can secure a pCSR relating to a service provider operating in a conveyance industry segment. An owner/controller application can be accessed, controlled, or operated remotely by a service provider, an AV owner/controller, an AV, a good supplier, a fleet manager, a dispatcher, a logistics provider, a logistics supplier, a representative, or a combination thereof, to optionally analyze or evaluate and then secure a pCSR and/or an AV that can be identified as preferred ("preferred AV-related data"). A representative can input or provide a selected preference into or to an owner/controller application.

An owner/controller application can expose or be accessed through an API relating to a service provider, an AV owner/controller, a good supplier, a fleet manager, a dispatcher, a representative, a logistics provider, a logistics supplier, or a third party.
Terminal: The following are illustrative, non-limiting examples and embodiments of a "terminal" as used in the present disclosure:
A terminal can be a hardware that can for example facilitate at least one operation or at least one function to secure or obtain a pCSR, an AV that can be identified as preferred, or a combination thereof. A terminal can be a hardware that can for example be utilized or operated by an AV owner/controller, a service provider, a good supplier, a fleet manager, a logistics provider, a logistics supplier, or a combination thereof.

A terminal can be for example an AV that can be utilized to combine or integrate an application, an owner/controller application, a central server, an external server, a terminal, a link, or a combination thereof. A terminal can be but is not limited to a device that can for example facilitate operating an application. A terminal can for example be capable of communicating with a central server, an external server, an application, an owner/controller application, an AV, or a combination thereof, by way of a link. A terminal can be but is not limited to an electronic computing device that can include a computer processor, a computer readable memory, an input source, a geographical location module, a display, a network interface, or a combination thereof. A terminal can encompass hardware and/or software alone or in a combination. A terminal can be used to access conveyance client application and/or representative application. A terminal encompasses both hardware and software.

A terminal can be used to access an application, an owner/controller application, or a combination thereof. An application can operate on a terminal. A terminal can be associated with an AV. A operating system can run on a terminal. A terminal can facilitate a display function, an input function, an operation, or a combination thereof, of an application. An application can provide a substantially real time or near real time geographical location of a representative, an AV, a service provider, a good supplier, a fleet manager, a logistics provider, a logistics supplier, an AV owner/controller, or a combination thereof, using a geographical location module of a terminal. A terminal can be associated with a display or a remote display.

A terminal can be but is not limited to a computer, a smartphone device, a plug-in device, a mobile computing device, a handheld computing device, a tablet computing device, a laptop computing device, a wearable computing device, a portable computing device, a fixed computing device, a non-fixed computing device, a physiologically embedded computing device, a biologically integrated computing device, an In-Vehicle infotainment device, an Internet of Things (IoT) device, a projecting device, a computing device embedded in a vehicle, a head-up display, a voice recognition, a voice control, or a combination thereof.

An Inertial Measurement Unit (IMU) reading of a terminal can be used to determine an orientation or a direction of a representative, an AV, a service provider, a good supplier, a fleet manager, a logistics provider, a logistics supplier, an AV owner/controller, or a combination thereof. A geographical location module of a terminal can include but is not limited to a Global Positioning System (GPS), a satellite tracking, a RFID tracking, a radiolocation, a WiFi positioning system, a geofencing, a global system for mobile communications, a cell phone triangulation, an Internet tracking, or a combination thereof.

A central server can optionally be located on a terminal that can be associated with an AV. An owner/controller application can optionally be located on a terminal. An input source of a terminal can be but is not limited to a touchscreen, a keypad, a keyboard, a voice controlled input, or a combination thereof. A visual representation can be displayed on an application using a display of a terminal. A terminal can be embedded in or attached to an AV. A terminal can be inside or outside of an AV. A terminal can be a smartphone that can be used by a representative, a conveyance client, an AV owner/controller, a service provider, a good supplier, a fleet manager, a logistics provider, a logistics supplier, or a combination thereof.

An application, an owner/controller application, a central server, an external server, a link, an AV, or a combination thereof, can be combined or integrated on a terminal, such as a smartphone. A terminal does not need at least one physical connection to be associated or communicate with an application, an owner/controller application, a link, a terminal, a central server, an external server, an AV, or a combination thereof. A terminal can be associated with an AV fleet. A terminal, using a geographical location module of a terminal, can provide a substantially real time geographical location of an AV fleet.
Link: The following are illustrative, non-limiting examples and embodiments of a "link" as used in the present disclosure:
A link can be a software and/or a hardware that can for example facilitate at least one operation or at least one function to secure or obtain a pCSR, an AV that can be identified as preferred, or a combination thereof. A link can be a software and/or a hardware that can for example be utilized or operated by an AV owner/controller, a service provider, a good supplier, a fleet manager, a logistics provider, a logistics supplier, or a combination thereof.

A link can be for example at least one connection or at least one association with a software function, a software operation, a software component, a software module, or a combination thereof. A link can connect or be associated with at least one software function or at least one software operation. A link can connect or be associated with at least one software module. A link can include but is not limited to an electronic communication network channel. A link can be for example at least one appropriate link that can allow an efficient, rapid, accurate, or the like transmission of information or data. A link can be but is not limited to at least one combination of at least one connection between a central server, an external server, a terminal, an owner/controller application, an AV, an application, an application associated with an AV, an AV fleet, or a combination thereof. Preferably, a link between a central server, an external server, a terminal, an application, an owner/controller application, or a combination thereof, can be via the Internet, preferably secure, and can be more preferably encrypted. The definition of a link can encompass hardware and/or software alone or in a combination.

A link can communicate or provide data or information in real time or near real time and can refer to the highest level of development or state of the art. A link can be updated or refreshed in real time or near real time and can refer to being updated or refreshed in the highest level of development or state of the art. A link can perform a function in real time or near real time and can refer to being updated or refreshed in the highest level of development or state of the art.

A link can be utilized by an AV to communicate with another AV. A link can be utilized by an AV owner/controller, a service provider, a good supplier, a fleet manager, a logistics provider, a logistics supplier, or a combination thereof, to communicate all or some of conveyance data relating to an AV or a CSR in conjunction with corresponding conveyance data.

A link can be utilized by an AV owner/controller, a service provider, a good supplier, a fleet manager, a logistics provider, a logistics supplier, or a combination thereof, to facilitate a conveyance service. A link can be utilized to communicate information or data all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV, all or some of filtered conveyance data relating to an AV, all or some of conveyance data relating to an AV, all or some of a real time or near real time geographical location of an AV, a representative preference, a selected preference, a secured or obtained pCSR, a secured or obtained AV that can be identified as preferred, or the like.

A link can be any appropriate connection, such as a WiFi connection, a wireless connection, an Ethernet connection, a LTE connection, a 3G connection, a 4G connection, a 5G connection, a 6G connection, a 7G connection, a radio connection, a RFID connection, a Bluetooth connection, a BLE connection, a PAN connection, a LAN connection, a MAN connection, a WAN connection, a WLAN connection, a GSM connection, a GPRS connection, a UMTS connection, a dial-up connection, a broadband connection, a mobile connection, a DSL connection, a cable connection, a wired connection, a satellite connection, a ISDN connection, a fiber-optics connection, an infrared connection, a client-server network such as a cloud computing network connection, other appropriate methods, means, hardware and/or software capable of conveying information, or a combination thereof.

A link can be used to manage or control an AV fleet. A link can be in at least one form of at least one software interface or API. A link can connect a central server with another central server. A link can be an inter-process communication. A link can be utilized to connect to or be associated with an application, an owner/controller application, a terminal, a central server, an e external server, or a combination thereof, on one software application. A central server can connect to or communicate with an application, an owner/controller application, a terminal, a central server, an external server, or a combination thereof, on the same software application. A link can be utilized to connect to or be associated with an application, an owner/controller application, a terminal, a central server, an external server, or a combination thereof, to secure or obtain a pCSR, an AV that can be identified as preferred, or a combination thereof. A link does not need a physical connection to connect or communicate with an application, an owner/controller application, a terminal, a central server, an external server, an AV, or a combination thereof.

A link can be utilized by an AV owner/controller, a service provider, a good supplier, a fleet manager, a logistics provider, a logistics supplier, or a combination thereof, to communicate all or some of conveyance data relating to an AV, all or some of filtered conveyance data relating to an AV, all or some of preferred conveyance data relating to an AV, a CSR in conjunction with conveyance data, a fCSR in conjunction with conveyance data, a pCSR in conjunction with conveyance data, or a combination thereof, with a central server, an external server, a terminal, an owner/controller application, an AV, an application, an application associated with an AV, an application associated with an AV fleet, or a combination thereof. A link can be utilized to communicate indirectly or directly. A link can be utilized by an AV to communicate with another AV regarding a route or a traffic information in substantially real time.
Central Server: The following are illustrative, non-limiting examples and embodiments of a "central server" as used in the present disclosure:
A central server can be a software and/or a hardware that can for example facilitate at least one operation or at least one function to secure or obtain a pCSR, an AV that can be identified as preferred, or a combination thereof. A central server can be a software and/or a hardware that can for example be utilized or operated by an AV owner/controller, a service provider, a good supplier, a fleet manager, a logistics provider, a logistics supplier, a conveyance client, or a combination thereof. A central server can be a software and/or a hardware for example a computer application, a computer program, a website, a web application, a cloud application, a service, or the like.

A central server can for example facilitate at least one operation or at least one function to secure or obtain a pCSR for or with an AV, an AV that can be identified as preferred ("preferred AV-related data"), or a combination thereof. A central server can include but is not limited to a computer processor, a computer readable memory, a network interface, or a combination thereof. A central server can be but is not limited to a computer network system. A central server can encompass hardware and/or software alone or in a combination.

A central server can be used to manage or operate logistics for a service provider, a good supplier, a fleet manager, an AV owner/controller, a third party, a logistics provider, a logistics supplier, or a combination thereof. A central server can be used to control, manage, or operate an AV for a service provider, a good supplier, a fleet manager, an AV owner/controller, a third party, a logistics provider, a logistics supplier, or a combination thereof. A central server can be associated with an external server, a link, a terminal, a central server, an owner/controller application, a good supplier, an AV, an application, a service provider, a fleet manager, a logistics provider, a logistics supplier, an AV owner/controller, a representative, a conveyance client, or a combination thereof.

A central server can encompass different hardware and/or software alone or in a combination. A central server can include or connect to a database. A computer readable memory of a central server can be or include a database that a central server can use or connect to. A central server can store, retrieve, or utilize any information or data from a database, a real time database, a near real time database, a database trigger, a database table, a database row, a database column, a database result set, a database node, a database edge, a database property, a blockchain, a blockchain technology, or a combination thereof. A central server can store or retrieve any information or data in a database, a schemaless database, a graph database, a relational database, a non-relational database, a distributed database, a parallel database, or the like.

A central server can connect to or communicate with an application, an external server, a central server, an owner/controller application, a terminal, or a combination thereof, by way of a link. A central server can control a flow of information or data between an application, an owner/controller application, an external server, a central server, or a combination thereof, in either direction. A central server can be a server in an individual geographical location or an additional geographical location. A central server can relate to a single Internet location, but that need not be the case.

A central server can communicate information or data, all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time or near real time geographical location of an AV, a representative preference, a selected preference, a secured or obtained pCSR, a secured or obtained AV can be identified as preferred ("preferred AV-related data"). A central server can communicate all or some of information or data with a central server, an external server, an application, an owner/controller application, an AV, or a combination thereof.

A central server can filter and identify all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time geographical location of an AV, a representative preference, a selected preference, a secured or obtained pCSR, a secured or obtained AV that can be identified as preferred ("preferred AV-related data"), or a combination thereof, together or separately.

A central server can be a software and/or a hardware that can for example facilitate at least one operation or at least one function to secure a CSR, a fCSR, a pCSR, an AV, an AV that can be filtered, an AV that can be identified as preferred, or a combination thereof.

A central server can secure or obtain a PCSR, a fCSR, a CSR, an AV that can be identified as preferred, an AV that can be filtered, an AV, or a combination thereof, and can communicate directly or indirectly with a central server, an external server, an application, an owner/controller application, a terminal, an AV, an AV owner/controller, a service provider, a good supplier, a fleet manager, a logistics provider, a logistics supplier, a third party, or a combination thereof.

A central server can standardize or convert a CSR, all or some of conveyance data relating to an AV ("AV-related data"), all or some of a substantially real time or near real time geographical location of an AV, or a combination thereof, structured in a different format, into a uniform format. A central server can standardize all or some of CSRs, all or some of AV-related data, all or some of geographical location of an AV, or a combination thereof, using a central server. All or some of CSRs, a substantially real time geographical location of a representative, or a combination thereof, is structured in a uniform format prior to being transmitted from an external server to a central server by way of a link between an external server and a central server, and is not standardized. A central server can be a secure server. A central server can be made secure using hardware and/or software commercially available. Additionally, a central server can include encryption software such that communications entering or exiting a server are encrypted. Encryption hardware and/or software are commercially available. A central server can be updated or refreshed in substantially real time or near real time and can refer to being updated or refreshed in the highest level of development or state of the art. A central server can perform at least one function in substantially real time or near real time and can refer to being updated or refreshed in the highest level of development or state of the art. A central server can use machine learning technology to identify a pattern that can improve an AVAP, a RAP, a visual representation, or a combination thereof.

A central server can use a database, a database table, or a result set to filter a CSR. A central server can use a database, a database table, or a result set to identify a pCSR. A central server can use a database to filter all or some of conveyance data relating to an AV. A central server can use a database, a database table, or a result set to identify an AV that can be identified as preferred. A central server can use a database, a database table, or a result set, to identify all or some of preferred conveyance data relating to an AV.

A central server can filter a CSR or all or some of conveyance data relating to an AV ("AV-related data") relating to a representative preference and a substantially real time geographical location of a representative, to identify a fCSR or all or some of filtered conveyance data relating to an AV by a process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter a CSR or all or some of conveyance data relating to AV relating to a representative preference, to identify a fCSR or all or some of filtered conveyance data relating to an AV by a process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter a CSR or all or some of conveyance data relating to an AV relating to a selected preference and a substantially real time or near real time geographical location of an AV, to identify a fCSR or all or some of filtered conveyance data relating to an AV by a process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter a CSR or all or some of conveyance data relating to AV relating to a selected preference, to identify a fCSR or all or some of filtered conveyance data relating to an AV by a process of categorizing, filtering, characterizing, screening, selecting, separating, identifying, specifying, distinguishing, naming, numbering, ordering, systematizing, tagging, labeling, recognizing, arranging, bracketing, ranking, organizing, classifying, segregating, isolating, grouping, comparing, or a combination thereof.

A central server can filter and identify a pCSR first and then filter and identify an AV that can be identified as preferred, which can be matched together and secured or obtained to perform a conveyance service. A central server can filter and identify an AV that can be identified as preferred first and then filter and identify a pCSR, which can be matched together and secured or obtained to perform a conveyance service. Filtering and identifying a pCSR, an AV that can be identified as preferred, or a combination thereof, can be done in either order or either direction.

A central server can filter, categorize, or the like a CSR, all or some of conveyance data relating to an AV, all or some of a substantially real time or near real time geographical location of an AV, or a combination thereof, upon being received. A central server can filter a CSR, all or some of conveyance data relating to an AV, or a combination thereof, more than once. A central server can receive, transmit, store, standardize, aggregate, or a combination thereof, a CSR in any order prior to filtering a CSR or all or some of conveyance data relating to an AV. A central server can receive, transmit, store, standardize, aggregate, or a combination thereof, all or some of conveyance data relating to an AV or all or some of a substantially real time or near real time geographical location of an AV, in any order prior to filtering a CSR or all or some of conveyance data relating to an AV.

A central server can identify a pCSR from a fCSR or a pre-filtered CSR. A central server can identify all or some of preferred conveyance data relating to an AV from all or some of filtered conveyance data relating to an AV or all or some of pre-filtered conveyance data relating to an AV. A central server can identify an AV that can be identified as preferred from all or some of filtered conveyance data relating to an AV or all or some of pre-filtered AV-related data.

A pCSR relating to a representative preference or a selected preference can be identified from a fCSR by using a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof.

A pCSR relating to a selected preference can be identified from all or some of plurality of fCSRs, an AV that can be identified as preferred or all or some of preferred conveyance data relating to an AV, relating to a selected preference from or all or some of filtered conveyance data relating to an AV, or a combination thereof, by using a sorting algorithm, a selection algorithm, a search algorithm, a merge algorithm, a maximum function, a minimum function, a graph algorithm, a graph search algorithm, a tree algorithm, a tree search algorithm, a matrix calculation, a matrix algorithm, a comparison, or a combination thereof.

A central server can sort a fCSR or all or some of filtered conveyance data relating to an AV using a representative preference or a selected preference to identify a pCSR, an AV that can be identified as preferred, all or some of preferred AV-related data, or a combination thereof.

A central server can sort, or the like, a fCSR in an order relating to a weighted average of a representative preference to identify a pCSR. A central server can sort a fCSR in an order relating to a weighted average of a selected preference to identify a pCSR. A weighted average of a selected preference can be used to identify all or some of preferred AV-related data or an AV that can be identified as preferred from all or some of filtered conveyance data relating to an AV, a pCSR that can be identified from all or some of plurality of fCSRs, or a combination thereof.

A central server can process or facilitate a CSR, a fCSR, a pCSR, all or some of conveyance data relating to an AV, all or some of filtered conveyance data relating to an AV, all or some of preferred conveyance data relating to an AV, an AV that can be identified as preferred, or a combination thereof, relating to a service provider operating in at least one conveyance industry segment. A central server can use or have a default representative preference, a default selected preference, or a combination thereof.

When a RAP or an AVAP is used, a central server can analyze or evaluate a CSR or all or some of conveyance data relating to an AV in substantially real time or near real time. A CSR can be filtered by using a representative preference or a selected preference and a substantially real time or near real time geographical location of a representative or an AV respectively. All or some of conveyance data relating to an AV can be filtered by using a selected preference and a substantially real time or near real time geographical location of an AV.

If a CSR is pre-filtered or pre-categorized, then a CSR can be perceived or referred to as a fCSR and a central server can identify a pCSR. If all or some of conveyance data relating to an AV is pre-filtered or pre-categorized, then all or some of conveyance data relating to an AV can be perceived or referred to as all or some of filtered conveyance data relating to an AV and a central server can identify all or some of preferred conveyance data relating to an AV, an AV that can be identified as preferred, or a combination thereof.

A fCSR can be sorted relating to a weighted average of a representative preference or a selected preference, however, sorting is not required to identify a pCSR respectively. All or some of filtered conveyance data relating to an AV can be sorted relating to a weighted average of a selected preference, however, sorting is not required to identify all or some of preferred conveyance data relating to an AV, an AV that can be identified as preferred, or a combination thereof. A pCSR can be identified and then secured or obtained. An AV that can be identified as preferred, all or some of preferred conveyance data relating to an AV, or a combination thereof, can be identified and then secured or obtained.

A computer readable memory of a central server can be but is not limited to a database, a database table, a database result set, a cloud storage, a hard disk drive, a solid state drive, an optical disk drive, a flash memory, a Random Access Memory (RAM), or a tape.

A central server can include a distinct server operably linked in the same or a different geographical location. A central server can optionally be part of a terminal. A central server can optionally be part of an application or an owner/controller application. A central server can optionally be located on a terminal. An application, an owner/controller application, or a combination thereof, can optionally operate on a central server. At least one function of a central server or an external server can be performed by an application, an owner/controller application, or a combination thereof. At least one function of an application, an owner/controller application, or a combination thereof, can be performed by a central server or an external server. At least one function of a central server can be performed by an external server. A central server can include or utilize quantum computing. A central server can include or utilize a neural network. A central server can include or utilize machine learning technology. A central server can be dispersed or located across a geographical location such as Los Angeles and New York.

A central server can aggregate a CSR, all or some of conveyance data relating to an AV, or a combination thereof, within a service provider, an AV owner/controller, a good supplier, a fleet manager, a logistics provider, a logistics supplier, or a combination thereof. A central server can process or facilitate a CSR, a fCSR, a pCSR, all or some of conveyance data relating to an AV, all or some of filtered conveyance data relating to an AV, all or some of preferred conveyance data relating to an AV, an AV that can be identified as preferred, or a combination thereof, from an individual service provider relating to an individual conveyance industry segment. A central server can compile a visual representation to be transmitted to an application or an owner/controller application. A central server can control or operate a fleet of AVs. An application, an owner/controller application, an AV, a terminal, a central server, an external server, a link, or a combination thereof, can be combined or integrated.

A CSR, all or some of conveyance data relating to an AV, all or some of a substantially real time or near real time geographical location of an AV, or a combination thereof, can be transmitted from an external server to a central server by way of a link. A CSR, all or some of conveyance data relating to an AV, all or some of a substantially real time or near real time geographical location of an AV, or a combination thereof, can be transmitted from a service provider, an AV owner/controller, a good supplier, a fleet manager, a logistics provider, a logistics supplier, or a combination thereof, to a central server by way of a link. A CSR, all or some of conveyance data relating to an AV, all or some of a substantially real time or near real time geographical location of an AV, or a combination thereof, can be structured in a uniform format prior to being transmitted from an external server and is not needed to be standardized.

A central server can execute at least one function for a representative and/or an AV receiving, storing, standardizing, aggregating, filtering, and sorting, a CSR in conjunction with corresponding conveyance data, and securing or obtaining a pCSR. A central server can execute at least one function of the present invention for an AV owner/controller receiving, storing, standardizing, aggregating, filtering, and sorting, all or some of AV-related data, and securing or obtaining an AV that can be identified as preferred.

A different geographical location can be used other than a substantially real time geographical location of a representative or a substantially real time geographical location of an AV when filtering a CSR, all or some of an AV-related data, or a combination thereof.

A representative preference, a substantially real time or near real time geographical location of a representative, or a combination thereof, can be transmitted to a central server at any time prior to filtering a CSR. A selected preference, a substantially real time or near real time geographical location of an AV, all or some of conveyance data relating to an AV, or a combination thereof, can be transmitted to a central server at any time prior to filtering a CSR.

A central server can use an equal weight or an unequal weight for a representative preference when calculating a weighted average to identify a pCSR. A central server can use an equal weight or an unequal weight for a selected preference when calculating a weighted average to identify a pCSR, an AV that can be identified as preferred, all or some of preferred conveyance data relating to an AV, or a combination thereof.

When a central server receives a CSR, a central server can categorize or pre-filter a CSR. A central server can obtain or receive a pre-filtered or a pre-categorized CSR relating to a geographical area. A central server can obtain or receive a pre-filtered or a pre-categorized CSR relating to a level of service. A CSR can be pre-filtered or pre-categorized on a central server based on a geographical area. A CSR can be pre-filtered or pre-categorized on a central server based on a level of service. When a central server receives all or some of AV-related data, a central server can categorize or pre-filter all or some of AV-related data. A central server can obtain or receive all or some of a pre-filtered AV-related data, or all or some of a pre-categorized AV-related data, relating to a geographical area. A central server can obtain or receive all or some of a pre-filtered AV-related data or all or some of a pre-categorized AV-related data, relating to a level of service. All or some of conveyance data relating to an AV can be pre-filtered or pre-categorized on a central server based on a geographical area. All or some of conveyance data relating to an AV can be pre-filtered or pre-categorized on a central server based on a level of service.

A CSR or all or some of conveyance data relating to an AV ("AV-related data")can be filtered based on a representative preference, a selected preference, or a combination thereof, on a central server after being pre-filtered or pre-categorized. When a central server obtains a pre-filtered CSR, a central server can compare a pre-filtered CSR to a representative preference or a selected preference to identify a fCSR. When a central server obtains a pre-filtered AV, a central server can compare all or some of pre-filtered conveyance data relating to an AV to a selected preference to identify all or some of filtered conveyance data relating to an AV.

If a CSR is pre-filtered, then a CSR is not filtered. A pre-filtered CSR can be perceived or referred to as a fCSR. A central server can filter a CSR at least once. A central server can sort a CSR at least once to identify a pCSR. A central server can filter a CSR more than once based on a pricing preference and then a service provider preference. A CSR can be categorized by a geographical location after being received on a central server.

If all or some of AV-related data is pre-filtered, then all or some of AV-related data is not filtered. All or some of pre-filtered AV-related data can be perceived or referred to as all or some of filtered conveyance data relating to an AV. A central server can filter all or some of AV-related data at least once. A central server can sort all or some of conveyance data relating to an AV at least once, to identify an AV that can be identified as preferred, all or some of preferred conveyance data relating to an AV, or a combination thereof. A central server can filter all or some of conveyance data relating to an AV more than once based on a pricing preference and then a good supplier preference. All or some of conveyance data relating to an AV can be categorized by a geographical location after being received on a central server. All or some of pre-filtered conveyance data relating to an AV can be pre-filtered, filtered again, or a combination thereof, including all or some of a substantially real time geographical location of an AV.

A fCSR can be sorted in ascending or descending order relating to a weighted average of a representative preference or a weighted average of a selected preference to identify a pCSR. All or some of filtered conveyance data relating to an AV can be sorted in ascending or descending order relating to a weighted average of a selected preference to identify an AV that can be identified as preferred, all or some of preferred AV-related data, or a combination thereof.

A pCSR in conjunction with corresponding conveyance data, a fCSR in conjunction with corresponding conveyance data, all or some of preferred conveyance data relating to an AV, all or some of filtered conveyance data relating to an AV, all or some of conveyance data relating to an AV, or a combination thereof, can be identified or updated in substantially real time as a substantially real time geographical location of a representative or an AV updates or changes.

A pCSR in conjunction with corresponding conveyance data, all or some of plurality of fCSRs in conjunction with corresponding conveyance data, all or some of CSRs in conjunction with corresponding conveyance data, all or some of preferred conveyance data relating to an AV, all or some of filtered conveyance data relating to an AV, all or some of conveyance data relating to an AV, a representative preference, a selected preference, a secured or obtained prepCSR, a secured or obtained AV that is identified as preferred, or a combination thereof, can be identified or updated in substantially real time or near real time as traffic information updates or changes.

A central server can secure a pCSR, a fCSR, an AV that can be identified as preferred, an AV that can be filtered, or a combination thereof, and can communicate directly with an external server, a central server, a service provider, an AV owner/controller, a good supplier, a fleet manager, a logistics provider, a logistics supplier, or a combination thereof.

A secured or obtained pCSR or a secured or obtained AV that can be identified as preferred, can be sent to a service provider, an external server, a central server, a good supplier, a fleet manager, a logistics provider, a logistics supplier, an AV owner/controller, an owner/controller application, an application, an AV, a representative, a conveyance client, or a combination thereof.

A central server can be used to manage logistics on the front-end or back-end for a service provider, a good supplier, a fleet manager, an AV owner/controller, a third party, a logistics provider, a logistics supplier, or the like. A central server can be used to control or operate an AV on the front-end or back-end for a service provider, a good supplier, a fleet manager, an AV owner/controller, a third party, a logistics provider, a logistics supplier, or a combination thereof. A central server can be used by a fleet manager to manage logistics on the back-end for a service provider. A central server can be used by a service provider to manage logistics on the back-end for an OEM or an auto manufacturer. A central server can be used by a service provider to manage logistics on the back-end for a fleet of AVs. A central server can be used by an AV owner/controller to manage logistics for a private owner of an AV. A central server can be used by an AV owner/controller to manage logistics for a fleet manager.

A central server can receive, store, standardize, aggregate, transmit, filter, identify, or a combination thereof, a CSR or all or some of conveyance data relating to an AV in a database, a database table, or a database result set. A central server can receive, store, standardize, aggregate, transmit, filter, identify, or a combination thereof, and then secure a pCSR or an AV that can be identified as preferred in a database, a database table, or a database result set. When securing or obtaining an AV that can be identified as preferred, all or some of preferred conveyance data relating to an AV can optionally be secured or obtained.

A central server can categorize or pre-categorize CSRs with corresponding conveyance data in a database, a database table, a database result set, or a combination thereof. A central server can categorize or pre-categorize an AV fleet with corresponding conveyance data based on conveyance data corresponding to each individual AV in a database, a database table, a database result set, or a combination thereof. A central server can categorize or pre-categorize all or some of conveyance data relating to an AV fleet as a whole in a database, a database table, a database result set, or a combination thereof. A central server can categorize or pre-categorize an AV fleet with corresponding conveyance data based on conveyance data corresponding with each individual AV in a database, a database table, a database result set, or a combination thereof. A central server can categorize or pre-categorize an AV fleet with corresponding conveyance data as a whole in a database, a database table, a database result set, or a combination thereof.

A central server can use a graph database to identify a pCSR for or with an AV, an AV that can be identified as preferred, or a combination thereof, that can be in the closest proximity. A central server can utilize a directed graph or an undirected graph with a node and/or an edge to identify an AV within the shortest travel time to or for a pCSR.

For example, two AVs with corresponding conveyance data can be stored or categorized in two different databases, two different database tables, or two different database result sets, based on a conveyance industry segment preference and all or some of CSRs can be stored or categorized in another database, another database table, or another database result set. Continuing with this example, a central server can have or use three different databases, different database tables, or different database result sets to filter and identify pCSRs to be secured or obtained for or with both AVs. A central server can have or use a database or a database table, where a central server can have or use three different queries, but an underlying database table is still the same or unchanged.

A central server can filter a CSR or all or some of conveyance data relating to an AV, from a database or a database table, and a database result set can identify a fCSR or all or some of filtered conveyance data relating to an AV. A central server can identify a pCSR or all or some of preferred conveyance data relating to an AV, from a database or a database table, and a database result set can identify a pCSR or all or some of preferred conveyance data relating to an AV.

AV owner/controller or a fleet manager can use, for example, multiple selected preferences for each database, database table, or database result set when filtering and identifying pCSRs to be secured for or with both AVs. AV owner/controller or a fleet manager can use, for example, multiple selected preferences for each database, database table, or database result set when filtering and identifying two AVs that can be identified as preferred to be secured for or with both pCSRs.

A central server can filter CSRs, all or some of conveyance data relating to an AV, or combination thereof, utilizing a step process. A central server can filter CSRs using a two step process to first filter CSRs based on a selected preference and then filter a subset of CSRs based on a substantially real time or near real time geographical location of an AV. A central server can filter CSRs using a two step process to first filter CSRs based on a substantially real time or near real time geographical location of an AV and then filter a subset of CSRs based on a selected preference. A central server can filter CSRs using a two step process to first filter CSRs based on a selected preference and then filter a subset of CSRs based on a different selected preference.

A central server can filter all or some of conveyance data relating to an AV using a two step process to first filter all or some of conveyance data relating to an AV based on a selected preference and then filter a subset of all or some of conveyance data relating to an AV based on a substantially real time or near real time geographical location of an AV. A central server can filter all or some of conveyance data relating to an AV using a two step process to first filter all or some of conveyance data relating to an AV based a substantially real time or near real time geographical location of an AV and then filter a subset of all or some of conveyance data relating to an AV based on a selected preference. A central server can filter all or some of conveyance data relating to an AV using a two step process to first filter all or some of conveyance data relating to an AV based on a selected preference and then filter a subset of all or some of conveyance data relating to an AV based on a different selected preference.

A central server can filter and identify multiple pCSRs, an AV fleet that can be identified as preferred, or a combination thereof, that can be matched together and secured to perform multiple conveyance services. A central server can filter and identify multiple pCSRs first and then filter and identify multiple AVs that can be identified as preferred, which can be matched together and secured to perform multiple conveyance services. A central server can filter and identify multiple AVs that can be identified as preferred first and then filter and identify multiple pCSRs, which can be matched together and secured or obtained to perform multiple conveyance services.

A central server can filter a CSR in conjunction with corresponding conveyance data, all or some of conveyance data relating to an AV, or a combination thereof, in any order. A central server can identify a pCSR in conjunction with corresponding conveyance data, an AV that can be identified as preferred, all or some of preferred conveyance data relating to an AV, or a combination thereof, in any order. A central server can secure a pCSR in conjunction with corresponding conveyance data, an AV that can be identified as preferred, or a combination thereof, in any order. A central server can use or apply a second selected preference and a process can optionally be referred to or seen as an additional level of filtering.

A central server can use machine learning technology to identify a pattern and an AVAP can add more AVs in a specific area around 9PM due to an identified pattern of increased conveyance service demand. A central server can use machine learning technology to identify a pattern based on a correlation relating to conveyance data. A central server can identify a correlation between traffic congestion and a time of the day. An application, an owner/controller application, an external server, or a combination thereof, can operate on a central server.

A central server can unsecure or cancel a secured or obtained pCSR or a secured or obtained fCSR if a better pCSR or a better fCSR becomes available. A central server can unsecure or cancel a secured or obtained AV that can be identified as preferred or a secured or obtained AV that can be filtered if a better AV that can be identified as preferred or a better AV that can be filtered becomes available. A central server can unsecure or cancel an AV that can be identified as preferred if an AV that can be identified as preferred is or becomes unavailable. A central server can have or be associated with a database based on a data point.

A central server relating to a service provider, an AV owner/controller, a good supplier, a fleet manager, a logistics provider, a logistics supplier, or a combination thereof, can secure a pCSR, an AV that can be identified as preferred, or a combination thereof, and can facilitate and communicate with a central server relating or belonging to a third party. A central server relating to a service provider, an AV owner/controller, a good supplier, a fleet manager, a logistics provider, a logistics supplier, or a combination thereof, can secure a pCSR, an AV that can be identified as preferred, or a combination thereof, and can facilitate and communicate with another central server associated with another service provider, AV owner/controller, good supplier, fleet manager, logistics provider, or logistics supplier. An AV that can be identified as preferred can be secured concurrently for or with more than one pCSRs.
System: The following are illustrative, non-limiting examples and embodiments of a "system" as used in the present disclosure:
A system can be but is not limited to a collection of elements that can for example secure a pCSR, an AV that can be identified as preferred, or a combination thereof. A system can be but is not limited to a collection of elements of the present invention, where an element can be associated or integrated with another element. The collection of elements or individual elements can be in the same or different locations. A system can be but is not limited to a computer program product. A system may be a rules-based system.

A conveyance client, an application, an owner/controller application, a representative, an AV, an AV fleet, an AV that can be filtered, an AV that can be identified as preferred, a fleet manager, a logistics provider, a logistics supplier, an AV owner/controller, a terminal, a link, a central server, an external server, a service provider, a good supplier, a RAP, an AVAP, a visual representation, a representative preference, a selected preference, conveyance data, conveyance data relating to an AV ("AV-related data"), filtered conveyance data relating to an AV ("filtered subset of AV-related data"), preferred conveyance data relating to an AV ("preferred AV-related data"), a CSR, a fCSR, and a pCSR can all be in a similar geographical location, or spread out in a distant location, including a cross-border location.

A system can be used to analyze or evaluate and secure a pCSR, an AV that can be identified as preferred, or a combination thereof, relating to a service provider operating in at least one conveyance industry segment. A system can be updated or refreshed in substantially real time or near real time and can refer to being updated or refreshed in the highest level of development or state of the art. A system can perform at least one function in substantially real time and can refer to being updated or refreshed in the highest level of development or state of the art.
Method: The following are illustrative, non-limiting examples and embodiments of a "method" as used in the present disclosure:
A method can be but is not limited to a collection of elements that can for example secure a pCSR, an AV that can be identified as preferred, or a combination thereof. A method can be but is not limited to a collection of elements of the present invention, where an element can be associated or integrated with another element. The collection of elements or individual elements can be in the same or different locations. A method can be but is not limited to a computer program product. A method may be a rules-based system.

A conveyance client, an application, an owner/controller application, a representative, an AV, an AV fleet, an AV that can be filtered, an AV that can be identified as preferred, a fleet manager, a logistics provider, a logistics supplier, an AV owner/controller, a terminal, a link, a central server, an external server, a service provider, a good supplier, a RAP, an AVAP, a visual representation, a representative preference, a selected preference, conveyance data, conveyance data relating to an AV ("AV-related data"), filtered conveyance data relating to an AV ("filtered subset of AV-related data"), preferred conveyance data relating to an AV ("preferred AV-related data"), a CSR, a fCSR, and a pCSR can all be in a similar geographical location, or spread out in a distant location, including a cross-border location.

A method can be used to analyze or evaluate and secure a pCSR, an AV that can be identified as preferred , or a combination thereof, relating to a service provider operating in at least one conveyance industry segment. A method can be updated or refreshed in substantially real time or near real time and can refer to being updated or refreshed in the highest level of development or state of the art. A method can perform at least one function in substantially real time and can refer to being updated or refreshed in the highest level of development or state of the art.
External Server: The following are illustrative, non-limiting examples and embodiments of an "external server" as used in the present disclosure:
An external server can be a software and/or a hardware that can for example facilitate at least one operation or at least one function to secure a pCSR, an AV that can be identified as preferred ("preferred AV-related data"), or a combination thereof. An external server can be a software and/or a hardware that can for example be utilized or operated by an AV owner/controller, a service provider, a good supplier, a fleet manager, a logistics provider, a logistics supplier, or a combination thereof. An external server can be a software and/or a hardware for example a computer application, a computer program, an API, a website, a web application, a smartphone application, a cloud application, or a service.

An external server can communicate information or data all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time or near real time geographical location of an AV, a representative preference, a selected preference, a secured or obtained pCSR, a secured or obtained AV that can be identified as preferred ("preferred AV-related data"). An external server can communicate all or some of information or data with a central server, an external server, an application, an owner/controller application, an AV, or a combination thereof. An external server can expose or be accessed through an API relating to a service provider, an AV owner/controller, a good supplier, a fleet manager, a logistics provider, a logistics supplier, or a third party.

An external server can be a software and/or a hardware that can for example facilitate at least one operation or at least one function to secure a CSR, a fCSR, a pCSR, an AV, an AV that can be filtered, an AV that can be identified as preferred, or a combination thereof.

All or some of AV-related data can be sourced or provided by an external server that can be associated with a service provider, a good supplier, a fleet manager, a logistics provider, a logistics supplier, an AV owner/controller, or a combination thereof. All or some of AV-related data can be sourced or provided by an external server that can also have or provide a CSR in conjunction with corresponding conveyance data. All or some of conveyance data relating to an AV can be sourced or provided by an external server that does not have or does not provide a CSR in conjunction with corresponding conveyance data. An AV, all or some of conveyance data relating to an AV, or a combination thereof, can be sourced or provided by a third party.

An external server can include but is not limited to a source of a CSR in conjunction with corresponding conveyance data, all or some of AV-related data, or a combination thereof. An external server can be for example a source of a substantially real time or near real time CSR, a source of all or some of conveyance data relating to an AV, or a combination thereof. An external server can be but is not limited to a computer network system. An external server can include but is not limited to a computer processor, a computer readable memory, and a network interface. An external server can encompass hardware and/or software alone or in a combination.

An AV can be sourced or provided by an external server that can be associated with a service provider, a good supplier, a fleet manager, an AV owner/controller, a logistics provider, a logistics supplier, or a combination thereof. An AV can be sourced or provided by an external server that can also source or provide a CSR. An AV can be sourced or provided by an external server that does not have or does not provide a CSR.

All or some of conveyance data relating to an AV can be sourced or provided by an external server that can be associated with a service provider, a good supplier, a fleet manager, an AV owner/controller, a logistics provider, a logistics supplier, or a combination thereof. All or some of conveyance data relating to an AV can be sourced or provided by an external server that can also have or provide a CSR. All or some of conveyance data relating to an AV can be sourced or provided by an external server that does not have or does not provide a CSR.

All or some of AV-related data can be transmitted to or communicated with a central server, an external server, an application, an application that can be associated with an AV, an owner/controller application, a terminal, an AV, an AV owner/controller, a service provider, a good supplier, a fleet manager, a logistics provider, a logistics supplier, or a combination thereof.

All or some of a filtered subset AV-related data can be transmitted to or communicated with a central server, an external server, an application, an application that can be associated with an AV, an owner/controller application, a terminal, an AV, an AV owner/controller, a service provider, a good supplier, a fleet manager, a logistics provider, or a combination thereof.

All or some of preferred AV-related data can be transmitted to or communicated with a central server, an external server, an application, an application that can be associated with an AV, an owner/controller application, a terminal, an AV, an AV owner/controller, a service provider, a good supplier, a fleet manager, a logistics provider, a logistics supplier, or a combination thereof.

One embodiment of the present invention includes, all or some of CSRs in conjunction with corresponding conveyance data, all or some of conveyance data relating to an AV ("AV-related data"), all or some of substantially real time or near real time geographical location of an AV, or a combination thereof, is structured in a uniform format prior to being transmitted from an external server to a central server by way of a link between an external server and a central server, and is not standardized.

An AV can communicate with an external server through a central server. An AV can communicate with an AV owner/controller, a service provider, a good supplier, a fleet manager, a logistics provider, a logistics supplier, a conveyance client, or a combination thereof, through or by a central server, an application, or an external server. An AV can communicate with an external server or a central server through or by an application. An AV can communicate with an AV owner/controller, a service provider, a good supplier, a fleet manager, a logistics provider, a logistics supplier, a conveyance client, or a combination thereof, using a link between an application associated with an AV and a central server. An AV can communicate with an AV owner/controller, a service provider, a good supplier, a fleet manager, a logistics provider, a logistics supplier, a conveyance client, or a combination thereof, using a link between an application associated with an AV and an external server. An AV can communicate with an external server or a central server through or by an owner/controller application.

A pCSR, an AV that can be identified as preferred, or a combination thereof, can be secured or obtained through or by a central server, an application, an owner/controller application, an external server, or a combination thereof. A pCSR, an AV that can be identified as preferred, or a combination thereof, can be secured or obtained by a central server or an external server through an application associated with an AV. A pCSR, an AV that can be identified as preferred, or a combination thereof, can be secured or obtained and transmitted between an application associated with an AV and a central server by way of a link. A pCSR, an AV that can be identified as preferred, or a combination thereof, can be secured or obtained and transmitted between an application associated with an AV and an external server through a central server by way of a link. A pCSR, an AV that can be identified as preferred, or a combination thereof, can be secured or obtained and transmitted between an application associated with an AV and an external server by way of a link. A pCSR, an AV that can be identified as preferred, or a combination thereof, can be secured or obtained through or by an owner/controller application.

An external server can have or be associated with a database based on a data point. An external server can have or be associated with a database for a CSR, all or some of conveyance data relating to an AV, or a combination thereof. An external server can have or be associated with a database based on a selected preference or a representative preference. An external server can have or be associated with a database for a conveyance industry segment. An external server can have or be associated with a conveyance industry segment.

An external server can be but is not limited to a server that can connect to or communicate with a central server by way of a link. An external server can transmit in substantially real time or near real time a CSR in conjunction with conveyance data, all or some of conveyance data relating to an AV, or a combination thereof, to a central server by way of a link. An external server can encompass different hardware and/or software alone or in a combination. An external server can include or connect to a database. A computer readable memory of an external server can be a database that an external server can connect to.

An external server can have or be associated with a central server, an external server, a link, a terminal, an owner/controller application, a good supplier, an AV, an application, a service provider, an AV owner/controller, a fleet manager, a logistics provider, a logistics supplier, or a combination thereof. An external server can optionally be perceived or referred to as a service provider server, a good supplier server, a fleet manager server, an AV owner/controller server, a logistics provider, a logistics supplier, or a combination thereof. An external server can be a server in an individual geographical location or an additional geographical location. An external server can relate to a single Internet location, but that need not be the case. An external server can be a secure server. An external server can be made secure using hardware and/or software commercially available. Additionally, an external server can include encryption software such that communications entering or exiting an external server are encrypted. Encryption hardware and/or software are commercially available.

An external server can be associated with an application Program Interface (API). An external server Application Program Interface (API) can be used to facilitate communication between a central server, an external server, an application, an owner/controller application, an AV, or a combination thereof. An external server can provide a CSR in conjunction with conveyance data, all or some of conveyance data relating to an AV, or a combination thereof, relating to a service provider operating in a conveyance industry segment. An external server can be updated or refreshed in substantially real time or near real time and can refer to being updated or refreshed in the highest level of development or state of the art. An external server can perform at least one function in substantially real time or near real time and can refer to being updated or refreshed in the highest level of development or state of the art.

An external server being a source of a CSR in conjunction with corresponding conveyance data, all or some of conveyance data relating to an AV, or a combination thereof, can be associated with an individual service provider, AV owner/controller, good supplier, fleet manager, logistics provider, logistics supplier, or a combination thereof.

An external server can operate on a central server. An external server can include a distinct server operably linked in the same or a different geographical location. An external server can optionally be perceived or referred to as a peer-to-peer network. An external server can transmit a CSR, AV-related data, or a combination thereof, that can be pre-standardized to or with a central server. An external server can be but is not limited to a server that can connect to or communicate with an application, an owner/controller application, a central server, or a combination thereof, by way of a link. An application, an owner/controller application, an AV, a terminal, a central server, an external server, a link, or a combination thereof, can be combined or integrated.

An AV fleet can be sourced or provided by an external server that can be associated with a service provider, a good supplier, a fleet manager, an AV owner/controller, a logistics provider, a logistics supplier, or a combination thereof.

An individual service provider can be associated with an external server that can use or have a database based on a data point. An individual service provider can be associated with an external server that can use or have a database for a CSR, all or some of AV-related data, or a combination thereof. An individual service provider can be associated with an external server that can use or have a database based on a selected preference or a representative preference. An individual service provider can be associated with an external server that can use or have a database for a conveyance industry segment. An individual service provider can use or have an external server relating to a conveyance industry segment being a ride-hail industry segment and another external server relating to a conveyance industry segment being a freight industry segment. An individual service provider can use or have an external server for a CSR. An individual service provider can use or have an external server for all or some of conveyance data relating to an AV.

A fleet manager can use or have an external server that can include a database for an AV fleet. An external server can connect to or communicate with two central servers belonging to two different entities. A secured or obtained pCSR, a secured or obtained AV that can be identified as preferred ("preferred AV-related data"), or a combination thereof, can be transmitted from an application to an external server through a link.

An external server can filter and identify all or some of a pCSR in conjunction with corresponding conveyance data, all or some of a fCSR in conjunction with corresponding conveyance data, all or some of a CSR in conjunction with corresponding conveyance data, all or some of preferred conveyance data relating to an AV ("preferred AV-related data"), all or some of filtered conveyance data relating to an AV ("filtered subset of AV-related data"), all or some of conveyance data relating to an AV ("AV-related data"), all or some of a substantially real time or near real time geographical location of an AV, a representative preference, a selected preference, a secured or obtained pCSR, a secured or obtained AV that can be identified as preferred, or a combination thereof, together or separately.

An external server can secure a pCSR, a fCSR, a CSR, an AV that can be identified as preferred, an AV that can be filtered, an AV, or a combination thereof, and can communicate directly or indirectly with a central server, an external server, an application, an owner/controller application, an AV, an AV owner/controller, a service provider, a good supplier, a fleet manager, a logistics provider, a logistics supplier, a third party, or a combination thereof. At least one function of an external server can be performed by a central server.
Conveyance Data: The following are illustrative, non-limiting examples and embodiments of "conveyance data" as used in the present disclosure:
Conveyance data can be information or data that can for example be used to facilitate at least one operation or at least one function to secure a preferred conveyance service request ("pCSR"), an AV that can be identified as preferred ("preferred AV-related data"), or a combination thereof. Conveyance data can be information or data that can for example be utilized or managed by an AV owner/controller, a service provider, a good supplier, a fleet manager, a dispatcher, a representative, a logistics provider, a logistics supplier, or a combination thereof.

Conveyance data can be for example data or information corresponding to a past metric, a current metric, a future metric, or a combination thereof, of a request for transporting a person, a good, an article, a thing, or a combination thereof, from a geographical location to another geographical location.

When all or some of conveyance data relating to an AV is considered ("AV-related data"), all or some of filtered conveyance data relating to an AV ("filtered subset of AV-related data"), all or some of preferred conveyance data relating to an AV ("preferred AV-related data"), or a combination thereof, can also be considered. When all or some of conveyance data relating to an AV is considered, all or some of a substantially real time or near real time geographical location of an AV, all or some of a substantially real time or near real time geographical location of an AV that can be filtered, all or some of a substantially real time or near real time geographical location of an AV that can be identified as preferred, or a combination thereof, can also be considered.

Conveyance data relating to an AV, a conveyance service request ("CSR"), a substantially real time or near real time geographical location of an AV, or a combination thereof, can be sourced or provided from an external server, a central server, an application, or an owner/controller application, or the like. Conveyance data relating to an AV, a CSR, a substantially real time or near real time geographical location of an AV, or a combination thereof, can be sourced or provided by an AV, an AV owner/controller, a service provider, a good supplier, a fleet manager, a logistics provider, or a logistics supplier, or the like.

Conveyance data relating to an AV, a CSR, or a combination thereof, can be generated by an external server, a central server, an application, or an owner/controller application, or the like. Conveyance data relating to an AV, a CSR, or a combination thereof, can be generated by an AV, an AV owner/controller, a service provider, a good supplier, a fleet manager, a logistics provider, or a logistics supplier, or the like. Conveyance data can be sourced, provided, or generated by a technology, a software, a hardware, or a combination thereof, relating to an AV. All or some of conveyance data relating to an AV can be used by an AV owner/controller, a service provider, a good supplier, a fleet manager, a logistics provider, a logistics supplier, or a combination thereof, to control, manage, or operate an AV.

Conveyance data can be but is not limited to any data or information corresponding to a CSR, a fCSR, a pCSR, an AV, an AV that can be filtered, an AV that can be identified as preferred, or a combination thereof, that can for example be transmitted between an external server, a central server, an application, a terminal, an owner/controller application, or a combination thereof, by way of a link. Conveyance data can for example be transmitted from an external server to a central server, an application, an owner/controller application, an external server, or a combination thereof. Conveyance data retrieved from an external server can be for example cached on a central server, an application, an owner/controller application, an external server, or a combination thereof, to provide enhanced performance and better avoid a relevant limitation a central server limitation, an external server limitation, a service provider limitation, a link limitation, and any involved service provider limitation.

Conveyance data can be stored or cached in a database. Conveyance data can be stored or cached in a database table. Conveyance data can be updated or refreshed in substantially real time or near real time and can refer to being updated or refreshed in the highest level of development or state of the art. Conveyance data can correspond to a pCSR, a fCSR, a CSR, an AV, an AV that can be filtered, an AV that can be identified as preferred, or a combination thereof, relating to an AV owner/controller, a service provider, a good supplier, a fleet manager, a logistics provider, a logistics supplier, a conveyance client, a representative, or a combination thereof, operating in at least one conveyance industry segment.

All or some of conveyance data can be but is not limited to any data or information relating to a CSR, a fCSR, a pCSR, an AV, an AV that can be filtered, an AV that can be identified as preferred, or a combination thereof, that can be used to filter a CSR into a fCSR. All or some of conveyance data can be but is not limited to any data or information relating to a CSR, a fCSR, a pCSR, an AV, an AV that can be filtered, an AV that can be identified as preferred, or a combination thereof, that can be used to filter all or some of conveyance data relating to an AV into all or some of filtered conveyance data relating to an AV.

All or some of conveyance data can be but is not limited to any data or information relating to a CSR, a fCSR, a pCSR, an AV, an AV that can be filtered, an AV that can be identified as preferred, or a combination thereof, that can be used to identify a pCSR from a fCSR. All or some of conveyance data can be but is not limited to any data or information relating to a CSR, a fCSR, a pCSR, an AV, an AV that can be filtered, an AV that can be identified as preferred, or a combination thereof, that can be used to identify all or some of preferred AV-related or an AV that can be identified as preferred from all or some of filtered conveyance data relating to an AV.

All or some of conveyance data can be but is not limited to any data or information relating to a CSR, a fCSR, a pCSR, an AV, an AV that can be filtered, an AV that can be identified as preferred, or a combination thereof, that can be stored, aggregated, standardized, filtered, identified as preferred, or the like. All or some of AV-related can be filtered and identified as preferred, in a same or a similar process as a CSR, a fCSR, a pCSR, or a combination thereof.

All or some of AV-related data can be filtered and identified as preferred, instead of or substituted with a CSR. All or some of AV-related data can be filtered and identified as preferred via a process of filtering and identifying a pCSR. All or some of conveyance data relating to an AV can be filtered, identified as preferred, and secured or obtained relating to a selected preference, a substantially real time geographical location of an AV, or a combination thereof.

All or some of conveyance data can be but is not limited to any data or information relating to a CSR, a fCSR, a pCSR, an AV, an AV that can be filtered, an AV that can be identified as preferred, or a combination thereof, can be pre-filtered or pre-categorized. All or some of conveyance data relating to an AV can be pre-filtered or pre-categorized. All or some of conveyance data relating to an AV, all or some of filtered conveyance data relating to an AV, or a combination thereof, can be pre-filtered or pre-categorized based on all or some of a substantially real time or near real time geographical location of an AV.

Conveyance data can be for example used by a central server, an external server, an application, an owner/controller application, a representative, an AV owner/controller, an AV, a service provider, a good supplier, a fleet manager, a logistics provider, a logistics supplier, or a combination thereof, to analyze or evaluate and then secure a pCSR for or with an AV, an AV that can be identified as preferred, or a combination thereof.

Conveyance data can be optimized to identify a pCSR. Conveyance data can include but is not limited to optimization data that can come from an AV, an AV sensor, a sensor data, a third party provider, a mapping provider, a remote server, an external server, or a service provider, or the like. Conveyance data can for example, include but is not limited to, demographic data relating to a geographical area, a CSR, all or some of conveyance data, all or some of conveyance data relating to an AV, a conveyance client, a representative, an AV, an AV owner/controller, a service provider, a good supplier, a fleet manager, a logistics provider, a logistics supplier, or a combination thereof. Conveyance data can include but is not limited to a statistical variable of a fCSR. Conveyance data can include but is not limited to a statistical variable of a pCSR. All or some of AV-related data can be all or some data relating to an AV. All or some of AV-related data can include but is not limited to a substantially real time geographical location of an AV.

Conveyance data can be in substantially real time or near real time and can include but is not limited to a beginning service geographical location, an ending service geographical location, pricing information, elevated pricing information, a representative preference, a selected preference, a distance parameter, an estimated time of arrival, a time to destination, a conveyance client geographical location, a conveyance client review, a conveyance client rating, a conveyance client detail, a conveyance service detail, a conveyance service route, a preferred conveyance client, a sensor data, a representative geographical location, a representative review, a representative rating, a representative detail, an AV geographical location, an AV review, an AV rating, an AV detail, a preferred AV, a route planning preference, a fuel economy preference, a battery longevity preference, a vehicle capacity preference, a vehicle diagnostic preference, a conveyance data preference, a service provider geographical location, a service provider review, a service provider rating, a service provider detail, a preferred service provider, a good supplier geographical location, a good supplier review, a good supplier rating, a good supplier detail, a preferred good supplier, an AV owner/controller geographical location, an AV owner/controller review, an AV owner/controller rating, an AV owner/controller detail, a preferred AV owner/controller, a fleet manager geographical location, a fleet manager review, a fleet manager rating, a fleet manager detail, a preferred fleet manager, a logistics provider geographical location, a logistics provider review, a logistics provider rating, a logistics provider detail, a preferred logistics provider, a logistics supplier geographical location, a logistics supplier review, a logistics supplier rating, a logistics supplier detail, a preferred logistics supplier, a conveyance industry segment detail, a preferred conveyance industry segment, a good detail, an item detail, a type of vehicle detail, a vehicle detail, a measurement of a statistical variable, a level of service detail, a fuel consumption, a battery level, a vehicle diagnostic, a vehicle capacity, or a combination thereof.

A sensor data relating to an AV can be communicated to another AV, a service provider, a good supplier, an AV owner/controller, a fleet manager, a logistics provider, a logistics supplier, or a combination thereof. A sensor data relating to an AV to can be communicated to a central server, an external server, an application, a terminal, an owner/controller application, or a combination thereof. A sensor data can be used to communicate a status of an AV. A sensor data can be used to communicate a battery level of an AV, a fleet of AVs, or a combination thereof. A sensor data can be used to communicate a status of an AV when an AVAP can be analyzing or evaluating and securing or obtaining a pCSR for or with an AV, an AV that can be identified as preferred, or a combination thereof. A sensor data can be used to find, locate, update, filter, identify, or a combination thereof, a substantially real time or near real time geographical location of an AV or an AV fleet. A substantially real time or near real time geographical location of an AV or an AV fleet can be based on or related to a sensor data. A sensor data can be used by AVAP that can analyze or evaluate and then secure a pCSR, an AV that can be identified as preferred, all or some of preferred conveyance data relating to an AV, or a combination thereof.

When all or some of conveyance data relating to an AV is considered, all or some of conveyance data relating to an AV fleet, can also be considered. When all or some of conveyance data relating to an AV fleet is considered, all or some of filtered conveyance data relating to AV fleet, all or some of preferred conveyance data relating to AV fleet, or a combination thereof, can also be considered. All or some of preferred conveyance data relating to AV fleet can be identified from all or some of filtered conveyance data relating to AV fleet that can have the highest weighted average of a representative preference or the highest weighted average of a selected preference.

Conveyance data can be generated or provided from a central server, an external server, a terminal, an application, an owner/controller application, or a combination thereof. Conveyance data relating to an AV or a CSR can be sourced or provided by an external server relating to an AV owner/controller, a service provider, a good supplier, a fleet manager, a logistics provider, or a logistics supplier. Conveyance data relating to an AV such as a substantially real time or near real time geographical location of an AV can be sourced or provided by an AV. Conveyance data relating to an AV such as a substantially real time or near real time geographical location of an AV can be sourced or provided by an external server. All or some of conveyance data can be communicated with an application, an owner/controller application, an AV, a terminal, a central server, an external server, a link, or a combination thereof, that can be combined or integrated.

For example, all or some of conveyance data sourced or provided by an AV can be sourced from at least one input device such as a sensor, a transceiver, a receiver, an interface, an application, or a terminal. All or some of conveyance data relating to an AV or a CSR, can include optimization data that can be provided by a third party map provider to be utilized with route planning and identifying a pCSR, an AV that can be identified as preferred, or a combination thereof. Conveyance data relating to an AV can be used to analyze or evaluate a CSR in substantially real time or near real time by an AV owner/controller, a service provider, a good supplier, a fleet manager, a logistics provider, or a logistics supplier. Conveyance data can relate to a battery level of a device or a terminal belonging to a conveyance client. Conveyance data can include but is not limited to milestones, awards, incentives, number of rides completed, monetary earnings, financial information, or scheduling information. All or some of conveyance data can include for example a vehicle detail or an AV detail, which can be utilized to identify a preferred vehicle type, a preferred vehicle service, or a combination thereof.
Conveyance Service Request (CSR): The following are illustrative, non-limiting examples and embodiments of a "conveyance service request (CSR)" as used in the present disclosure:
A CSR can be for example a request from a conveyance client or an entity for the transportation of a person, a good, an article, a thing, or a combination thereof, from a geographical location to another geographical location. Once, for example, a beginning service geographical location, an ending service geographical location, or a combination thereof, is inputted or provided into an application, a central server, or an external server, a CSR relating to a conveyance client can be generated. When a CSR is considered, CSR in conjunction with corresponding conveyance data can also be considered.

A CSR in conjunction with corresponding conveyance data can be sourced or provided from an external server, a service provider, a good supplier, or a fleet manager, or the like. A CSR can be stored or cached in a computer readable memory and/or a database of a central server. A CSR can relate to at least one conveyance industry segment. A CSR can relate to a service provider, a good supplier, a fleet manager, an AV owner/controller, a logistics provider, a logistics supplier, or a combination thereof.

All or some of a CSR can have or be associated with corresponding conveyance data. All or some of a CSR can have or be associated with intrinsic conveyance data that can be stored in a database. All or some of a CSR can be associated with or inherently have associated conveyance data that can be used to filter and identify a pCSR to be secured or obtained for or with an AV that can be identified as preferred. A CSR can be updated or refreshed in real time or near real time and can refer to being updated or refreshed in the highest level of development or state of the art. A CSR can be pre-filtered or pre-categorized on a central server, an external server, an application, an owner/controller application, or a combination thereof. One embodiment of the present invention includes, all or some of CSRs in conjunction with corresponding conveyance data, all or some of conveyance data relating to an AV ("AV-related data"), all or some of substantially real time or near real time geographical location of an AV, or a combination thereof, is structured in a uniform format prior to being transmitted from an external server to a central server by way of a link between an external server and a central server, and is not standardized.

A CSR can be a fCSR, a pCSR, or a combination thereof, relating to a selected preference or a representative preference. A CSR can become a fCSR, a pCSR, or a combination thereof, based on a representative preference inputted or provided by a representative. A CSR can become a fCSR, a pCSR, or a combination thereof, based on a selected preference inputted or provided by an AV owner/controller, a service provider, a good supplier, a fleet manager, a logistics provider, or a logistics supplier, or the like. A CSR can be filtered once or more than once. Any time a CSR can be filtered into a fCSR or identified as a pCSR, all or some of conveyance data relating to an AV can optionally be filtered into all or some of filtered conveyance data relating to an AV or identified as all or some of preferred conveyance data relating to an AV. All or some of CSRs, structured in a different format, are standardized or converted into at least one uniform format. All or some of CSRs are structured in at least one uniform format prior to being transmitted from an external server to a central server by way of at least one link between said an external server and a central server, and are not standardized. All or some of CSRs in conjunction with corresponding conveyance data, all or some of conveyance data relating to AV, all or some of substantially real time geographical location of an AV, or a combination thereof, is structured in at least one uniform format prior to being transmitted from an external server to a central server by way of a link between an external server and a central server, and is not standardized. All or some of CSRs in conjunction with corresponding conveyance data, all or some of conveyance data relating to an AV, all or some of real time geographical location of an AV, or a combination thereof, is structured in at least one uniform format prior to being transmitted from an external server to a central server by way of a link an external server a central server, and is not standardized.

A CSR can be a ride-hail service request, a ride-share service request, a car-share service request, a peer-to-peer conveyance service request, a transportation service request, a person delivery service request, a taxi service request, a shuttle service request, a good delivery service request, an item delivery service request, a medical service and/or delivery request, a food delivery service request, a courier delivery service request, a freight delivery service request, an animal delivery service request, a delivery service request, or a combination thereof.

A CSR can be perceived or referred to as a fCSR or pCSR. A CSR can be identified or referred to as a fCSR or a pCSR for or with a representative, an AV, an AV fleet, an AV owner/controller, a service provider, a good supplier, a fleet manager, a logistics provider, a logistics supplier, or a combination thereof. A CSR can include a waypoint. A CSR can include a waypoint where a conveyance client can walk to a designated area to be picked up for a conveyance service. If a CSR is secured or obtained, that same a secured or obtained CSR can be referred to or identified as a pCSR.

A CSR can be pre-scheduled. A thing to be conveyed can be, for example, personal items such as keys or documents. A CSR can include special request information. A CSR can be stored or cached in a computer readable memory and/or a database of an application. A CSR can relate to an individual conveyance industry segment. A CSR can relate to an individual service provider, good supplier, or fleet manager. A CSR can be a pre-filtered CSR. A plurality of CSRs can be a single CSR. A CSR can be pre-filtered or pre-categorized on a central server based on a geographical location.

A CSR can optionally be perceived as or treated the same or similar as, all or some of conveyance data relating to an AV. A CSR, all or some of AV-related data, or a combination thereof, can be filtered in either order. All or some of conveyance data corresponding to a CSR, all or some of AV-related data, or a combination thereof, can be stored in a database table.

A CSR can be filtered according to a selected preference, a substantially real time or near real time geographical location of an AV fleet, or a combination thereof. When a CSR is filtered into a fCSR or identified as a pCSR, all or some of conveyance data relating to an AV fleet can optionally be filtered into all or some of filtered conveyance data relating to an AV fleets or identified as all or some of preferred conveyance data relating to an AV fleet.
Filtered Conveyance Service Request (fCSR): The following are illustrative, non-limiting examples and embodiments of a "filtered conveyance service request (fCSR)" as used in the present disclosure:
A fCSR can be for example a CSR that can be filtered with a representative preference, a selected preference, a substantially real time or near real time geographical location of a representative, a substantially real time or near real time geographical location of an AV, or a combination thereof. When a fCSR is considered, a fCSR in conjunction with corresponding conveyance data can also be considered.

A fCSR can be stored or cached in a computer readable memory and/or a database of a central server. When a representative preference or a selected preference is updated, modified, added, removed, and/or refreshed, a new set of a fCSR can be generated. A fCSR can relate to a conveyance industry segment. A fCSR can relate to a service provider, a good supplier, a fleet manager, an AV owner/controller, a logistics provider, or a combination thereof.

All or some of a fCSR can have or be associated with conveyance data. All or some of a fCSR can have or be associated with intrinsic conveyance data that can be stored in a database. All or some of a fCSR can be associated with or inherently have associated conveyance data that can be used to identify a pCSR to be secured for or with an AV that can be identified as preferred.

A fCSR can be updated or refreshed in substantially real time or near real time and can refer to being updated or refreshed in the highest level of development or state of the art. fCSR can be pre-filtered or pre-categorized on a central server. A fCSR can be a CSR that matches or satisfies a representative preference or a selected preference. A fCSR can become a pCSR based on a selected preference inputted or provided by an AV owner/controller, a service provider, a good supplier, a fleet manager, a logistics provider, or a logistics supplier.

A fCSR can be filtered once or more than once. Any time a fCSR can be identified as a pCSR, all or some of filtered conveyance data relating to an AV can optionally be identified as all or some of preferred conveyance data relating to an AV ("preferred AV-related data").

A fCSR can be displayed on an application or an owner/controller application. A fCSR can be displayed on a geographical map of a visual representation. A fCSR can relate to an individual conveyance industry segment. A fCSR can relate to an individual service provider, good supplier, or fleet manager. For example, if a representative, an AV owner/controller, a service provider, a good supplier, a fleet manager, a logistics provider, a logistics supplier, or a combination thereof, secures a fCSR, that same secured fCSR can be designated as a pCSR. A fCSR can be a pre-filtered CSR. A fCSR can be perceived or referred to as a CSR. A plurality of fCSRs can be a single fCSR.

A fCSR can optionally be perceived as or treated the same or similar as, all or some of filtered conveyance data relating to an AV. A fCSR, all or some of filtered conveyance data relating to an AV, or a combination thereof, can be identified as preferred, in either order. All or some of conveyance data corresponding to a fCSR, all or some of filtered conveyance data relating to an AV, or a combination thereof, can be stored in a database table.

A fCSR can be for example a CSR that can be filtered with a selected preference, a substantially real time or near real time geographical location of an AV fleet, or a combination thereof. Any time a fCSR can be identified as a pCSR, all or some of filtered conveyance data relating to an AV fleet can optionally be identified as all or some of preferred conveyance data relating to a fleet of AVs.
Preferred Conveyance Service Request (pCSR): The following are illustrative, non-limiting examples and embodiments of a "preferred conveyance service request (pCSR)" as used in the present disclosure:
A pCSR can be for example a request for transporting a person, a good, a thing, an article, or a combination thereof, from a geographical location to another geographical location that can be identified from a fCSR. A pCSR can be for example a request that a central server, a representative, an application, an owner/controller application, an AV owner/controller, an AV, a service provider, a good supplier, a fleet manager, a logistics provider, a logistics supplier, or a combination thereof, identifies as preferred. When a pCSR is considered, a pCSR in conjunction with corresponding conveyance data can also be considered.

A pCSR can be stored or cached in a computer readable memory and/or a database of a central server. A pCSR can for example be originally sourced or provided by an external server, a service provider, a good supplier, or a fleet manager. A pCSR can be a CSR or a fCSR that matches or satisfies a representative preference or a selected preference. A fCSR can be identified as preferred by a central server, a representative, an application, an owner/controller application, an AV owner/controller, an AV, a service provider, a good supplier, a fleet manager, a logistics provider, a logistics supplier, or a combination thereof, and then a fCSR can become a pCSR.

All or some of a pCSR can have or be associated with corresponding conveyance data. All or some of a pCSR can have or be associated with intrinsic conveyance data that can be stored in a database. All or some of a pCSR can be associated with or inherently have associated conveyance data that can be used to secure a pCSR for or with an AV that can be identified as preferred.

Any time a pCSR can be identified, all or some of preferred conveyance data relating to an AV ("preferred AV-related data") can optionally be identified and a pCSR can be secured or obtained for or with an AV that can be identified as preferred ("preferred AV-related data").

A pCSR can be updated or changed in substantially real time or near real time as a substantially real time geographical location of a representative or an AV changes or updates. A pCSR can relate to a conveyance industry segment. A pCSR can relate to a service provider, a good supplier, a fleet manager, an AV owner/controller, a logistics provider, a logistics supplier, or a combination thereof. A pCSR can be updated or refreshed in substantially real time and can refer to being updated or refreshed in the highest level of development or state of the art.

A CSR can be filtered in substantially real time or near real time by using a representative preference or a selected preference to create a set of a fCSR. A fCSR can be sorted in substantially real time or near real time relating to a weighted average of a representative preference or a selected preference to identify a pCSR. A pCSR can be identified as preferred with the highest weighted average of a representative preference or a selected preference. When a representative preference or a selected preference is updated, modified, added, removed, and/or refreshed, a new set of a pCSR can be generated or identified. A pCSR can be updated in substantially real time or near real time as traffic information changes or updates. A different geographical location can be used other than a substantially real time or near real time geographical location of a representative, when filtering a CSR, to identify a pCSR. A pCSR can relate to an individual conveyance industry segment. A pCSR can relate to an individual service provider, good supplier, or fleet manager.

A pCSR can be visually identifiable from a fCSR displayed on a visual representation. A pCSR can be displayed on a geographical map of a visual representation. A pCSR can be displayed on an application or an owner/controller application. An application or an owner/controller application can secure a pCSR. A central server, an application, an owner/controller application, or a combination thereof, can secure a pCSR for or with an AV that can be identified as preferred.

A pCSR can be identified from a fCSR that has the highest weighted average of a representative preference or a selected preference. A representative preference or a selected preference can have an equal weight or an unequal weight when using a weighted average to identify a pCSR. A pCSR can be perceived or referred to as a CSR or a fCSR. More than one pCSRs can be secured concurrently for or with an AV that can be identified as preferred.

A pCSR can optionally be perceived as or treated the same or similar as all or some of preferred conveyance data relating to an AV. A pCSR, all or some of preferred conveyance data relating to an AV, or a combination thereof, can be identified as preferred, in any order. All or some of conveyance data corresponding to a pCSR, all or some of preferred conveyance data relating to an AV, or a combination thereof, can be stored in a database table. Any time a pCSR can be identified, all or some of preferred conveyance data relating to an AV fleet can optionally be identified and a pCSR can be secured for or with an AV fleet that can be identified as preferred.
Representative Preference: The following are illustrative, non-limiting examples and embodiments of a "representative preference" as used in the present disclosure:
A representative preference can be a rule or a parameter that can be used to facilitate an operation or a function to secure a preferred conveyance service request ("pCSR"), an AV that can be identified as preferred, or a combination thereof. A representative preference can be a rule or a parameter that can for example be utilized or operated by a representative, an AV owner/controller, a service provider, a good supplier, a fleet manager, a dispatcher, a logistics provider, a logistics supplier, or a combination thereof. A representative preference can be any rule or parameter that can be used or utilized during a process of filtering and/or identifying a pCSR, an AV that can be identified as preferred, or a combination thereof.

A representative preference can be a rule or a parameter that can optimize all or some of conveyance data, all or some of conveyance data relating to an AV ("AV-related data"), an AV, a CSR, or a combination thereof. A representative preference can relate directly or indirectly to a pCSR, an AV that can be identified as preferred, all or some of preferred conveyance data relating to an AV ("preferred AV-related data"), or a combination thereof. A representative preference can be associated with or have a feature or a various feature that can be used to match an AV or an AV that can be identified as preferred ("preferred AV-related data") for or with a pCSR, a conveyance client, or a combination thereof. A representative preference can be a rule implemented in a rules based system, a rules based method, or a combination thereof.

A representative preference can for example be used by a representative to identify and secure a pCSR. A representative preference can include but is not limited to an option for example selected or provided by a representative to filter and/or sort a CSR in substantially real time in order to identify a pCSR. A representative preference can be used in conjunction with a substantially real time geographical location of a representative or a different geographical location to filter a CSR into a fCSR. A fCSR can be sorted in an order relating to a weighted average of a representative preference to identify a pCSR. A representative can input or provide a representative preference into an application that can be used to identify and secure a pCSR.

A representative preference can be stored or cached on a central server, an application, an external server, or a combination thereof. A representative preference can be stored or cached on or transmitted to a central server, an application, an external server, or a combination thereof. A representative preference can be pre-set on a central server, an external server, an application, or a combination thereof. A representative preference can be either inclusive or exclusive for filtering a CSR. An individual representative preference can have an equal weight or an unequal weight when calculating a weighted average to identify a pCSR. A representative can optionally choose a weight for a representative preference to have an equal weight or an unequal weight.

A representative preference can be updated or refreshed in substantially real time and can refer to being updated or refreshed in the highest level of development or state of the art. A representative preference can be used to perform a function in substantially real time being updated or refreshed in the highest level of development or state of the art.

A central server, an application, or a combination thereof, can filter out, hide, or remove a CSR that does not meet the representative preference criteria. A representative preference can be updated or changed and a new or different set of a fCSR, a pCSR, or a combination thereof, can be identified. A representative preference can be used to identify a pCSR from a fCSR or a pre-filtered CSR. A representative preference can be used for a conveyance industry segment. A representative preference can be used for a service provider.

A representative preference can be but is not limited to a pricing preference, an elevated pricing preference, a geographical location preference, a distance preference, a route preference, a service duration preference, a beginning service geographical location preference, an ending service geographical location preference, a time preference, a predictive preference, a historical preference, a efficiency preference, an event inclusion preference, an event exclusion preference, a traffic based preference, a road condition preference, a weather condition preference, a duration of conveyance service preference, a CSR density preference, a conveyance client density preference, a conveyance client detail preference, a conveyance client rating preference, a representative density preference, a service provider inclusion preference, a service provider exclusion preference, a service provider density preference, a level of service preference, a good supplier inclusion preference, a good supplier exclusion preference, a good supplier density preference, a good detail preference, a conveyance industry segment preference, a freight preference, a waypoint preference, a delivery service preference, or a combination thereof.

An efficiency preference can be a parameter or a rule that can optimize vehicle utilization. If an efficiency preference is selected, a representative can accept an additional food delivery service request for the same restaurant to perform an additional conveyance service and earn more money. If a price preference is selected, then a CSR priced higher than a set minimum price can be identified as a pCSR. If a distance preference is selected, then a CSR within a selected distance can be identified as a pCSR. A good detail preference can include an item being fragile. If a good detail preference is selected, then a CSR for conveying a certain type and/or quantity of a good that a representative is capable of delivering can be identified as a pCSR, such as the capability to deliver a refrigerator or a mirror. If a freight preference is selected, then a CSR for conveying freight that a representative is capable of delivering can be identified as a pCSR, such as a CSR to deliver a biohazardous material or a flammable material.

When an individual representative preference has an unequal weight, a pricing preference can have 70% weight and a distance preference can have 30% weight which can be used to identify a pCSR when determining which a fCSR has the highest weighted average.

A representative preference can be used for an individual conveyance industry segment. A representative preference can be used for an individual service provider. A representative can specify a representative preference to work in a given area by using a geographical location preference. A representative can specify a representative preference to work in a six-mile perimeter by using a geographical location preference.

A representative preference, once inputted or provided into an application, can be stored or cached on an application, a computer readable memory of a central server, or a combination thereof, and a representative preference is not inputted or provided again into an application by a representative. A representative preference can be stored or cached in a computer readable memory of a central server and a representative preference is not transmitted again from an application to a central server. A representative preference, a substantially real time geographical location of a representative, or a combination thereof, can be transmitted from an application to a central server at any time prior to filtering a CSR. A representative preference and a selected preference can be used to manage or operate a representative and an AV in RAP, AVAP, or a combination thereof.
Selected Preference: The following are illustrative, non-limiting examples and embodiments of a "selected preference" as used in the present disclosure:
A selected preference can be a rule or a parameter that can be used to facilitate an operation or a function to secure a preferred conveyance service request ("pCSR"), an AV that can be identified as preferred ("preferred AV-related data"), or a combination thereof. A selected preference can be a rule or a parameter that can for example be utilized or operated by an AV owner/controller, a service provider, a good supplier, a fleet manager, a dispatcher, a representative, a logistics provider, a logistics supplier, or a combination thereof. A selected preference can be any rule or parameter that can be used or utilized during a process of filtering and/or identifying a pCSR, an AV that can be identified as preferred, or a combination thereof.

A selected preference can be a rule or a parameter that can optimize all or some of conveyance data, all or some of conveyance data relating to an AV ("AV-related data"), an AV, a CSR, or a combination thereof. A selected preference can relate directly or indirectly to a pCSR, an AV that can be identified as preferred, all or some of preferred conveyance data relating to an AV ("preferred AV-related data"), or a combination thereof. A selected preference can be associated with or have a feature or a various feature that can be used to match an AV or an AV that can be identified as preferred for or with a pCSR, a conveyance client, or a combination thereof. A selected preference can be a rule implemented in a rules based system, a rules based method, or a combination thereof.

A selected preference can for example be used by an AV owner/controller, a service provider, a good supplier, a fleet manager, a dispatcher, a representative, a logistics provider, a logistics supplier, or a combination thereof, to identify and secure a pCSR, an AV, an AV that can be identified as preferred, or a combination thereof. A selected preference or a set of a selected preference can be used to filter, identify as preferred, secure, or a combination thereof, pCSR. A different selected preference or a different set of a selected preference can be used to filter, identify as preferred, secure, or a combination thereof, an AV that can be identified as preferred. A selected preference or a set of a selected preference can be used to filter, identify as preferred, secure, or a combination thereof, an AV that can be identified as preferred ("preferred AV-related data").

A selected preference can be refined or customized by an AV owner/controller, a service provider, a good supplier, a fleet manager, a dispatcher, a representative, a logistics provider, a logistics supplier, a third party, or a combination thereof. A selected preference can be fixed or built-in on a central server. A selected preference can be made not-editable. A selected preference can be a digit or a number.

A selected preference can be a tool, for example, a rule or a parameter to filter, identify, secure, or a combination thereof, a pCSR, a fCSR, a CSR, or a combination thereof. A selected preference can be a tool, for example, a rule or a parameter to filter, identify, secure, or a combination thereof, an AV that can be identified as preferred, an AV that can be filtered, an AV, all or some of preferred conveyance data relating to an AV ("preferred AV-related data"), all or some of filtered conveyance data relating to an AV ("filtered subset of AV-related data"), all or some of conveyance data relating to an AV ("AV-related data"), or a combination thereof.

A selected preference can be used to match or satisfy a pCSR, a fCSR, a CSR, or a combination thereof, with an AV or an AV that can be identified as preferred. A selected preference can be used to match or satisfy an AV or an AV that can be identified as preferred for or with a pCSR, a fCSR, a CSR, or a combination thereof. A selected preference can for example be utilized by an AV owner/controller, a service provider, a good supplier, a fleet manager, a representative, a logistics provider, a logistics supplier, or a combination thereof, to identify and secure a pCSR for or with an AV that can be identified as preferred ("preferred AV-related data").

A selected preference can include but is not limited to an option for example selected or provided by an AV owner/controller, a service provider, a good supplier, a fleet manager, a dispatcher, a representative, a logistics provider, a logistics supplier, or a combination thereof, to filter and/or sort a CSR in substantially real time to identify a pCSR. A selected preference can include but is not limited to an option for example selected or provided by an AV owner/controller, a service provider, a good supplier, a fleet manager, a representative, a logistics provider, a logistics supplier, or a combination thereof, to filter and/or sort all or some of conveyance data relating to an AV ("AV-related data") to identify all or some of preferred conveyance data relating to an AV ("preferred AV-related data") or an AV that can be identified as preferred.

A selected preference can, for example, be used to filter and identify a pCSR and then filter and identify an AV that can be identified as preferred, all or some of preferred conveyance data relating to an AV ("preferred AV-related data"), or a combination thereof, and be secured together. A selected preference can, for example, be used to filter and identify an AV that can be identified as preferred, all or some of preferred conveyance data relating to an AV ("preferred AV-related data"), or a combination thereof, and then filter and identify a pCSR and be secured together.

A selected preference can be used to filter a CSR, all or some of conveyance data relating to an AV ("AV-related data"), or a combination thereof, in any order prior to securing or obtaining a match between a pCSR, an AV that can be identified as preferred, or a combination thereof. A selected preference can be used to identify a pCSR, all or some of preferred conveyance data relating to an AV ("preferred AV-related data"), an AV that can be identified as preferred, or a combination thereof, in any order prior to securing or obtaining a match between a pCSR, an AV that can be identified as preferred, or a combination thereof.

A selected preference can have or be associated with a set of preferences or a set of parameters that can be used to filter and identify a PCSR, a fCSR, or a combination thereof. A selected preference can have or be associated with a set of preferences or a set of parameters that can be used to filter and identify all or some of preferred conveyance data relating to an AV ("preferred AV-related data"), all or some of filtered conveyance data relating to an AV ("filtered subset of AV-related data"), or a combination thereof. A selected preference can have or be associated with a set of preferences or a set of parameters that can be used to filter and identify a pCSR, a fCSR, all or some of preferred conveyance data relating to an AV ("preferred AV-related data"), all or some of filtered conveyance data relating to an AV ("filtered subset of AV-related data"), an AV that can be identified as preferred or that can be filtered, or a combination thereof.

A selected preference can be pre-set on a central server, an external server, an application, an owner/controller application, a terminal, or a combination thereof. A selected preference can be either inclusive or exclusive for filtering, a CSR. A selected preference can be either inclusive or exclusive for identifying, a pCSR. A selected preference can be either inclusive or exclusive for filtering, all or some of conveyance data relating to an AV ("AV-related data"). A selected preference can be either inclusive or exclusive for identifying, all or some of preferred conveyance data relating to an AV ("preferred AV-related data"), an AV that can be identified as preferred, or a combination thereof.

An individual selected preference can have an equal weight or an unequal weight when calculating a weighted average to identify a pCSR, all or some of preferred conveyance data relating to an AV ("preferred AV-related data"), an AV that can be identified as preferred, or a combination thereof. A fCSR can be sorted in substantially real time in an order relating to a weighted average of a selected preference to identify a pCSR. All or some of filtered conveyance data relating to an AV can be sorted in an order relating to a weighted average of a selected preference to identify all or some of preferred conveyance data relating to an AV ("preferred AV-related data"), an AV that can be identified as preferred, or a combination thereof.

An AV owner/controller, a service provider, a good supplier, a fleet manager, a representative, a logistics provider, a logistics supplier, or a combination thereof, can optionally choose a weight for a selected preference to have an equal weight or an unequal weight. An AV owner/controller, a service provider, a good supplier, a fleet manager, a representative, a logistics provider, or a combination thereof, can optionally choose a weight for a selected preference to filter, identify, secure, or a combination thereof, a pCSR. An AV owner/controller, a service provider, a good supplier, a representative, a fleet manager, a logistics provider, a logistics supplier, or a combination thereof, can optionally choose a weight for a selected preference to filter, identify, secure, or a combination thereof, an AV that can be identified as preferred or all or some of preferred conveyance data relating to an AV ("preferred AV-related data").

A selected preference can be used to filter a CSR into a fCSR. A selected preference can be used to identify a pCSR from a fCSR. A selected preference can be used to filter all or some of conveyance data relating to an AV ("AV-related data") into all or some of filtered conveyance data relating to an AV ("filtered subset of AV-related data"). A selected preference can be used to identify all or some of preferred conveyance data relating to an AV ("preferred AV-related data"), an AV that can be identified as preferred, or a combination thereof, from all or some of filtered conveyance data relating to an AV ("filtered subset of AV-related data").

To identify an AV that can be identified as preferred, a selected preference can be used to filter and identify an AV that can be identified as preferred in a same or a similar process to filter and identify a pCSR. To identify all or some of preferred conveyance data relating to an AV, a selected preference can be used to filter and identify all or some of preferred conveyance data relating to an AV in a same or a similar process to filter and identify a pCSR. Anytime a CSR is going through a process to become filtered or identified as preferred, all or some of conveyance data relating to an AV can go through a same or a similar process.

A selected preference can be stored or cached on a central server, an application, an owner/controller application, an external server, a terminal, or a combination thereof. A selected preference can be stored or cached on or transmitted to a central server, an external server, a terminal, an application, an owner/controller application, or a combination thereof. A selected preference can be stored on or retrieved from a server that can be remote from a central server. A selected preference can be stored or cached in a database. A selected preference can be used in a database to filter and identify a pCSR, a fCSR, a CSR, or a combination thereof. A selected preference can be used in a database to filter and identify an AV that can be identified as preferred, an AV that can be filtered, an AV, all or some of preferred conveyance data relating to an AV ("preferred AV-related data"), all or some of filtered conveyance data relating to an AV ("filtered subset of AV-related data"), all or some of conveyance data relating to an AV ("preferred AV-related data"), or a combination thereof.

After identifying a pCSR as a data set result from a database, an AV that can be identified as preferred can be identified as a data set result from another database, and a pCSR can be secured or obtained for or with an AV that can be identified as preferred. After identifying an AV that can be identified as preferred or all or some of preferred conveyance data relating to an AV ("preferred AV-related data") as a data set result from a database, a pCSR can be identified as a data set result from another database, and an AV that can be identified as preferred ("preferred AV-related data") can be secured or obtained for or with a pCSR.

An AV owner/controller, a service provider, a good supplier, a fleet manager, a dispatcher, a representative, a logistics provider, a logistics supplier, or a combination thereof, can use a selected preference to filter and identify a pCSR, a fCSR, a CSR, or a combination thereof. An AV owner/controller, a service provider, a good supplier, a fleet manager, a representative, a logistics provider, a logistics supplier, or a combination thereof, can use a selected preference to filter and identify an AV that can be identified as preferred, an AV that can be filtered, an AV, all or some of preferred conveyance data relating to an AV ("preferred AV-related data"), all or some of filtered conveyance data relating to an AV ("filtered subset of AV-related data"), all or some of conveyance data relating to an AV ("AV-related data"), or a combination thereof.

An AV owner/controller, a service provider, a good supplier, a fleet manager, a dispatcher, a representative, a logistics provider, a logistics supplier, or a combination thereof, can input or provide a selected preference into an owner/controller application, an application, or a central server that can be used to identify and secure a pCSR for or with an AV that can be identified as preferred, an AV, or a combination thereof.

An AV owner/controller, a service provider, a good supplier, a fleet manager, a representative, a logistics provider, a logistics supplier, or a combination thereof, can use a selected preference to manage, control, or operate a fleet of AVs. An AV owner/controller, a service provider, a good supplier, a fleet manager, a representative, a logistics provider, or a combination thereof, can use a selected preference to manage, control, or operate an AV within a fleet of AVs.

A selected preference can be updated or refreshed in substantially real time and can refer to being updated or refreshed in the highest level of development or state of the art. A selected preference can be used to perform a function in substantially real time being updated or refreshed in the highest level of development or state of the art.

A selected preference can be updated or changed and a new or different set of a fCSR, a pCSR, or a combination thereof, can be identified. A selected preference can be updated or changed and a new or different set of all or some of filtered conveyance data relating to an AV ("filtered subset of AV-related data"), all or some of preferred conveyance data relating to an AV ("preferred AV-related data"), an AV that can be identified as preferred, an AV that can be filtered, or a combination thereof.

A central server, an application, an owner/controller application, or a combination thereof, can for example, filter out, hide, or remove a CSR that does not meet or match a selected preference criteria for an AV owner/controller, a service provider, a good supplier, a fleet manager, a logistics provider, or a logistics supplier. A central server, an application, an owner/controller application, or a combination thereof, can for example, filter out, hide, or remove all or some of conveyance data relating to an AV ("AV-related data") that does not meet or match a selected preference criteria for an AV owner/controller, a service provider, a good supplier, a fleet manager, a dispatcher, a representative, or a logistics provider. A selected preference can be used in conjunction with a substantially real time geographical location of an AV or a different geographical location to filter a CSR into a fCSR.

A selected preference can be used to identify a pCSR from a fCSRt or a pre-filtered CSR. A selected preference can be used to identify all or some of preferred conveyance data relating to an AV ("preferred AV-related data"), an AV that can be identified as preferred, or a combination thereof, from all or some of filtered conveyance data relating to an AV or all or some of pre-filtered conveyance data relating to an AV.

A selected preference can be used by an AV owner/controller, a service provider, a good supplier, a fleet manager, a logistics provider, a logistics supplier, or a combination thereof. A selected preference can be used by an AV owner/controller, a service provider, a good supplier, a fleet manager, a dispatcher, a representative, a logistics provider, a logistics supplier, or a combination thereof, operating in a conveyance industry segment.

A selected preference can be a rule or a parameter that can utilize a route planning information. A selected preference can be learned over time relating to a CSR, all or some of conveyance data, all or some of conveyance data relating to an AV, a conveyance client, a representative, an AV, an AV owner/controller, a service provider, a good supplier, a fleet manager, a dispatcher, a representative, a logistics provider, a logistics supplier, all or some of conveyance data, or a combination thereof. A selected preference can be a predictive preference that can utilize machine learning technology and/or quantum computing.

A selected preference can use a sensor data to filter and identify a pCSR, a fCSR, a CSR, all or some of preferred conveyance data relating to an AV ("preferred AV-related data"), an AV that can be identified as preferred, all or some of filtered conveyance data relating to an AV, all or some of conveyance data relating to an AV, an AV, or a combination thereof.

A level of service preference can be used to identify, for example, a vehicle type, a service type, a vehicle detail, or an AV detail. A selected preference can have or relate to a cultural trait of a regional area or a country. A selected preference can be a capacity preference that can be utilized to manage or monitor a capacity level relating to a vehicle, an AV, a representative, an AV owner/controller, a service provider, a good supplier, a fleet manager, a logistics provider, or a combination thereof. A selected preference can be a vehicle diagnostic preference that can be related to conveyance data, all or some of conveyance data relating to an AV.

A selected preference can be but is not limited to a pricing preference, an elevated pricing preference, a geographical location preference, a distance preference, a route preference, a service duration preference, a beginning service geographical location preference, an ending service geographical location preference, a time preference, a predictive preference, a sensor preference, a historical preference, a efficiency preference, an event inclusion preference, an event exclusion preference, a traffic based preference, a road condition preference, a weather condition preference, a transportation preference, a route planning preference, a fuel economy preference, a battery longevity preference, a vehicle capacity preference, a vehicle diagnostic preference, a conveyance data preference, a duration of conveyance service preference, a CSR density preference, a client density preference, a conveyance client detail preference, a conveyance client rating preference, a representative density preference, an AV density preference, a service provider inclusion preference, a service provider exclusion preference, a service provider density preference, a level of service preference, a good supplier inclusion preference, a good supplier exclusion preference, a good supplier density preference, an AV owner/controller inclusion preference, an AV owner/controller exclusion preference, an AV owner/controller density preference, a fleet manager inclusion preference, a fleet manager exclusion preference, a fleet manager density preference, a logistics provider inclusion preference, a logistics provider exclusion preference, a logistics provider density preference, a logistics supplier inclusion preference, a logistics supplier exclusion preference, a logistics supplier density preference, a good detail preference, a conveyance industry segment preference, a freight preference, a waypoint preference, a delivery service preference, a oldest outstanding request preference, or a combination thereof.

If a CSR density preference is selected as a selected preference, a service provider or a fleet manager can strategically position an AV in an area of greater supply of a CSR. If a weather preference is selected, then a CSR without a route through an area with inclement weather, such as snow, can be identified as a pCSR. A selected preference can be transmitted from an owner/controller application to a central server. When an individual selected preference has an equal weight, an industry segment preference can have 25% weight, a service provider inclusion preference can have 25% weight, a pricing preference can have 25pCSR when determining which a fCSR has a highest weighted average.

A selected preference can be used for an individual conveyance industry segment. A selected preference can be used by a fleet manager to operate or control a fleet of AVs in a conveyance industry segment. A selected preference can be used for an individual service provider. An AV owner/controller, a service provider, a good supplier, a fleet manager, a representative, a logistics provider, a logistics supplier, or a combination thereof, can specify a selected preference to work in a given area by using a geographical location preference. AV owner/controller, a service provider, a good supplier, a fleet manager, a representative, a logistics provider, or a combination thereof, can specify a selected preference to work in a five-mile perimeter by using a geographical location preference. An AV owner/controller, a service provider, a good supplier, a fleet manager, a representative, a logistics provider, a logistics supplier, or a combination thereof, can specify a selected preference to identify the oldest outstanding CSR to ensure consumer sentiment is maintained and a conveyance client does not have to wait too long.

An AV owner/controller, a service provider, a good supplier, a fleet manager, a logistics provider, or a logistics supplier can use two specific selected preference to filter a CSR and can use five specific selected preferences to filter all or some of conveyance data relating to an AV. A selected preference can be provided or inputted by an AV owner/controller, a service provider, a good supplier, a fleet manager, a dispatcher, a representative, a logistics provider, or a logistics supplier into an application or an owner/controller application and can be stored or cached on an application, an owner/controller application, a central server, an external server, or a combination thereof. A selected preference can be similar to a representative preference.

A selected preference can be transmitted between or from an application to a central server by way of a link between an application and a central server. A selected preference can be transmitted between or from an application to an external server by way of a link between an application and an external server. A selected preference can be transmitted between or from an owner/controller application to a central server by way of a link between an owner/controller application and a central server. A selected preference can be transmitted between or from an owner/controller application to an external server by way of a link between an owner/controller application and an external server. A selected preference, all or some of conveyance data relating to an AV ("AV-related data"), a substantially real time geographical location of an AV, or a combination thereof, can be transmitted from an application or an owner/controller application to a central server or an external server at any time prior to filtering a CSR.

To provide a few examples, a selected preference can be associated with a database, a database query, a database table, or a database result set. A database query can include or be associated with a selected preference. A selected preference can be related to or associated with another a selected preference. A selected preference can be used to retrieve data from database. A selected preference can be an internal part of a central server. A selected preference can be in a form or a format relating to a SQL parameter, or a variable. Multiple selected preferences can be used multiple times during a process of filtering and/or identifying a pCSR for or with an AV that can be identified as preferred. A selected preference can be used with or within a conditional statement, a conditional expression, or a conditional construct. A selected preference can be used for altering a control flow based on a condition.

A selected preference can have or be associated with a different set of preferences or a different set of parameters that can be used to filter and identify a pCSR, a fCSR, a CSR, or a combination thereof. A selected preference can have or be associated with a different set of preferences or a different set of parameters that can be used to filter and identify a pCSR, a fCSR, a CSR, all or some of preferred conveyance data relating to an AV, all or some of filtered conveyance data relating to an AV, all or some of conveyance data relating to an AV, an AV that can be identified as preferred, an AV that can be filtered, an AV, or a combination thereof.

Some selected preferences can be more relevant than other selected preferences when a central server filters and/or identifies a pCSR, a fCSR, a CSR, an AV that can be identified as preferred, an AV that can be filtered, an AV, all or some of preferred conveyance data relating to an AV, all or some of filtered conveyance data relating to an AV, all or some of conveyance data relating to an AV, or a combination thereof. A selected preference can be used for filtering a CSR, all or some of conveyance data relating to an AV, or a combination thereof, and a different selected preference can be used for identifying a pCSR, an AV that can be identified as preferred, all or some of preferred conveyance data relating to an AV, or a combination thereof.

A selected preference can use a sensor data to analyze and secure a pCSR with or for an AV that can be identified as preferred, an AV, or a combination thereof. A selected preference can use a sensor data to identify if an AV has enough battery to perform a conveyance service.

A transportation preference can be a parameter or a rule that can identify a conveyance service preference. A transportation preference can identify a CSR that requires handicap assistance. A transportation preference can identify a CSR that requires a luxury vehicle. An efficiency preference can a parameter or a rule that can optimize vehicle utilization. A selected preference can be stored or cached in a database table. A selected preference can be stored or cached in a database that a central server, an external server, an application, an owner/controller application, or a combination thereof, can connect to or be associated with.

A route planning preference can identify a route that can avoid toll roads. A route planning preference can identify an optimal navigational route that can aid in identifying a pCSR, an AV that can be identified as preferred, all or some of preferred conveyance data relating to an AV, or a combination thereof. A fuel economy preference can be to exclude or discard an AV that has lower than a quarter battery level. A fuel economy preference can be to identify a specific mode an AV can perform, such as, sport mode, comfort mode, or eco mode.

A predictive preference can be identified or learned over time based on a pattern relating to a CSR, all or some of conveyance data, all or some of AV-related data, a conveyance client, a representative, an AV, an AV owner/controller, a service provider, a good supplier, a fleet manager, a dispatcher, a logistics provider, a logistics supplier, or a combination thereof.

A battery longevity preference can include only an AV that can have greater than 90% battery level for a conveyance service that exceeds 100 miles. A time preference can relate to a time range, a pick-up time, a drop-off time, or a pre-scheduled time during a time of a day, a time of a week, a time of a month, a time of a year, or a combination thereof. A client detail preference can be a route preference provided by a client, an application, an owner/controller application, a central server, an external server, a third party, a map provider, or a combination thereof.

A route preference can be utilized to identify a historical route, a specific route, a favored route, an area, a specific location, and/or a pricing information. A route preference can be learned over time to avoid traffic congestion on Highway Interstate 5 around 5PM during the week. A route preference can be to avoid a road, a street, a highway, a neighborhood that a conveyance client or a recipient of a conveyance service prefers.

A level of service preference can be used by a conveyance client to identify a luxury vehicle, an environmentally friendly vehicle, or a driverless vehicle. A level of service preference can be utilized to identify a newer vehicle over an older vehicle. A level of service preference can be utilized by an AV owner/controller, a service provider, a good supplier, a fleet manager, a dispatcher, a representative, a logistics provider, a logistics supplier, or a third party to provide a higher level of service, for example, a luxury service, and make more income potential.

A level of service preference can be displayed on or with a visual representation to identify different levels of service that an AV owner/controller, a service provider, a good supplier, a fleet manager, a logistics provider, a logistics supplier, or a third party can provide. A level of service preference can be displayed as an icon with or on a visual representation to allow a selection of different levels of service that an AV owner/controller, a service provider, a good supplier, a fleet manager, a representative, a logistics provider, a logistics supplier, or a third party can provide.

A level of service preference can be displayed on a dynamic map to identify different levels of service that an AV owner/controller, a service provider, a good supplier, a fleet manager, a representative, a logistics provider, a logistics supplier, or a third party can provide. An AV owner/controller, a service provider, a good supplier, a fleet manager, a logistics provider, a logistics supplier, or a combination thereof, can be displayed on or with a dynamic map that can display a level of service preference and can be represented by a mobile or transitory icon.

An event inclusion preference can identify a destination rating with 4 out of 5 stars for or with an AV owner/controller, an AV, a service provider, a good supplier, a fleet manager, a logistics provider, a logistics supplier, or a combination thereof. An event inclusion preference can identify an event or an area that can be optimal for a service provider that can be currently well positioned in or near that event or area, but it may not be optimal for other service providers further away from that event or area.

A selected preference can be a good supplier preference that can enable a good supplier to delay or postpone a current or a future CSR. A conveyance client preference or a preference of a recipient of a service, can be compared to or with a selected preference, to identify a match and secure a pCSR for or with an AV that can be identified as preferred.

A selected preference can have or relate to a cultural trait that can impact a match between an AV and a pCSR. A selected preference can have or relate to a cultural trait that can impact all or some of a CSR in conjunction with corresponding conveyance data, all or some of conveyance data relating to an AV ("AV-related data"), or a combination thereof. As an illustration, Americans tend to have a selected preference with a shorter estimated time of arrival compared to Canadians.

A capacity preference can identify a maximum number of passengers or goods in a vehicle or an AV. A conveyance client can utilize a selected preference to specify if a conveyance client prefers an AV or a representative. A selected preference can be at least carpool preference. A selected preference can be used to identify a conveyance client or a group of a conveyance client that can be pooled together for a conveyance service to an ending service geographical location. A selected preference can relate to safety for example, an AV being handicap friendly.

A delivery service preference can be to filter out deliveries that can add more than 10 minutes to total travel time. A delivery service preference can specify a dimension for a good or item. A delivery service preference can be used to identify an AV with a specific feature relating to the good or item delivery. A delivery service preference can be used to identify a pre-scheduled CSR or a pre-scheduled AV.

A vehicle diagnostic preference can be to take an AV off the road or to not secure another CSR if an AV is due for maintenance. A vehicle diagnostic preference can be to take an AV off the road or to not secure another CSR if criteria regarding an AV is met. A vehicle diagnostic preference can be related to a sensor data on an AV.

A central server can use or apply a second selected preference and a process can optionally be referred to or seen as an additional level of filtering. A central server can filter CSRs using a two step process to first filter CSRs based on a selected preference and then filter a subset of CSRs based on a different selected preference. A central server can filter all or some of conveyance data relating to an AV ("AV-related data") using a two step process to first filter all or some of conveyance data relating to an AV based on a selected preference and then filter a subset of all or some of conveyance data relating to an AV based on a different selected preference.
Geographical Location ("Geographical Location Data"): The following are illustrative, non-limiting examples and embodiments of a "geographical location" as used in the present disclosure:
A geographical location of a representative, an AV, a conveyance client, a service provider, a good supplier, a fleet manager, an AV owner/controller, a logistics provider, a logistics supplier, or a combination thereof, can be for example in real time, near real time, static, or non-real time.

A geographical location of any individual person, machine, entity, or a combination thereof, can be related to or have a longitude and a latitude in a decimal point or format. A geographical location of any individual person, machine, entity, or a combination thereof, can be related to or have a longitude and a latitude in a database with a decimal point or format. A geographical location of any individual person, machine, entity, or a combination thereof, can be related to or have a longitude and a latitude in a different decimal point or format. A geographical location of any individual person, machine, entity, or a combination thereof, can be related to or have a longitude and a latitude in a database with a different decimal point or format.

A geographical location of a representative, an AV, an AV fleet, a conveyance client, a service provider, a good supplier, a fleet manager, an AV owner/controller, a logistics provider, a logistics supplier, or a combination thereof, can have or utilize a variable precision, which can be standardized in a uniform format. Due to many different systems and methods of coding a geographical location, a variable precision can be preferred to standardize a geographical location. Due to many different systems and methods of coding a substantially real time geographical location of an AV, a variable precision can be preferred to standardize a digit or a decimal.

A geographical location of any individual person, machine, entity, or a combination thereof, can be updated or refreshed in substantially real time or near real time and can refer to being updated or refreshed in the highest level of development or state of the art. A geographical location of any individual person, machine, entity, or a combination thereof, can be used to perform a function in substantially real time or near real time being updated or refreshed in the highest level of development or state of the art. A geographical location can be pre-set on a central server, an external server, an application, an owner/controller application, a visual representation, or a combination thereof.

A geographical location of any of a representative, a conveyance client, an AV, service provider, good supplier, fleet manager, an AV owner/controller, logistics provider, logistics supplier, can be a geographical location, a coordinate, a position, or a place where that entity can be at any given point in time.

A geographical location of a representative, an AV, a conveyance client, a service provider, a good supplier, a fleet manager, an AV owner/controller, a logistics provider, a logistics supplier, or a combination thereof, can be for example displayed on a visual representation.

When a substantially real time or near real time geographical location of an AV is considered, a substantially real time or near real time geographical location of a fleet of AVs can also be considered. When a geographical location of any individual person, machine, entity, or a combination thereof, is considered, a geographical location of a representative, an AV, a fleet of AVs, a conveyance client, a service provider, a good supplier, a fleet manager, an AV owner/controller, a logistics provider, or a logistics supplier, or the like can also be considered.

A geographical location of a representative, an AV, an AV fleet, a conveyance client, a service provider, a good supplier, a fleet manager, an AV owner/controller, a logistics provider, a logistics supplier, or a combination thereof, can relate to a service provider operating in at least one conveyance industry segment.

A geographical location of a representative, an AV, a fleet of AVs, a conveyance client, a service provider, a good supplier, a fleet manager, an AV owner/controller, a logistics provider, a logistics supplier, or a combination thereof, can be used for respective density preferences. A geographical location of a representative, an AV, a fleet of AVs, a conveyance client, a service provider, a good supplier, a fleet manager, an AV owner/controller, a logistics provider, a logistics supplier, or a combination thereof, can relate to an individual service provider operating in an individual conveyance industry segment.

A geographical location of a representative, an AV, an AV fleet, a conveyance client, a service provider, a good supplier, a fleet manager, an AV owner/controller, a logistics provider, a logistics supplier, or a combination thereof, can be static or non-real time. A geographical location of a good supplier can be static or non-real time as it can relate to a brick and mortar geographical location. A geographical location of an AV can be based on or related to a sensor data associated with an AV. A geographical location of a fleet of AVs or an AV fleet, can be but is not limited to a geographical location, a coordinate, a position, or a place where a fleet of AVs can be at any given point in time. A geographical location of an AV can be based on an AV, a fleet of AVs, or an AV fleet. A geographical location of an AV fleet can be static or non-real time. A geographical location of an AV can be a substantially real time geographical location of an AV or an AV fleet.

A geographical location of any individual person, machine, entity, or a combination thereof, can be sourced or provided from three external servers, and can be associated with or have a longitude and a latitude in a database table with a different decimal point or format that can be standardized to have a similar decimal point or format. A substantially real time or near real time geographical location of an AV, a fleet of AVs, an AV fleet, or a combination thereof, can have or be associated with a variable precision, which can be standardized in a uniform format. A geographical location of a representative, an AV, a fleet of AVs, a conveyance client, a service provider, a good supplier, a fleet manager, an AV owner/controller, a logistics provider, a logistics supplier, or a combination thereof, can have or be associated with a variable precision, which can be standardized in a uniform format.

A substantially real time or near real time geographical location of an AV, a fleet of AVs, an AV fleet, or a combination thereof, can have or be associated with a longitude and a latitude in a decimal point or format. A substantially real time or near real time geographical location of an AV, a fleet of AVs, an AV fleet, or a combination thereof, can have or be associated with a longitude and a latitude in a database table with a decimal point or format. A substantially real time or near real time geographical location of an AV, a fleet of AVs, an AV fleet, or a combination thereof, can have or be associated with a longitude and a latitude in a different decimal point or format. A substantially real time or near real time geographical location of an AV, a fleet of AVs, an AV fleet, or a combination thereof, can have or be associated with a longitude and a latitude in a database table with a different decimal point or format.

A geographical location of an individual person, an individual machine, an individual entity, a representative, an AV, an AV fleet, a conveyance client, a service provider, a good supplier, a fleet manager, an AV owner/controller, a logistics provider, a logistics supplier, or a combination thereof, can have or be associated with a longitude and a latitude in a database table with a decimal point or format. A geographical location of an individual person, an individual machine, an individual entity, a representative, an AV, an AV fleet, a conveyance client, a service provider, a good supplier, a fleet manager, an AV owner/controller, a logistics provider, a logistics supplier, or a combination thereof, can have or be associated with a longitude and a latitude in a database table with a different decimal point or format.

Due to many different systems and methods of coding a geographical location of a representative, an AV, an AV fleet, a conveyance client, a service provider, a good supplier, a fleet manager, an AV owner/controller, a logistics provider, a logistics supplier, or a combination thereof, a variable precision is preferred to standardize a digit or a decimal.
Beginning Service Geographical Location: The following are illustrative, non-limiting examples and embodiments of a "beginning service geographical location" as used in the present disclosure:
A beginning service geographical location can be but is not limited to a geographical location for example requested by a conveyance client or an entity where a conveyance service begins or is requested. A beginning service geographical location can be modified before and/or during a conveyance service, if utilizing a waypoint. A beginning service geographical location need not be a substantially real time geographical location of a conveyance client. A beginning service geographical location can be updated or refreshed in substantially real time or near real time and can refer to being updated or refreshed in the highest level of development or state of the art. A beginning service geographical location can be used to perform a function in substantially real time being updated or refreshed in the highest level of development or state of the art. A beginning service geographical location can be pre-set or pre-determined on a central server, an external server, an application, an owner/controller application, or a combination thereof. A beginning service geographical location can be associated with a CSR.

A beginning service geographical location can be static or non-real time. A representative or an AV can pick up a conveyance client at a beginning service geographical location. A beginning service geographical location can have or be associated with a way-point. A beginning service geographical location can have or be associated with a way-point, where a conveyance client can walk to a beginning service geographical location. A conveyance client can have or use two or multiple beginning service geographical locations including a way-point, where a conveyance client can take a public bus from one beginning service geographical location to then be picked up by an AV from a second beginning service geographical location.

A beginning service geographical location can be at a future beginning service geographical location. A beginning service geographical location can used for or with an AV to create a conveyance service offering (CSO). A beginning service geographical location can be dynamic. A beginning service geographical location can be associated with latitude and longitude.
Ending Service Geographical Location: The following are illustrative, non-limiting examples and embodiments of an "ending service geographical location" as used in the present disclosure:
An ending service geographical location can be but is not limited to a geographical location for example requested by a conveyance client or an entity where a conveyance service ends. An ending service geographical location can be modified before and/or during a conveyance service. An ending service geographical location can include a waypoint. An ending service geographical location can be updated or refreshed in substantially real time or near real time and can refer to being updated or refreshed in the highest level of development or state of the art. An ending service geographical location can be used to perform a function in substantially real time or near real time being updated or refreshed in the highest level of development or state of the art. An ending service geographical location can be pre-set or pre-determined on a central server, an external server, an application, an owner/controller application, or a combination thereof. An ending service geographical location can be associated with a CSR.

An ending service geographical location can be static or non-real time. A representative or an AV can drop off a conveyance client at an ending service geographical location. An ending service geographical location can have or be associated with a way-point, where a conveyance client can stop at a coffee shop prior to being dropped off at an ending service geographical location. An ending service geographical location can be at a future ending service geographical location. An ending service geographical location can used for or with an AV to create a conveyance service offering (CSO). An ending service geographical location can be dynamic. An ending service geographical location can be associated with latitude and longitude.
Conveyance Industry Segment: The following are illustrative, non-limiting examples and embodiments of a "conveyance industry segment" as used in the present disclosure:
The conveyance industry can be for example an industry categorized by the transportation of someone or something from a geographical location to another geographical location. The conveyance industry can be for example an industry categorized by the transportation of someone or something from a geographical location to another geographical location in substantially real time or near real time. A conveyance industry segment can be for example a smaller part of the overall conveyance industry as a whole, categorized by different limiting characteristics. A conveyance industry segment can be updated or refreshed in substantially real time and can refer to being updated or refreshed in the highest level of development or state of the art.

A service provider, an AV owner/controller, a good supplier, a fleet manager, a dispatcher, a representative, a logistics provider, a logistics supplier, an AV, or a combination thereof, can operate in a conveyance industry segment. An AV owner/controller, a service provider, a good supplier, a fleet manager, a dispatcher, a representative, a logistics provider, a logistics supplier, or a combination thereof, can manage, control, and/or operate an AV in at least one conveyance industry segment. A CSR can be associated with at least one conveyance industry segment. An AVAP can manage, operate, and/or control an AV that can operate in at least one conveyance industry segment. A RAP can manage, operate, and/or control a representative that can operate in at least one conveyance industry segment. An AVAP, a RAP, or a combination thereof, can manage, operate, and/or control an AV, a representative, or a combination thereof, that can operate in a single conveyance industry segment or across multiple industry segments, which may include ride-hail, ride-share, car-share, peer-to-peer conveyance, person delivery, taxi, item delivery, good delivery, medical service and/or delivery, food delivery, courier, animal delivery, a transportation, or a combination thereof.

An individual service provider or the like can operate in at least one individual conveyance industry segment. The present invention can allow a representative an AV to provide a ride in the ride-hail industry segment and deliver food in the food delivery industry segment relating to a similar service provider for a conveyance client.

An AV owner/controller, a service provider, a good supplier, a fleet manager, a dispatcher, a representative, a logistics provider, a logistics supplier, or a combination thereof, can manage or operate an AV fleet in at least one conveyance industry segment. An AV owner/controller a service provider, a good supplier, a fleet manager, a dispatcher, a representative, a logistics provider, a logistics supplier, or a combination thereof, can manage or operate one hundred AVs in a ride-hail industry segment and two hundred AVs in a freight industry segment. An AV owner/controller, a service provider, a good supplier, a fleet manager, a dispatcher, a representative, a logistics provider, a logistics supplier, or a combination thereof, can manage or operate one AV that can operate in more than one conveyance industry segment.

## Claims

1. A platform (14) for managing an autonomous vehicle ("AV") (3A-3D) providing a conveyance service for transportation of a good or a service from a beginning service geographical location to an ending service geographical location, the platform (14) comprising:
one or more external server (10A-10E) in communication with a network, the one or more external server associated with a business entity (5A-5E) that provides goods or services, the one or more external server (10A-10E) comprising a source of conveyance service requests (CSRs) (15A-15G);
a central server (9) in communication with the network, the central server (9) configured for receiving the CSRs (15A-15G) from the one or more external server (10A-10E), the CSRs (15A-15G) comprising conveyance data including information relating to one or more of the good or the service to be provided, vehicle capacity, an estimated time of arrival, and a vehicle detail, wherein the CSRs (15A-15G) are repeatedly updated;
an application (6) in communication with the network, the application (6) configured for receiving one or a combination of geographical location data, AV-related data, and a selected preference (19);
a terminal (7) in communication with the network, the terminal (7) having an input source;
a display associated with the terminal (7), the display configured to display information associated with the conveyance service;
wherein one or a combination of the central server (9) and the application (6) is automated in whole or in part and further configured to aggregate at least a portion of one or a combination of the CSRs (15A to 15G) and the AV-related data and after aggregating:
(a) filter, one or a combination of, in any order:
(i) at least a portion of the CSRs (15A-15G) using one or a combination of the selected preference (19), the AV-related data, the conveyance data, and the geographical location data to identify a filtered subset of CSRs (16A-16E), wherein the filtered subset of CSRs (16A-16E) comprise a preferred CSR (17A-17E); and
(ii) at least a portion of the AV-related data using one or a combination of the selected preference (19), the CSRs (15A-15G), the conveyance data, and the geographical location data to identify a filtered subset of AV-related data, wherein the filtered subset of AV-related data comprise a preferred AV-related data;
(b) identify a match between one or more of the filtered subset of CSRs (16A-16E), the preferred CSR (17A-17E), the preferred AV-related data, and the filtered subset of the AV-related data and one or a combination of the selected preference (19), the conveyance data, the AV-related data, and the geographical location data;
(c) secure the conveyance service associated with the match; and
(d) generate on the display a visual representation (12) corresponding to a route that the AV (3A-3D) follows in providing the secured conveyance service, wherein the visual representation (12) is dynamically updated to display progression of the AV as it provides the conveyance service.

2. The platform of claim 1, wherein the conveyance service is one or a combination of services that support or provide transportation of the good, freight, or the service to be conveyed.

3. The platform of claim lor claim 2, wherein the business entity (5A-5E) comprises one or more of an entity that conveys goods or services, an entity that produces or supplies freight, an entity that provides a transportation service, a courier, an AV owner/controller (4), a good supplier, a service provider, a dispatcher, a logistics provider, a broker, a freight provider, a fleet manager, and a map provider.

4. The platform of any one of claims 1 through 3, wherein the AV (3A-3D) comprises one or more of a wheeled vehicle, a delivery vehicle, a supply side vehicle, a truck, a trailer, a train, an aircraft, a vessel, a transportation vehicle, a drone, a space vehicle, a partially autonomous vehicle, a fully autonomous vehicle, and a self-governing machine

5. The platform of any one of claims 1 through 4, wherein the application (6) is associated with one or a combination of the AV (3A-3D), a client (1A-1F), a representative (2), a courier, an AV owner/controller (4), a dispatcher, the business entity (5A-5E), a service provider, a good supplier, a logistics provider, a fleet manager, and a map provider.

6. The platform of any one of claims 1 through 5, wherein at least one function of one or a combination the central server (9) and the application (6) comprises using one of machine learning technology, quantum computing, and blockchain technology.

7. The platform of any one of claims 1 through 6, wherein one or a combination of the application (6) and the central server (9) is configured to repeat steps (a) through (c) to secure an additional conveyance service.

8. The platform of claim 7, wherein the selected preference (19) comprises a vehicle capacity preference configured for managing a capacity level.

9. The platform of any one of claims 1 through 8, wherein one of the filtering steps uses a different geographical location.

10. The platform of any one of claims 1 through 9, wherein the selected preference (19) is displayed by the display, wherein the display/terminal is updated to reflect changes in one or a combination of the selected preference (19), the geographical location data, the AV-related data, the conveyance service, and the conveyance data.

11. The platform of any one of claims 1 through 10, wherein the terminal (7) is one or more of:
configured for monitoring the estimated time of arrival;
configured for navigating within an area of the visual representation; and
associated with one or more of a geographical location module, an Inertial Measurement Unit (IMU), a tracking device, an Internet of Things (IoT) device, a computer processor, a computer readable memory, a remote display, a network interface, a sensor, a computer, a wearable device, a plugin, a voice-controlled input, an In-Vehicle device, a projecting device.

12. The platform of any one of claims 1 through 11, wherein one or a combination of the application (6) and the central server (9) is further configured to receive input from a dispatcher to secure one of the conveyance service and an additional conveyance service.

13. The platform of any one of claims 1 through 12, wherein the visual representation (12) is further configured for one or more of:
displaying one or a combination of a geographical map, a dynamic map, a heat map, the secured conveyance service, an additional conveyance service, the selected preference (19), the conveyance data, the AV-related data, the estimated time of arrival, the vehicle capacity, the vehicle detail, the vehicle marker, and the route;
updating the visual representation to reflect changes in one or a combination of the geographical map, the dynamic map, the heat map, the secured conveyance service, the additional conveyance service, the selected preference (19), the conveyance data, the AV-related data, the estimated time of arrival, the vehicle capacity, the vehicle detail, the vehicle marker, and the route as the conveyance service progresses; and
communication to a different display device within one of the AV (3A-3D) and a remote device.

14. A method for securing and managing a conveyance service for transportation of a good or a service from a beginning service geographical location to an ending service geographical location, the method comprising:
communicating a conveyance service request (CSR) over a network to the platform of any one of claims 1 through 13.
